# EUROPEAN PATENT APPLICATION

(11) **EP 4 850 908 A1**
(43) Date of publication of application: **09.12.2026**
(21) Application number: 25749064.9
(22) Date of filing: 31.01.2025
(51) Int. Cl.: B32B 27/32, B65D 30/02, B65D 65/40, C08F 10/02, C08J 5/18, C08L 23/06

(54) **FILM, LAMINATE, AND PACKAGING CONTAINER**

(30) Priority: 02.02.2024 JP 2024015259; 28.06.2024 JP 2024104898; 28.06.2024 JP 2024104942; 28.06.2024 JP 2024104956; 28.06.2024 JP 2024104982; 28.06.2024 JP 2024105005; 28.06.2024 JP 2024105033; 28.06.2024 JP 2024105098; 28.06.2024 JP 2024105116; 28.06.2024 JP 2024104953; 09.12.2024 JP 2024214343; 09.12.2024 JP 2024214446; 09.12.2024 JP 2024214474; 09.12.2024 JP 2024214501; 09.12.2024 JP 2024214512; 09.12.2024 JP 2024214526; 09.12.2024 JP 2024214492; 09.12.2024 JP 2024214370; 09.12.2024 JP 2024214377
(71) Applicant: Dai Nippon Printing Co., Ltd., Tokyo 162-8001 (JP)
(72) Inventor: ASANO Kaeko, Tokyo 162-8001 (JP); TAKASUGI Yuya, Tokyo 162-8001 (JP); SOEDA Yuki, Tokyo 162-8001 (JP); MIYADERA Yoshiko, Tokyo 162-8001 (JP); MURAYAMA Yusuke, Tokyo 162-8001 (JP); KAWASAKI Ryo, Tokyo 162-8001 (JP); HORIUCHI Kazuki, Tokyo 162-8001 (JP)
(74) Representative: Müller-Boré & Partner Patentanwälte PartG mbB
(86) International application number: PCT/JP2025/003264
(87) International publication number: WO 2025/164778

(57) **Abstract**

A film comprising at least a layer containing, as a main component, a high-density polyethylene (A) satisfying at least one requirement selected from the group consisting of the following (a1) to (a2):
(a1) the high-density polyethylene (A) has a peak whose Full-Width at Quarter-Maximum (FWQM) value is less than 1.5 in a differential molecular weight distribution curve (horizontal axis: common logarithmic value (LogM) of molecular weight (M), vertical axis: value dW/d(LogM) obtained by differentiating an integrated concentration fraction (W) with respect to the common logarithmic value of molecular weight (M)) obtained by high-temperature gel permeation chromatography (GPC) measurement;
(a2) a difference (LogM₉₀-LogM₁₀) between a 90th percentile value (LogM₉₀) and a 10th percentile value (LogM₁₀) of a molecular weight distribution in the differential molecular weight distribution curve of the high-density polyethylene (A) is less than 1.25.

## Description

### Cross-Reference to Related Applications

The present application claims priority based on Patent Application No. 2024-015259 filed on February 2, 2024, Patent Application Nos. 2024-104953, 2024-104898, 2024-104942, 2024-104956, 2024-104982, 2024-105005, 2024-105033, 2024-105098, and 2024-105116, each filed on June 28, 2024, and Patent Application Nos. 2024-214343, 2024-214446, 2024-214474, 2024-214501, 2024-214512, 2024-214526, 2024-214492, 2024-214370, and 2024-214377, each filed on December 9, 2024 (all of which are Japanese patent applications), the disclosure of which is hereby incorporated as part of the present description by reference in their entirety.

### Technical Field

The present disclosure relates to a film, a laminate and a packaging container.

### Background Art

Packaging containers are used to contain contents such as liquids and powders. Packaging containers are produced, for example, using a packaging material comprising a substrate and a heat-seal layer (see, for example, Patent Document 1). Since a polyethylene film has flexibility and transparency and is excellent in heat-sealability, it is widely used as a heat-seal layer constituting a packaging material.

### Citation List

### Patent Literature

PTL 1: Japanese Unexamined Patent Application Publication No. 2020-55156

### Summary of Invention

### Technical Problem

Polyethylene is a resin that softens at a relatively low temperature compared to other thermoplastic resins. For this reason, when a polyethylene film is used as a substrate constituting a packaging material, the substrate may deform, or in some cases, the substrate may melt, when the packaging material is heat-sealed. In addition, a polyethylene film may have insufficient strength compared to other thermoplastic resin films. For this reason, resin films excellent in heat resistance and strength, such as a polyester film and a nylon film, are generally used as the substrate. For example, a packaging material comprising a polyester film or a nylon film as a substrate and a polyethylene film as a heat-seal layer is used.

In recent years, along with the growing demand for the establishment of a recycling-oriented society, attempts have been made to recycle packaging materials. However, in a packaging material comprising different types of resin films, such as a combination of a polyester film or a nylon film with a polyethylene film, it is difficult to separate them by resin type. Therefore, such a packaging material tends to be unsuitable for recycling.

Stretched films and the like having improved heat resistance and strength obtained by stretching or the like of a polyethylene film have been investigated.

However, the heat resistance of the above film is still not sufficient, and, for example, its thermal deformation when placed in a high-temperature environment tended to be large. A first object of the present disclosure is to improve the thermal deformation resistance of a film comprising a layer containing polyethylene as a main component.

Further, the impact resistance of the above stretched film is still not sufficient, and, for example, a stretched film having low impact resistance tended to be unsuitable as a substrate constituting a large-capacity packaging bag. A second object of the present disclosure is to improve the impact resistance of a stretched film comprising a layer containing polyethylene as a main component.

### Solution to Problem

A film of one aspect of the present disclosure comprises at least a layer containing, as a main component, a high-density polyethylene (A) satisfying at least one requirement selected from the group consisting of the following (a1) to (a2):
(a1) the high-density polyethylene (A) has a peak whose Full-Width at Quarter-Maximum (FWQM) value is less than 1.5 in a differential molecular weight distribution curve (horizontal axis: common logarithmic value (LogM) of molecular weight (M), vertical axis: value dW/d(LogM) obtained by differentiating an integrated concentration fraction (W) with respect to the common logarithmic value of molecular weight (M)) obtained by high-temperature gel permeation chromatography (GPC) measurement;
(a2) a difference (LogM₉₀-LogM₁₀) between a 90th percentile value (LogM₉₀) and a 10th percentile value (LogM₁₀) of a molecular weight distribution in the differential molecular weight distribution curve of the high-density polyethylene (A) is less than 1.25.

A stretched film according to one aspect of the present disclosure is obtained by subjecting the above-described film to a stretching treatment.

A stretched film of one aspect of the present disclosure comprises at least a first layer containing polyethylene as a main component and a second layer containing polyethylene as a main component in this order in a laminating direction,
wherein the stretched film further comprises, between the first layer and the second layer, an intermediate layer containing polyethylene as a main component and having a scattering intensity ratio I₁/I₂ of less than 1.1, the scattering intensity ratio I₁/I₂ is obtained by Raman spectroscopic measurement on a cross section of the intermediate layer,
the cross section is a surface parallel to a plane including the laminating direction perpendicular to a main surface of the stretched film and a stretching direction of the stretched film,
the I₁ is a maximum scattering intensity of a peak observed in a region from 1100 cm⁻¹ to 1150 cm⁻¹ in the Raman spectroscopic measurement, and the I₂ is a maximum scattering intensity of a peak observed in a region of 1050 cm⁻¹ or more and less than 1100 cm⁻¹ in the Raman spectroscopic measurement.

### Advantageous Effects of Invention

According to the present disclosure, it is possible to provide a film comprising a layer containing polyethylene as a main component, which is excellent in heat resistance and has small thermal deformation, for example, when placed in a high-temperature environment.

According to the present disclosure, it is possible to provide a stretched film comprising a layer containing polyethylene as a main component, which is excellent in impact resistance.

### Brief Description of Drawings

[Fig. 1A] Fig. 1A is a schematic cross-sectional view illustrating an embodiment of a stretched film.
[Fig. 1B] Fig. 1B is a schematic cross-sectional view illustrating an embodiment of a stretched film.
[Fig. 2] Fig. 2 is a schematic cross-sectional view illustrating an embodiment of a stretched film.
[Fig. 3] Fig. 3 is a schematic cross-sectional view illustrating an embodiment of a stretched film.
[Fig. 4A] Fig. 4A is a schematic cross-sectional view illustrating an embodiment of a laminate.
[Fig. 4B] Fig. 4B is a schematic cross-sectional view illustrating an embodiment of a laminate.
[Fig. 4C] Fig. 4C is a schematic cross-sectional view illustrating an embodiment of a laminate.
[Fig. 4D] Fig. 4D is a schematic cross-sectional view illustrating an embodiment of a laminate.
[Fig. 5A] Fig. 5A is a schematic cross-sectional view illustrating an embodiment of a laminate.
[Fig. 5B] Fig. 5B is a schematic cross-sectional view illustrating an embodiment of a laminate.
[Fig. 5C] Fig. 5C is a schematic cross-sectional view illustrating an embodiment of a laminate.
[Fig. 5D] Fig. 5D is a schematic cross-sectional view illustrating an embodiment of a laminate.
[Fig. 6A] Fig. 6A is a schematic cross-sectional view illustrating an embodiment of a laminate.
[Fig. 6B] Fig. 6B is a schematic cross-sectional view illustrating an embodiment of a laminate.
[Fig. 6C] Fig. 6C is a schematic cross-sectional view illustrating an embodiment of a laminate.
[Fig. 6D] Fig. 6D is a schematic cross-sectional view illustrating an embodiment of a laminate.
[Fig. 7A] Fig. 7A is a schematic diagram illustrating a differential molecular weight distribution curve.
[Fig. 7B] Fig. 7B is a schematic diagram illustrating a differential molecular weight distribution curve.
[Fig. 7C] Fig. 7C is a schematic diagram illustrating a differential molecular weight distribution curve.
[Fig. 7D] Fig. 7D is a schematic diagram illustrating a differential molecular weight distribution curve.

### Description of Embodiments

Hereinafter, embodiments of the present disclosure will be described in detail. In the drawings, for clarity of explanation, the widths, thicknesses, shapes, and the like of the respective layers may be schematically illustrated compared to the actual embodiments; however, these are merely examples and do not limit the interpretation of the embodiments of the present disclosure. In the present specification and the respective drawings, elements similar to those already described with reference to previous drawings are denoted by the same reference numerals, and detailed descriptions thereof may be omitted as appropriate.

In the present specification, when a plurality of candidates for an upper limit and a plurality of candidates for a lower limit are provided for a certain parameter, the numerical range of the parameter may be constituted by combining any one upper limit candidate and any one lower limit candidate. Examples of the parameter include physical property values, content ratios of components, and thicknesses of layers. As an example, an explanation will be given regarding a description stating, "Parameter B is preferably A1 or more, more preferably A2 or more, and still more preferably A3 or more. Parameter B is preferably A4 or less, more preferably A5 or less, and still more preferably A6 or less." In this example, the numerical range of parameter B may be from A1 to A4, from A1 to A5, from A1 to A6, from A2 to A4, from A2 to A5, from A2 to A6, from A3 to A4, from A3 to A5, or from A3 to A6.

In the present specification, the term "polyethylene" refers to a polymer in which the content of structural units derived from ethylene is more than 50 mol% based on the total amount of structural units derived from polymerizable monomers. In this polymer, the content of the structural units derived from ethylene is preferably 70 mol% or more, more preferably 80 mol% or more, still more preferably 90 mol% or more, and particularly preferably 95 mol% or more. The above content is measured by nuclear magnetic resonance (NMR) spectroscopy.

In the present specification, the polyethylene may be a homopolymer of ethylene, or may be a copolymer of ethylene and an ethylenically unsaturated monomer other than ethylene. Examples of the ethylenically unsaturated monomer other than ethylene include: α-olefins having 3 to 20 carbon atoms, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene; vinyl monomers such as vinyl acetate and vinyl propionate; and (meth)acrylic acid esters such as methyl (meth)acrylate and ethyl (meth)acrylate.

In the present specification, examples of the polyethylene include high-density polyethylene, medium-density polyethylene, linear low-density polyethylene, high-pressure low-density polyethylene, ethylene-vinyl acetate copolymer, and ethylene-(meth)acrylic acid ester copolymer. As the polyethylene, from the viewpoint of reducing environmental impact, a biomass-derived polyethylene (hereinafter also referred to as "biomass polyethylene") or a mechanically recycled or chemically recycled polyethylene (hereinafter also referred to as "recycled polyethylene") may be used.

In the present specification, the density of the polyethylene is as follows.
The density of the high-density polyethylene is preferably more than 0.945 g/cm³. The density of the high-density polyethylene is preferably 0.970 or less. The density of the medium-density polyethylene is preferably from 0.930 g/cm³ to 0.945 g/cm³. The density of the linear low-density polyethylene is preferably 0.860 g/cm³ or more and less than 0.930 g/cm³, and more preferably 0.900 g/cm³ or more and less than 0.930 g/cm³. The density of the high-pressure low-density polyethylene is preferably 0.860 g/cm³ or more and less than 0.930 g/cm³, and more preferably 0.900 g/cm³ or more and less than 0.930 g/cm³. In the present specification, the density of the polyethylene is measured in accordance with JIS K 7112-2:2023 (density gradient tube method, 23°C).

In the present specification, examples of the high-density polyethylene (HDPE) include an ethylene homopolymer and an ethylene-α-olefin copolymer. Examples of the α-olefin include the above-described α-olefins having 3 to 20 carbon atoms, with α-olefins having 3 to 8 carbon atoms being preferable, and α-olefins having 4 to 8 carbon atoms being more preferable. Examples of the ethylene-α-olefin copolymer include an ethylene-1-butene copolymer in which the comonomer is at least 1-butene (C4-HDPE), an ethylene-1-hexene copolymer in which the comonomer is at least 1-hexene (C6-HDPE), and an ethylene-1-octene copolymer in which the comonomer is at least 1-octene (C8-HDPE). In these copolymers, the comonomer is not limited only to the above comonomers, and a further comonomer may be used.

In the present specification, examples of the medium-density polyethylene (MDPE) include an ethylene homopolymer and an ethylene-α-olefin copolymer. Examples of the α-olefin include the above-described α-olefins having 3 to 20 carbon atoms, with α-olefins having 3 to 8 carbon atoms being preferable, and α-olefins having 4 to 8 carbon atoms being more preferable. Examples of the ethylene-α-olefin copolymer include an ethylene-1-butene copolymer in which the comonomer is at least 1-butene (C4-MDPE), an ethylene-1-hexene copolymer in which the comonomer is at least 1-hexene (C6-MDPE), and an ethylene-1-octene copolymer in which the comonomer is at least 1-octene (C8-MDPE). In these copolymers, the comonomer is not limited only to the above comonomers, and a further comonomer may be used.

The linear low-density polyethylene is, for example, a polyethylene obtained by polymerizing ethylene and a small amount of an α-olefin by a polymerization method using a multi-site catalyst such as a Ziegler-Natta catalyst or a single-site catalyst such as a metallocene catalyst. The high-pressure low-density polyethylene is, for example, a polyethylene obtained by polymerizing ethylene by a high-pressure polymerization method.

In the present specification, examples of the linear low-density polyethylene (LLDPE) include an ethylene-α-olefin copolymer. Examples of the α-olefin include the above-described α-olefins having 3 to 20 carbon atoms, with α-olefins having 3 to 8 carbon atoms being preferable, and α-olefins having 4 to 8 carbon atoms being more preferable. Examples of the linear low-density polyethylene include an ethylene-1-butene copolymer in which the comonomer is at least 1-butene (C4-LLDPE), an ethylene-1-hexene copolymer in which the comonomer is at least 1-hexene (C6-LLDPE), and an ethylene-1-octene copolymer in which the comonomer is at least 1-octene (C8-LLDPE). In these copolymers, the comonomer is not limited only to the above comonomers, and a further comonomer may be used.

In the present specification, examples of the linear low-density polyethylene (LLDPE) include an ethylene-α-olefin copolymer. Examples of the α-olefin include the above-described α-olefins having 3 to 20 carbon atoms, with α-olefins having 3 to 8 carbon atoms being preferable, and α-olefins having 4 to 8 carbon atoms being more preferable. Examples of the linear low-density polyethylene include an ethylene-1-butene copolymer in which the comonomer is at least 1-butene (C4-LLDPE), an ethylene-1-hexene copolymer in which the comonomer is at least 1-hexene (C6-LLDPE), and an ethylene-1-octene copolymer in which the comonomer is at least 1-octene (C8-LLDPE). In these copolymers, the comonomer is not limited only to the above comonomers, and a further comonomer may be used. Polyethylenes having different molecular weight distributions, molecular weights, densities, or branchings, which will be described later, can be obtained by appropriately selecting a polymerization method, polymerization conditions, and the like. For example, it is preferable to perform the polymerization in a single stage or in multiple stages of two or more stages by any method of gas-phase polymerization, slurry polymerization, solution polymerization, and high-pressure ionic polymerization, using, as a polymerization catalyst, a multi-site catalyst such as a Ziegler-Natta catalyst or a single-site catalyst such as a metallocene catalyst."

In the present specification, from the viewpoint of film formability and processability, the melt flow rate (MFR) of the polyethylene is preferably 0.01 g/10 min or more or 0.05 g/10 min or more, more preferably 0.1 g/10 min or more, still more preferably 0.2 g/10 min or more, even more preferably 0.3 g/10 min or more, and particularly preferably 0.5 g/10 min or more, and is preferably 30 g/10 min or less, more preferably 20 g/10 min or less, still more preferably 10 g/10 min or less, even more preferably 5 g/10 min or less, and particularly preferably 3 g/10 min or less; and is, for example, from 0.01 g/10 min to 30 g/10 min. In the present specification, the MFR of the polyethylene is measured in accordance with JIS K 7210-1:2014 by Method A under conditions of a temperature of 190°C and a load of 2.16 kg.

In the present specification, from the viewpoint of strength, heat resistance, and the like, the melting point of the high-density polyethylene and the medium-density polyethylene is preferably 110°C or higher, more preferably 115°C or higher, still more preferably 120°C or higher, and particularly preferably 125°C or higher, and is preferably 140°C or lower, and may be, for example, 135°C or lower, and is, for example, from 110°C to 140°C.

In the present specification, the melting point of the linear low-density polyethylene and the high-pressure low-density polyethylene is preferably 70°C or higher, more preferably 80°C or higher, and still more preferably 85°C or higher, and is preferably less than 130°C, and may be, for example, less than 125°C, or less than 120°C, and is, for example, 70°C or higher and less than 130°C.

In the present specification, the melting point of each material is a melting peak temperature obtained by differential scanning calorimetry (DSC) in accordance with JIS K 7121:2012 (using a test piece after conditioning according to 3.(2) (provided that the cooling rate is 10°C/min)).

In the present specification, each component appearing in the following description (for example, a polyolefin such as polyethylene, an α-olefin, and an additive) may be used singly or in combination of two or more.

In the present specification, "film" and "sheet" may be mentioned, but "film" and "sheet" are not distinguished from each other based solely on the difference in designation.

In the present specification, "multilayer" means two or more layers.

In the present specification, a small absolute value of the dimensional change rate in the stretching direction of the stretched film when the stretched film is placed in a high-temperature environment (preferably, a small thermal shrinkage) is also referred to as "excellent thermal shape stability".

In the present specification, a "main component" in a certain layer means a component whose content in the layer is 50% by mass or more. The content is preferably 60% by mass or more, more preferably 70% by mass or more, still more preferably 80% by mass or more, even more preferably 90% by mass or more, and particularly preferably 95% by mass or more.

### [Film and Stretched Film]

A film according to one aspect of the present disclosure (hereinafter also referred to as "the present film") comprises at least a layer containing a high-density polyethylene (A) as a main component. Details of the high-density polyethylene (A) will be described later.

In one embodiment, the present film is a film containing the high-density polyethylene (A) as a main component. The film may contain two or more kinds of the high-density polyethylene (A).

In one embodiment, from the viewpoint of heat resistance, the content of the high-density polyethylene (A) in the film containing the high-density polyethylene (A) as a main component and in the stretched film thereof is 50% by mass or more, preferably 60% by mass or more, more preferably 70% by mass or more, still more preferably 80% by mass or more, even more preferably 85% by mass or more, and particularly preferably 90% by mass or more, or 95% by mass or more. Such a stretched film, and a laminate comprising the stretched film are, for example, excellent in recyclability.

The film may contain polyethylene other than the high-density polyethylene (A). The film may contain a resin material other than polyethylene. Examples of the resin material other than polyethylene include polyolefins other than polyethylene, polyesters, polyamides, (meth)acrylic resins, vinyl resins, cellulose resins, and ionomer resins.

The film may contain additives. Examples of the additives include crosslinking agents, antioxidants, ultraviolet absorbers, light stabilizers, antiblocking agents, slip agents, fillers, reinforcing agents, antistatic agents, compatibilizers, pigments, and modifying resins.

In one embodiment, the film may be a single-layer film containing the high-density polyethylene (A) as a main component. In one embodiment, the film may be a multilayer film comprising two or more layers containing the high-density polyethylene (A) as a main component, may comprise 3 to 9 such layers, may comprise 3 to 5 such layers, or may comprise 3 or 5 such layers. When adjacent layers constituting the film have the same resin composition and cannot be distinguished from each other, the adjacent layers may be integrated to constitute a single layer.

In one embodiment, the present film is a film comprising at least a layer (hereinafter also referred to as "layer (1_{AB})") containing a high-density polyethylene (A) and a high-density polyethylene (B). The high-density polyethylene (A) is a high-density polyethylene having a molecular weight distribution with a sharper shape (a narrower molecular weight distribution) than the high-density polyethylene (B) in a differential molecular weight distribution curve obtained by high-temperature gel permeation chromatography (GPC) measurement.

The layer (1_{AB}) may contain two or more kinds of the high-density polyethylene (A).

The layer (1_{AB}) may contain two or more kinds of the high-density polyethylene (B).

The content of the high-density polyethylene (A) in the layer (1_{AB}) is, from the viewpoint of heat resistance, 50% by mass or more, preferably 55% by mass or more, more preferably 65% by mass or more, still more preferably 75% by mass or more, and particularly preferably 85% by mass or more, and is, from the viewpoint of stretchability and the like, preferably 98% by mass or less, more preferably 96% by mass or less, still more preferably 94% by mass or less, and particularly preferably 92% by mass or less; and is, for example, from 50% by mass to 98% by mass.

The content of the high-density polyethylene (B) in the layer (1_{AB}) is, from the viewpoint of stretchability and the like, preferably 2% by mass or more, more preferably 4% by mass or more, still more preferably 6% by mass or more, and particularly preferably 8% by mass or more, and is, from the viewpoint of heat resistance, 50% by mass or less, preferably 45% by mass or less, more preferably 35% by mass or less, still more preferably 25% by mass or less, and particularly preferably 15% by mass or less; and is, for example, from 2% by mass to 50% by mass.

The layer (1AB) may contain polyethylene other than the above high-density polyethylene. The layer (1AB) may contain the above-described resin material other than polyethylene. The layer (1AB) may contain the above-described additives.

In one embodiment, the present film may be a single-layer film consisting of the layer (1_{AB}).

In one embodiment, the present film may be a multilayer film comprising the layer (1AB) and a layer other than the layer (1_{AB}). The present film may comprise two or more layers (1_{AB}), may comprise 3 to 9 layers (1_{AB}), may comprise 3 to 5 layers (1_{AB}), or may comprise 3 or 5 layers (1_{AB}).

In one embodiment, the present film is a multilayer film comprising at least a first layer containing polyethylene as a main component, and a second layer containing polyethylene as a main component.

In one embodiment, the present film is a multilayer film comprising at least:
a first layer containing the high-density polyethylene (A) as a main component; and
a second layer containing polyethylene as a main component.

In one embodiment, the present film is a multilayer film comprising at least:
a first layer containing polyethylene as a main component;
an intermediate layer containing the high-density polyethylene (A) as a main component; and
a second layer containing polyethylene as a main component,
in this order in a stacking direction.

The stretched film of the present disclosure is obtained by subjecting the present film to a stretching treatment. In the following description, unless otherwise specified, "the present film" refers to the film before the stretching treatment, and "the multilayer film" refers to the multilayer film comprising at least the first layer and the second layer before the stretching treatment.

The present film has a first main surface and a second main surface opposite to the first main surface.

In one embodiment, the first layer of the multilayer film constitutes the first main surface of the multilayer film, and the second layer of the multilayer film constitutes the second main surface of the multilayer film. That is, in one embodiment, the first layer of the multilayer film is a first surface resin layer constituting one main surface of the multilayer film, and the second layer of the multilayer film is a second surface resin layer constituting the other main surface of the multilayer film.

The multilayer film preferably further comprises, between the first layer and the second layer, an intermediate layer containing polyethylene as a main component (hereinafter also referred to as a "PE intermediate layer"). By providing the PE intermediate layer, for example, it is possible to adjust the balance among the stretchability of the multilayer film, and the heat resistance and impact resistance (for example, puncture resistance) of the stretched film obtained by subjecting the multilayer film to a stretching treatment.

The multilayer film may comprise two or more PE intermediate layers. The multilayer film may comprise, between the first layer and the second layer, a first PE intermediate layer, a second PE intermediate layer, and a third PE intermediate layer in this order in the stacking direction. That is, the multilayer film may comprise the first layer, the first PE intermediate layer, the second PE intermediate layer, the third PE intermediate layer, and the second layer in this order in the stacking direction.

In one embodiment, the stretched film of the present disclosure may have a single-layer structure, or may have a multilayer structure comprising at least a first layer and a second layer.

The stretched film has a first main surface and a second main surface opposite to the first main surface.

In one embodiment, the first layer of the stretched film constitutes the first main surface of the film, and the second layer of the stretched film constitutes the second main surface of the film. That is, in one embodiment, the first layer of the stretched film is a first surface resin layer constituting one main surface of the film, and the second layer of the stretched film is a second surface resin layer constituting the other main surface of the film.

The stretched film preferably further comprises, between the first layer and the second layer, an intermediate layer containing polyethylene as a main component (PE intermediate layer). By providing the PE intermediate layer, for example, it is possible to adjust the balance among the heat resistance and impact resistance (for example, puncture resistance) and the like of the stretched film.

The stretched film may comprise two or more PE intermediate layers. The stretched film may comprise, between the first layer and the second layer, a first PE intermediate layer, a second PE intermediate layer, and a third PE intermediate layer in this order in the stacking direction. That is, the stretched film may comprise the first layer, the first PE intermediate layer, the second PE intermediate layer, the third PE intermediate layer, and the second layer in this order in the stacking direction.

"The stretched film of the present disclosure is obtained by subjecting the present film to a stretching treatment. In the case of a stretched film having a multilayer structure, the layer configuration of the stretched film and the multilayer film is the same except for the presence or absence of stretching. Therefore, the first main surface of the stretched film corresponds to the first main surface of the multilayer film. The second main surface of the stretched film corresponds to the second main surface of the multilayer film. The first layer of the stretched film corresponds to the first layer of the multilayer film. The second layer of the stretched film corresponds to the second layer of the multilayer film. The PE intermediate layer of the stretched film corresponds to the PE intermediate layer of the multilayer film. The first, second, or third PE intermediate layer of the stretched film corresponds to the first, second, or third PE intermediate layer of the multilayer film, respectively. In the following description, unless otherwise specified, corresponding respective layers in both the multilayer film and the stretched film thereof shall be denoted by the same names.

The stretched film is a film obtained by subjecting the present film to a stretching treatment. By the stretching treatment, for example, the strength, rigidity, heat resistance, transparency, and printability of the present film can be improved. The stretching treatment may be uniaxial stretching or biaxial stretching. The biaxial stretching treatment may be a sequential biaxial stretching treatment or a simultaneous biaxial stretching treatment. Examples of the stretching treatment method include, but are not particularly limited to, a method of uniaxially stretching a film based on a difference in rotational speeds of two or more rolls, a method of biaxially stretching a film by a tenter method, and a method of biaxially stretching a film by a tubular method.

The stretching direction of the present film is not particularly limited, and examples thereof include the machine direction (flow direction, MD) of the present film, and the width direction (direction perpendicular to the MD, TD) of the present film.

When stretching is performed in the machine direction (flow direction, MD) of the present film, the stretch ratio is, from the viewpoint of improving strength and the like, preferably 2 times or more, and more preferably 3 times or more, and is, from the viewpoint of being excellent in thermal shape stability, preferably 10 times or less, more preferably 7 times or less, and still more preferably 5 times or less; and is, for example, from 2 times to 10 times, or from 3 times to 5 times. When stretching is performed in the width direction (direction perpendicular to the MD, TD) of the present film, the stretch ratio is, from the viewpoint of improving strength and the like, preferably 2 times or more, and more preferably 3 times or more, and is, from the viewpoint of being excellent in thermal shape stability, preferably 10 times or less, more preferably 7 times or less, and still more preferably 5 times or less; and is, for example, from 2 times to 10 times, or from 3 times to 5 times. The stretched film is preferably a film obtained by subjecting the present film to a uniaxial stretching treatment, that is, a uniaxially stretched film, and specifically, is a film obtained by subjecting the present film to a uniaxial stretching treatment in the MD.

"The stretched film can be produced, for example, by forming a material constituting each layer (for example, a material containing the high-density polyethylene (A)) into a film to produce the present film, and then subjecting the film to a stretching treatment. Examples of the film-forming method include an inflation molding method and a T-die cast molding method, with the inflation molding method being preferable. When the present film is produced by the inflation molding method, the MFR of the polyethylene contained in the present film and each layer is, from the viewpoint of film formability and processability, preferably from 0.01 g/10 min to 15 g/10 min, and more preferably from 0.05 g/10 min to 10 g/10 min.

The stretching temperature in the stretching treatment is not particularly limited.

The stretched film after stretching may be subjected to a heat setting treatment, if necessary. The annealing temperature in the heat setting treatment is not particularly limited.

In one embodiment, the multilayer film is a coextruded film.

In one embodiment, the stretched film is obtained by subjecting the coextruded film to a stretching treatment. In one embodiment, the stretched film is obtained by forming a material constituting the first layer, a material constituting the first to third PE intermediate layers or the like, and a material constituting the second layer into a film by coextrusion in this order in the stacking direction, and subjecting the obtained coextruded film to a stretching treatment. The coextruded film is obtained, for example, by a method such as an inflation molding method and a T-die cast molding method.

The thickness of the present film is preferably 10 µm or more, more preferably 20 µm or more, still more preferably 30 µm or more, and particularly preferably 40 µm or more, and is preferably 1000 µm or less, more preferably 500 µm or less, still more preferably 250 µm or less, and particularly preferably 150 µm or less; and is, for example, from 10 µm to 1000 µm.

"The thickness of the stretched film is preferably 5 µm or more, more preferably 10 µm or more, still more preferably 15 µm or more, and particularly preferably 20 µm or more, and is preferably 200 µm or less, more preferably 100 µm or less, still more preferably 50 µm or less, and particularly preferably 30 µm or less; and is, for example, from 5 µm to 200 µm. A stretched film having a thickness of the lower limit or more is, for example, excellent in strength, rigidity, and heat resistance. A stretched film having a thickness of the upper limit or less is, for example, excellent in processability. In the present specification, the thickness of the film and each layer is an average value of thicknesses at 10 points measured in an SEM image obtained by observing a cross section in a stacking direction (thickness direction) perpendicular to a main surface of the film with a scanning electron microscope (SEM).

The content of polyethylene in the present film and the stretched film is preferably more than 50% by mass, more preferably 60% by mass or more, still more preferably 70% by mass or more, even more preferably 80% by mass or more, and particularly preferably 85% by mass or more, 90% by mass or more, or 95% by mass or more. Such present film and stretched film, and a laminate comprising the present film or the stretched film are, for example, excellent in recyclability.

At least one selected from the group consisting of the present film and the stretched film may be subjected to a surface treatment. Such present film and stretched film are, for example, excellent in adhesion to other layers. Examples of the surface treatment method include physical treatments and chemical treatments. Examples of the physical treatments include corona treatment, ozone treatment, low-temperature plasma treatment using oxygen gas and/or nitrogen gas, and glow discharge treatment. Examples of the chemical treatments include oxidation treatment using a chemical agent.

### <The first layer and the second layer>

The first layer of the multilayer film contains polyethylene as a main component. The second layer of the multilayer film contains polyethylene as a main component. The polyethylene contained in the first layer may be the same polyethylene as the polyethylene contained in the second layer, or may be a different polyethylene. The compositions of the first and second layers may be the same as or different from each other. The thicknesses of the first and second layers may be the same as or different from each other.

Examples of the polyethylene contained in the first layer and the second layer include high-density polyethylene, medium-density polyethylene, linear low-density polyethylene, high-pressure low-density polyethylene, ethylene-vinyl acetate copolymer, and ethylene-(meth)acrylic acid ester copolymer. Among these, at least one selected from the group consisting of high-density polyethylene, medium-density polyethylene, linear low-density polyethylene, and high-pressure low-density polyethylene is preferable. From the viewpoint of heat resistance, each of the first layer and the second layer preferably contains, independently of each other, high-density polyethylene or medium-density polyethylene as a main component.

The weight-average molecular weights (Mw) of the polyethylenes contained in the first layer and the second layer are each independently preferably 0.50 × 10⁵ or more, more preferably 1.00 × 10⁵ or more, still more preferably 1.50 × 10⁵ or more, and particularly preferably 1.80 × 10⁵ or more, and are preferably 6.00 × 10⁵ or less, more preferably 5.00 × 10⁵ or less, still more preferably 4.00 × 10⁵ or less, even more preferably 3.50 × 10⁵ or less, and particularly preferably 3.00 × 10⁵ or less; and the Mw is, for example, from 0.50 × 10⁵ to 6.00 × 10⁵.

The contents of polyethylene in the first layer and the second layer are each independently preferably 80% by mass or more, more preferably 85% by mass or more, still more preferably 90% by mass or more, even more preferably 95% by mass or more, and particularly preferably 98% by mass or more.

Examples of the first layer and the second layer include:
a layer containing the high-density polyethylene (A) as a main component;
a layer containing the high-density polyethylene (B) as a main component;
a layer containing at least one polyethylene selected from the group consisting of linear low-density polyethylene and high-pressure low-density polyethylene (hereinafter also referred to as "low-density polyethylene (C)") as a main component; and
a layer containing medium-density polyethylene as a main component.

In one embodiment, the first layer and/or the second layer of the multilayer film may be a layer containing the high-density polyethylene (A) as a main component. The stretched film of such a multilayer film is, for example, excellent in heat resistance such as heat sealing resistance, and is also excellent in thermal shape stability.

When both the first layer and the second layer contain the high-density polyethylene (A), the high-density polyethylene (A) contained in the first layer may be the same polyethylene as the high-density polyethylene (A) contained in the second layer, or may be a different polyethylene.

The high-density polyethylene (A) is a high-density polyethylene having a narrow molecular weight distribution in a differential molecular weight distribution curve obtained by high-temperature gel permeation chromatography (GPC) measurement.

In a differential molecular weight distribution curve obtained by high-temperature GPC measurement (horizontal axis: common logarithmic value (LogM) of molecular weight (M), vertical axis: value dW/d(LogM) obtained by differentiating cumulative concentration fraction (W) with respect to the common logarithmic value of molecular weight (M)), a polyethylene having a peak in which a Full-Width at Quarter-Maximum (FWQM) value described below is smaller than that of a target polyethylene, or a polyethylene in which a difference (LogM₉₀ - LogM₁₀) between a 90th percentile value (LogM₉₀) and a 10th percentile value (LogM₁₀) of the molecular weight distribution is smaller than that of a target polyethylene can be said to have a molecular weight distribution with a sharper shape (a narrower molecular weight distribution) than the target polyethylene.

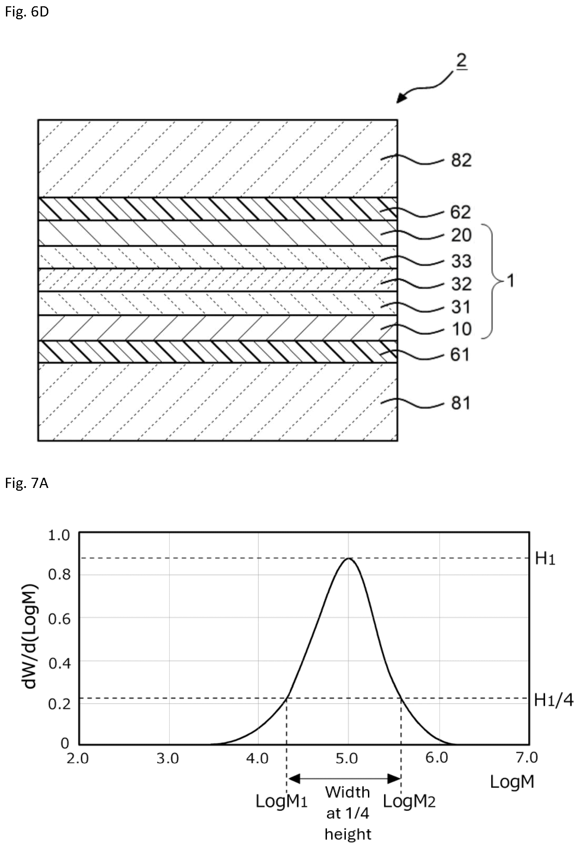

W is the cumulative concentration fraction (cumulative mass fraction) relating to the molecular weight of a polymer to be measured, such as high-density polyethylene. Log is the common logarithm. M is the molecular weight of the polymer to be measured, such as high-density polyethylene. The FWQM value means the width of a peak (LogM₂ - LogM₁) when the value of dW/d(LogM) is 1/4 of the height (peak top height) of the peak appearing in the differential molecular weight distribution curve (see FIG. 7A). Hereinafter, FWQM is also referred to as "1/4 width".

"The polydispersity index (Mw/Mn) is sometimes used as one index of the spread of the differential molecular weight distribution. Here, Mn is the number-average molecular weight, and Mw is the weight-average molecular weight. The 1/4 width can more appropriately evaluate the shape of the tail of the differential molecular weight distribution than the polydispersity index. This is because the 1/4 width evaluates not the shape in the vicinity of the peak top of the differential molecular weight distribution, but the shape of the distribution at a position distant from the peak top in the horizontal axis direction. Therefore, the 1/4 width can more appropriately evaluate the shape of the differential molecular weight distribution (thickness of the tail of the distribution, sharp or broad shape) than the polydispersity index.

A small 1/4 width indicates that the differential molecular weight distribution exhibits a sharp shape with thin tails on both sides, representing that the spread of the differential molecular weight distribution is small. Conversely, a large 1/4 width indicates that the differential molecular weight distribution exhibits a broad shape with thick tails on both sides, representing that the spread of the differential molecular weight distribution is large.

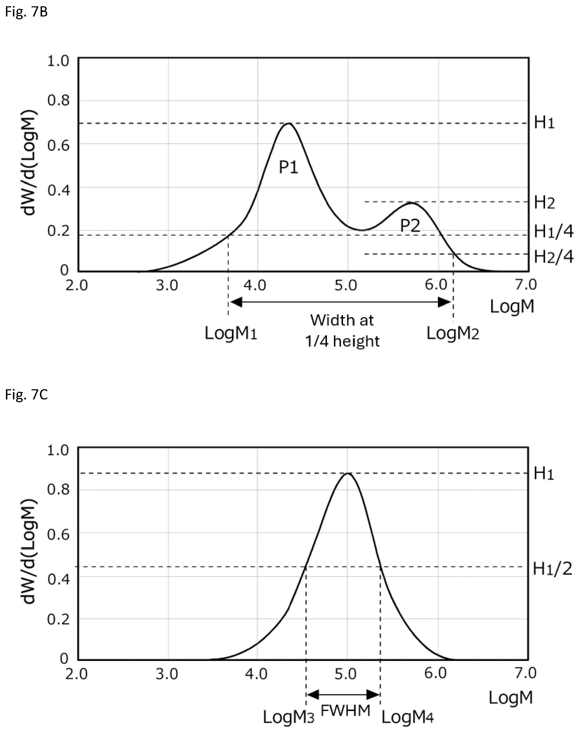

"The 1/4 width in a case where two or more peaks exist in an overlapping manner in the differential molecular weight distribution curve is calculated as follows. A peak having the smallest molecular weight at a peak top position is denoted as P1, and the height of the P1 (the maximum value of dW/d(LogM)) is denoted as H₁. A peak having the largest molecular weight at a peak top position is denoted as P2, and the height of the P2 (the maximum value of dW/d(LogM)) is denoted as H₂. A value of the molecular weight satisfying dW/d(LogM) = H₁/4 in the differential molecular weight distribution curve on a lower molecular weight side than the peak top position of P1 is denoted as M₁. A value of the molecular weight satisfying dW/d(LogM) = H₂/4 in the differential molecular weight distribution curve on a higher molecular weight side than the peak top position of P2 is denoted as M₂. The difference between LogM₂ and LogM₁ (LogM₂ - LogM₁) is defined as the "1/4 width" (see FIG. 7B). Provided that a peak having a height from a baseline (in the case of a shoulder peak, a height from a baseline of the shoulder) of 0.10 or less shall be ignored.

The differential molecular weight distribution curve of a certain polymer is obtained as follows.

First, an integral molecular weight distribution curve is obtained by high-temperature GPC measurement. The integral molecular weight distribution curve is obtained by plotting data with the common logarithmic value (LogM) of the molecular weight of the polymer on the horizontal axis, and the cumulative concentration fraction of the polymer on the vertical axis. The vertical axis of the integral molecular weight distribution curve indicates the mass ratio of the polymer having a certain molecular weight or less to the entire polymer.

Next, a differential value of the curve (the slope of the integral molecular weight distribution curve) at each molecular weight is determined. Data is plotted with the common logarithmic value (LogM) of the molecular weight (M) on the horizontal axis, and the differential value (value obtained by differentiating the cumulative concentration fraction with respect to the common logarithmic value of the molecular weight, dW/d(LogM)) on the vertical axis. Thus, the differential molecular weight distribution curve is obtained.

Details of the conditions for the high-temperature GPC measurement will be described in the Examples section.

"The present inventors have found that the shape of the peak in the differential molecular weight distribution curve of the high-density polyethylene is related to the heat resistance (specifically, heat deformation resistance) of the stretched film. For example, it can be said that the high-density polyethylene (A) having a peak whose 1/4 width is less than 1.5, and/or in which a difference (LogM₉₀ - LogM₁₀) between the 90th percentile value (LogM₉₀) and the 10th percentile value (LogM₁₀) of the molecular weight distribution is less than 1.25, has a molecular weight distribution with a sharper shape (a narrower molecular weight distribution).

The high-density polyethylene (A) preferably has a peak whose Full-Width at Quarter-Maximum (FWQM) value (1/4 width) is less than 1.5 in a differential molecular weight distribution curve obtained by high-temperature GPC measurement. The 1/4 width at the peak of the high-density polyethylene (A) is, for example, less than 1.5, preferably 1.47 or less, more preferably 1.43 or less, and particularly preferably 1.4 or less, and is preferably 0.8 or more, more preferably 1.0 or more, still more preferably 1.1 or more, and particularly preferably 1.2 or more; and the 1/4 width is, for example, 0.8 or more and less than 1.5.

The difference (LogM₉₀ - LogM₁₀) between the 90th percentile value (LogM₉₀) and the 10th percentile value (LogM₁₀) of the molecular weight distribution in the differential molecular weight distribution curve (hereinafter also referred to as "differential molecular weight distribution") of the high-density polyethylene (A) is preferably less than 1.25.

The 10th percentile value (LogM₁₀) means the common logarithmic value of the molecular weight M₁₀ when the content of polyethylene having a molecular weight of M₁₀ or less becomes 10% by mass relative to the entire polyethylene. The 10th percentile value is obtained as the common logarithmic value of the molecular weight when the cumulative value of the concentration fraction in the integral molecular weight distribution curve becomes 10% by mass.

The 90th percentile value (LogM₉₀) means the common logarithmic value of the molecular weight M₉₀ when the content of polyethylene having a molecular weight of M₉₀ or less becomes 90% by mass relative to the entire polyethylene. The 90th percentile value is obtained as the common logarithmic value of the molecular weight when the cumulative value of the concentration fraction in the integral molecular weight distribution curve becomes 90% by mass.

LogM₉₀ and LogM₁₀ can be used as indices for evaluating the thickness of the tail of the differential molecular weight distribution. The difference can more appropriately evaluate the shape of the tail of the differential molecular weight distribution than the polydispersity index. This is because the difference evaluates not the shape in the vicinity of the peak top of the differential molecular weight distribution, but the shape of the distribution at a position distant from the peak top in the horizontal axis direction. Therefore, the difference can more appropriately evaluate the shape of the differential molecular weight distribution (thickness of the tail of the distribution, sharp or broad shape) than the polydispersity index.

A small difference indicates that the differential molecular weight distribution exhibits a sharp shape with thin tails on both sides, representing that the spread of the differential molecular weight distribution is small. Conversely, a large difference indicates that the differential molecular weight distribution exhibits a broad shape with thick tails on both sides, representing that the spread of the differential molecular weight distribution is large.

The difference (LogM90 - LogM10) of the high-density polyethylene (A) is preferably less than 1.25, more preferably 1.20 or less, still more preferably 1.15 or less, and particularly preferably 1.12 or less, and is preferably 0.70 or more, more preferably 0.80 or more, still more preferably 0.90 or more, and particularly preferably 1.00 or more; and the difference is, for example, 0.70 or more and less than 1.25.

The maximum value of dW/d(LogM) at the peak whose 1/4 width is less than 1.5 of the high-density polyethylene (A) is, for example, 0.80 or more, preferably 0.85 or more, more preferably 0.90 or more, and particularly preferably 0.95 or more, and is preferably 1.30 or less, more preferably 1.25 or less, still more preferably 1.20 or less, and particularly preferably 1.10 or less; and the maximum value is, for example, from 0.80 to 1.30.

In the above differential molecular weight distribution curve obtained by high-temperature GPC measurement, a polyethylene having a peak in which a maximum value of dW/d(LogM) described below is larger than that of a target polyethylene and a half-width is smaller than that of the target polyethylene can be said to have a molecular weight distribution with a sharper shape (a narrower molecular weight distribution) than the target polyethylene. The half-width means the width of a peak (Full-Width at Half-Maximum; LogM₄ - LogM₃) when the value of dW/d(LogM) is half of the height of the peak appearing in the differential molecular weight distribution curve (see FIG. 7C).

The polydispersity index (Mw/Mn) is sometimes used as one index of the spread of the differential molecular weight distribution. The combination of dW/d(LogM) and the half-width can more appropriately evaluate the shape of the differential molecular weight distribution (sharp or broad shape) than the polydispersity index, and is preferable.

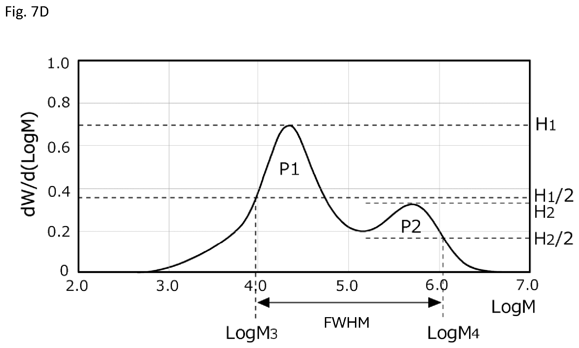

"The half-width in a case where two or more peaks exist in an overlapping manner in the differential molecular weight distribution curve is calculated as follows. A value of the molecular weight satisfying dW/d(LogM) = H₁/2 in the differential molecular weight distribution curve on a lower molecular weight side than the peak top position of P1 is denoted as M₃. A value of the molecular weight satisfying dW/d(LogM) = H₂/2 in the differential molecular weight distribution curve on a higher molecular weight side than the peak top position of P2 is denoted as M₄. The difference between LogM₄ and LogM₃ (LogM₄ - LogM₃) is defined as the "half-width" (see FIG. 7D). Provided that a peak having a height from a baseline (in the case of a shoulder peak, a height from a baseline of the shoulder) of 0.10 or less shall be ignored.

The present inventors have found that the shape of the peak in the differential molecular weight distribution curve of the high-density polyethylene is related to the heat resistance (specifically, heat deformation resistance) of the stretched film. It can be said that the high-density polyethylene (A) having a peak in which a maximum value of dW/d(LogM) is 0.80 or more and a half-width is less than 1.1, has a molecular weight distribution with a sharper shape (a narrower molecular weight distribution).

In one embodiment, the high-density polyethylene (A) preferably has a peak in which a maximum value of dW/d(LogM) is 0.80 or more and a half-width is less than 1.1 in the above differential molecular weight distribution curve. That is, the peak preferably has a maximum value of dW/d(LogM) of 0.80 or more and a half-width of less than 1.1.

The maximum value of dW/d(LogM) at the peak of the high-density polyethylene (A) is, for example, 0.80 or more, preferably 0.85 or more, more preferably 0.90 or more, and particularly preferably 0.95 or more, and is preferably 1.30 or less, more preferably 1.25 or less, still more preferably 1.20 or less, and particularly preferably 1.10 or less; and the maximum value is, for example, from 0.80 to 1.30.

The half-width at the peak of the high-density polyethylene (A) is, for example, less than 1.1, preferably 1.08 or less, more preferably 1.06 or less, and particularly preferably 1.04 or less, and is preferably 0.66 or more, more preferably 0.68 or more, still more preferably 0.70 or more, and particularly preferably 0.72 or more, 0.74 or more, or 0.76 or more; and the half-width is, for example, 0.66 or more and less than 1.1.

"A stretched film of a film comprising a layer containing the high-density polyethylene (A) as a main component (for example, at least one layer selected from the group consisting of the first layer, the intermediate layer, and the second layer) and a stretched film of a film containing the high-density polyethylene (A) as a main component tend to be less likely to undergo heat deformation (for example, thermal shrinkage) in the stretching direction despite having been subjected to a stretching treatment, and in particular, an absolute value of a maximum dimensional change rate in the stretching direction tends to be small. Therefore, the stretched film of the present disclosure can, for example, favorably suppress heat deformation (for example, thermal shrinkage) during heat sealing. From such a viewpoint, the first layer preferably contains the high-density polyethylene (A) as a main component. Further, the second layer also preferably contains the high-density polyethylene (A) as a main component.

"Although the reason for this is not certain, the present inventors presume as follows.

Polyethylene having a molecular weight distribution with a broad shape contains a relatively large amount of low-molecular-weight polyethylene. For this reason, when a film is heated, molecular motion starts from the low-molecular-weight polyethylene, and the film is likely to undergo heat deformation (for example, thermal shrinkage). On the other hand, polyethylene having a molecular weight distribution with a sharp shape contains spherulites having similar sizes, and the spherulites contain a large amount of lamellar crystals having similar sizes. These lamellar crystals are neatly aligned by the stretching treatment. Since oriented crystals increase by the stretching treatment, the molecular motion of the polyethylene is suppressed. Such oriented crystals contribute to the suppression of heat deformation such as thermal shrinkage of the film. Note that the above description is a presumption and does not limit the stretched film of the present disclosure in any way.

The multilayer film may comprise a first surface resin layer containing the high-density polyethylene (A) as a main component. A stretched film of a film comprising a first surface resin layer containing the high-density polyethylene (A) as a main component and a stretched film of a film containing the high-density polyethylene (A) as a main component tend to be able to suppress generation of white powder on a film surface. It is presumed that this is because the high-density polyethylene (A) has a narrow molecular weight distribution, and thus the content of low-molecular-weight polyethylene is relatively small. In addition, the stretched film of a film comprising a first surface resin layer containing the high-density polyethylene (A) as a main component and the stretched film of a film containing the high-density polyethylene (A) as a main component tend to have a small external haze and be excellent in transparency. From such a viewpoint, the second surface resin layer also preferably contains the high-density polyethylene (A) as a main component.

In one embodiment, the first layer and/or the second layer may contain two or more kinds of high-density polyethylenes (A). In the case of a mixture of two or more kinds of high-density polyethylenes (A), it is preferable that the above differential molecular weight distribution curve of the mixture has a peak satisfying the requirement of the 1/4 width (preferably further satisfying the requirement of the maximum value of dW/d(LogM)), and it is preferable that the above differential molecular weight distribution of the mixture satisfies the requirement of the above difference, or it is preferable that the above differential molecular weight distribution curve of the mixture has a peak satisfying the requirements of the maximum value of dW/d(LogM) and the half-width.

The high-density polyethylene (A) may have a differential molecular weight distribution curve having unimodality, or multimodality such as bimodality, and preferably has a differential molecular weight distribution curve having unimodality and having one peak whose 1/4 width is less than 1.5.

The high-density polyethylene (A) may have a differential molecular weight distribution curve having unimodality, or multimodality such as bimodality, and preferably has a differential molecular weight distribution curve having unimodality and having one peak whose maximum value of dW/d(LogM) is 0.80 or more.

The weight-average molecular weight (Mw) of the high-density polyethylene (A) is preferably 0.50 × 10⁵ or more, more preferably 1.00 × 10⁵ or more, still more preferably 1.50 × 10⁵ or more, and particularly preferably 1.80 × 10⁵ or more, and is preferably 6.00 × 10⁵ or less, more preferably 5.00 × 10⁵ or less, still more preferably 4.00 × 10⁵ or less, even more preferably 3.50 × 10⁵ or less, and particularly preferably 3.00 × 10⁵ or less; and the Mw is, for example, from 0.50 × 10⁵ to 6.00 × 10⁵. In the present specification, the above Mw is obtained by high-temperature GPC measurement, and details of the conditions thereof will be described in the Examples section.

The density of the high-density polyethylene (A) is preferably more than 0.945 g/cm³, and more preferably 0.948 g/cm³ or more, and is preferably 0.970 g/cm³ or less, more preferably 0.965 g/cm³ or less, and still more preferably 0.960 g/cm³ or less; and the density is, for example, more than 0.945 g/cm³ and 0.970 g/cm³ or less. The high-density polyethylene (A) having such a density contributes to, for example, the improvement of the heat resistance of the stretched film.

The melting point of the high-density polyethylene (A) is preferably the range described above for the melting point of the high-density polyethylene, and is particularly preferably 130°C or higher. The high-density polyethylene (A) having such a melting point contributes to, for example, the improvement of the heat resistance of the stretched film.

In one embodiment, the content of the high-density polyethylene (A) in the first layer and/or the second layer is, from the viewpoint of heat resistance, preferably 80% by mass or more, more preferably 85% by mass or more, still more preferably 90% by mass or more, even more preferably 95% by mass or more, and particularly preferably 98% by mass or more.

In one embodiment, the first layer and/or the second layer of the multilayer film may be a layer containing the high-density polyethylene (B) as a main component.

In one embodiment, the first layer contains the high-density polyethylene (A) or (B) as a main component, and the second layer contains the high-density polyethylene (B) as a main component. The multilayer film of one embodiment in which the first layer contains the high-density polyethylene (A) or (B) as a main component and the second layer contains the high-density polyethylene (B) as a main component is preferable from the viewpoint of suppressing the occurrence of curling of the stretched film.

The high-density polyethylene (B) is a high-density polyethylene having a broader molecular weight distribution than the high-density polyethylene (A) in a differential molecular weight distribution curve obtained by high-temperature GPC measurement. In other words, the high-density polyethylene (A) is a high-density polyethylene having a molecular weight distribution with a sharper shape (a narrower molecular weight distribution) than the high-density polyethylene (B) in a differential molecular weight distribution curve obtained by high-temperature GPC measurement.

In a differential molecular weight distribution curve obtained by high-temperature GPC measurement, a polyethylene having a peak in which a 1/4 width is smaller than that of a target polyethylene, or a polyethylene in which a difference (LogM₉₀ - LogM₁₀) between a 90th percentile value (LogM₉₀) and a 10th percentile value (LogM₁₀) of the differential molecular weight distribution is smaller than that of a target polyethylene can be said to have a molecular weight distribution with a sharper shape (a narrower molecular weight distribution) than the target polyethylene.

For example, it can be said that the high-density polyethylene (B) having a peak whose 1/4 width is 1.5 or more, and/or in which a difference (LogM₉₀ - LogM₁₀) between the 90th percentile value (LogM₉₀) and the 10th percentile value (LogM₁₀) of the molecular weight distribution is 1.25 or more, has a molecular weight distribution with a broader shape (a wider molecular weight distribution).

The high-density polyethylene (B) preferably has a peak whose 1/4 width is 1.5 or more in a differential molecular weight distribution curve obtained by high-temperature GPC measurement. The 1/4 width at the peak of the high-density polyethylene (B) is, for example, 1.5 or more, preferably 1.6 or more, and more preferably 1.7 or more, and is preferably 4.5 or less, more preferably 4.0 or less, still more preferably 3.5 or less, and particularly preferably 3.2 or less; and the 1/4 width is, for example, from 1.5 to 4.5.

The difference (LogM₉₀ - LogM₁₀) between the 90th percentile value (LogM₉₀) and the 10th percentile value (LogM₁₀) of the differential molecular weight distribution of the high-density polyethylene (B) is preferably 1.25 or more, more preferably 1.30 or more, still more preferably 1.35 or more, and particularly preferably 1.40 or more, and is preferably 4.00 or less, more preferably 3.50 or less, still more preferably 3.00 or less, even more preferably 2.50 or less, and particularly preferably 2.00 or less; and the difference is, for example, from 1.25 to 4.00.

The maximum value of dW/d(LogM) at the peak whose 1/4 width is 1.5 or more of the high-density polyethylene (B) is, for example, less than 0.80, preferably 0.75 or less, more preferably 0.70 or less, and particularly preferably 0.65 or less, and is preferably 0.20 or more, more preferably 0.25 or more, still more preferably 0.30 or more, and particularly preferably 0.35 or more; and the maximum value is, for example, 0.20 or more and less than 0.80.

In one embodiment, the high-density polyethylene (B) preferably has a peak in which a maximum value of dW/d(LogM) is less than 0.80 and a half-width is 1.1 or more in the above differential molecular weight distribution curve. That is, the peak preferably has a maximum value of dW/d(LogM) of less than 0.80 and a half-width of 1.1 or more.

For example, it can be said that the high-density polyethylene (B) having a peak in which a maximum value of dW/d(LogM) is less than 0.80 and a half-width is 1.1 or more, has a molecular weight distribution with a broader shape (a wider molecular weight distribution).

The maximum value of dW/d(LogM) at the peak of the high-density polyethylene (B) is, for example, less than 0.80, preferably 0.75 or less, more preferably 0.70 or less, and particularly preferably 0.65 or less, and is preferably 0.20 or more, more preferably 0.25 or more, still more preferably 0.30 or more, and particularly preferably 0.35 or more; and the maximum value is, for example, 0.20 or more and less than 0.80.

The half-width at the peak of the high-density polyethylene (B) is, for example, 1.1 or more, preferably 1.2 or more, more preferably 1.3 or more, still more preferably 1.4 or more, and particularly preferably 1.5 or more, and is preferably 3.0 or less, more preferably 2.9 or less, still more preferably 2.8 or less, and particularly preferably 2.7 or less, 2.6 or less, 2.55 or less, 2.50 or less, or 2.45 or less; and the half-width is, for example, from 1.1 to 3.0."

"The multilayer film of one embodiment in which the first layer contains the high-density polyethylene (A) as a main component and the second layer contains the high-density polyethylene (B) as a main component, or the above film of one embodiment further containing the high-density polyethylene (B) in addition to the high-density polyethylene (A) as a main component can not only suppress heat deformation such as thermal shrinkage after a stretching treatment, but is also excellent in stretchability itself. It is presumed that this is because polyethylene having a broad molecular weight distribution is more excellent in stretchability than polyethylene having a narrow molecular weight distribution.

In one embodiment, the first layer and/or the second layer may contain two or more kinds of high-density polyethylenes (B). In the case of a mixture of two or more kinds of high-density polyethylenes (B), it is preferable that the above differential molecular weight distribution curve of the mixture has a peak satisfying the requirement of the 1/4 width (preferably further satisfying the requirement of the maximum value of dW/d(LogM)), and it is preferable that the above differential molecular weight distribution of the mixture satisfies the requirement of the above difference, or it is preferable that the above differential molecular weight distribution curve of the mixture has a peak satisfying the requirements of the maximum value of dW/d(LogM) and the half-width.

The high-density polyethylene (B) may have a differential molecular weight distribution curve having unimodality, or may have a differential molecular weight distribution curve having multimodality such as bimodality.

"The weight-average molecular weight (Mw) of the high-density polyethylene (B) is preferably 0.50 × 10⁵ or more, more preferably 1.00 × 10⁵ or more, still more preferably 1.50 × 10⁵ or more, and particularly preferably 1.80 × 10⁵ or more, and is preferably 6.00 × 10⁵ or less, more preferably 5.00 × 10⁵ or less, still more preferably 4.00 × 10⁵ or less, even more preferably 3.50 × 10⁵ or less, and particularly preferably 3.00 × 10⁵ or less; and the Mw is, for example, from 0.50 × 10⁵ to 6.00 × 10⁵.

The density of the high-density polyethylene (B) is preferably more than 0.945 g/cm³, more preferably 0.948 g/cm³ or more, still more preferably 0.950 g/cm³ or more, in one embodiment even more preferably 0.955 g/cm³ or more, and particularly preferably 0.960 g/cm³ or more, and is preferably 0.97 g/cm³ or less; and the density is, for example, more than 0.945 g/cm³ and 0.970 g/cm³ or less. The high-density polyethylene (B) having such a density contributes to, for example, the improvement of the heat resistance of the stretched film.

The melting point of the high-density polyethylene (B) is preferably the range described above for the melting point of the high-density polyethylene, and is particularly preferably 130°C or higher. The high-density polyethylene (B) having such a melting point contributes to, for example, the improvement of the heat resistance of the stretched film.

In one embodiment, the first layer and/or the second layer of the multilayer film may be a layer containing the low-density polyethylene (C) as a main component.

In one embodiment, the first layer contains the high-density polyethylene (A) as a main component, and the second layer contains the low-density polyethylene (C) as a main component. Such a multilayer film is excellent in stretchability itself, and is also excellent in impact resistance (for example, puncture resistance) after a stretching treatment.

The multilayer film of one embodiment in which the first layer contains the high-density polyethylene (A) as a main component and the second layer contains the low-density polyethylene (C) as a main component can not only suppress heat deformation such as thermal shrinkage after a stretching treatment, but is also excellent in stretchability itself, and is also excellent in impact resistance (for example, puncture resistance) after the stretching treatment.

It is presumed that this is because linear low-density polyethylene and high-pressure low-density polyethylene usually contain a larger amount of amorphous components than high-density polyethylene, and thus are more excellent in stretchability and more excellent in impact resistance (for example, puncture resistance).

Details of the low-density polyethylene (C) will be described later.

The low-density polyethylene (C) is preferably linear low-density polyethylene.

In one embodiment, the first layer and/or the second layer of the multilayer film may be a layer containing medium-density polyethylene as a main component.

In one embodiment, the first layer contains the high-density polyethylene (A) as a main component, and the second layer contains medium-density polyethylene as a main component.

Details of the medium-density polyethylene will be described later.

The contents of the above main components in the first layer and the second layer in the multilayer film are each independently preferably 80% by mass or more, more preferably 85% by mass or more, still more preferably 90% by mass or more, even more preferably 95% by mass or more, and particularly preferably 98% by mass or more.

In one embodiment, at least one layer selected from the group consisting of the first layer and the second layer is a layer (1_{AB}) containing the high-density polyethylene (A) and the high-density polyethylene (B). The stretched film of such a film is, for example, excellent in heat resistance such as heat sealing resistance.

In one embodiment, either one of the first layer and the second layer is the layer (1_{AB}), and the other layer is a layer containing polyethylene as a main component (excluding the layer (1_{AB})). The thicknesses of the first and second layers may be the same as or different from each other.

In one embodiment, the first layer and the second layer are each independently the layer (1_{AB}). In this case, the high-density polyethylene (A) contained in the first layer may be the same polyethylene as the high-density polyethylene (A) contained in the second layer, or may be a different polyethylene. Also, the high-density polyethylene (B) contained in the first layer may be the same polyethylene as the high-density polyethylene (B) contained in the second layer, or may be a different polyethylene. The compositions of the first and second layers may be the same as or different from each other. The thicknesses of the first and second layers may be the same as or different from each other.

In a multilayer film corresponding to a stretched film of a second aspect described later, the first layer and/or the second layer may be, for example, a layer containing the high-density polyethylene (A) or (B) (preferably the high-density polyethylene (A)) as a main component, and further containing medium-density polyethylene as another polyethylene.

In the multilayer film corresponding to the stretched film of the second aspect described later, the first layer and/or the second layer may be, for example, a layer containing medium-density polyethylene as a main component, and further containing the high-density polyethylene (A) or (B) (preferably the high-density polyethylene (B)) as another polyethylene.

In the multilayer film corresponding to the stretched film of the second aspect described later, the first layer and/or the second layer may be, for example, a layer containing the high-density polyethylene (A) as a main component, and further containing the high-density polyethylene (B) as another polyethylene.

In these cases, the content of the main component in the first layer and/or the second layer is preferably from 50% by mass to 90% by mass, and more preferably from 55% by mass to 85% by mass, and the content of the other polyethylene is preferably from 10% by mass to 50% by mass, and more preferably from 15% by mass to 45% by mass.

The first layer and/or the second layer may contain a polyethylene other than the above main component such as the high-density polyethylene (A). The first layer and/or the second layer may contain a resin material other than polyethylene. Examples of the resin material other than polyethylene include polyolefins other than polyethylene, polyesters, polyamides, (meth)acrylic resins, vinyl resins, cellulose resins, and ionomer resins.

The first layer and/or the second layer may contain additives. Examples of the additives include crosslinking agents, antioxidants, ultraviolet absorbers, light stabilizers, anti-blocking agents, slip agents, fillers, reinforcing agents, antistatic agents, compatibilizers, pigments, and modifying resins.

"The thickness of the first layer and the thickness of the second layer in the stretched film are each independently preferably 0.5 µm or more, more preferably 1 µm or more, still more preferably 2 µm or more, even more preferably 3 µm or more, and particularly preferably 4 µm or more, and are preferably 25 µm or less, more preferably 20 µm or less, still more preferably 15 µm or less, even more preferably 12 µm or less, and particularly preferably 9 µm or less, and are, for example, from 0.5 µm to 25 µm.

The thickness of the first layer and the thickness of the second layer in the stretched film may be each independently, for example, from 5% to 90%, from 5% to 85%, or from 5% to 80%, preferably from 5% to 75%, more preferably from 8% to 72%, still more preferably from 8% to 70%, and particularly preferably from 10% to 50%, with respect to the thickness of the stretched film, from the viewpoint of heat resistance. Similarly, the thickness of the first layer and the thickness of the second layer in the multilayer film may be each independently, for example, from 5% to 90%, from 5% to 85%, or from 5% to 80%, preferably from 5% to 75%, more preferably from 8% to 72%, still more preferably from 8% to 70%, and particularly preferably from 10% to 50%, with respect to the thickness of the multilayer film, from the viewpoint of heat resistance.

The thickness of the first layer and the thickness of the second layer in the stretched film of the multilayer film comprising the layer (1_{AB}) are each independently preferably from 10% to 50%, more preferably from 20% to 45%, and still more preferably from 25% to 40%, with respect to the thickness of the stretched film, from the viewpoint of heat resistance and the like. Similarly, the thickness of the first layer and the thickness of the second layer in the multilayer film are each independently preferably from 10% to 50%, more preferably from 20% to 45%, and still more preferably from 25% to 40%, with respect to the thickness of the multilayer film, from the viewpoint of heat resistance and the like.

"The thickness of the first layer and the thickness of the second layer in the stretched film of a second aspect described later are each independently preferably from 5% to 50%, more preferably from 5% to 35%, still more preferably from 8% to 33%, and particularly preferably from 10% to 30%, and may be from 20% to 30%, with respect to the thickness of the stretched film, from the viewpoint of heat resistance. Similarly, the thickness of the first layer and the thickness of the second layer in the multilayer film corresponding to the stretched film are each independently preferably from 5% to 50%, more preferably from 5% to 35%, still more preferably from 8% to 33%, and particularly preferably from 10% to 30%, and may be from 20% to 30%, with respect to the thickness of the multilayer film, from the viewpoint of heat resistance.

The ratio of the thickness of the second layer to the thickness of the first layer is, from the viewpoint of the symmetry of the film and suppressing the occurrence of curling, preferably from 0.6 to 1.4, more preferably from 0.7 to 1.3, still more preferably from 0.8 to 1.2, and particularly preferably from 0.9 to 1.1.

### <PE intermediate layer>

The multilayer film preferably further comprises a PE intermediate layer containing polyethylene as a main component, such as first to third PE intermediate layers, between the first layer and the second layer. The multilayer film may comprise one PE intermediate layer, or may comprise two or more or three or more layers. The number of PE intermediate layers is, for example, from 1 to 7, may be from 3 to 7, and may be from 3 to 5. The number of PE intermediate layers is, for example, 1 or 3.

When the multilayer film comprises two or more PE intermediate layers, the compositions of the PE intermediate layers may be the same as or different from each other, and the thicknesses of the PE intermediate layers may be the same as or different from each other. The compositions of the first layer and the PE intermediate layer may be the same as or different from each other. The thicknesses of the first layer and the PE intermediate layer may be the same as or different from each other. The compositions of the second layer and the PE intermediate layer may be the same as or different from each other. The thicknesses of the second layer and the PE intermediate layer may be the same as or different from each other. When the multilayer film comprises first to third PE intermediate layers, the compositions of the first to third PE intermediate layers may be the same as or different from each other, and the thicknesses of the first to third PE intermediate layers may be the same as or different from each other. For example, the compositions of the first and third PE intermediate layers may be the same as or different from each other, and the thicknesses of the first and third PE intermediate layers may be the same as or different from each other.

Examples of the polyethylene contained in the PE intermediate layer include high-density polyethylene, medium-density polyethylene, linear low-density polyethylene, high-pressure low-density polyethylene, ethylene-vinyl acetate copolymers, and ethylene-(meth)acrylic acid ester copolymers. Among these, at least one selected from the group consisting of high-density polyethylene, medium-density polyethylene, linear low-density polyethylene, and high-pressure low-density polyethylene is preferable.

The weight-average molecular weight (Mw) of the polyethylene contained in the PE intermediate layer is preferably 0.50 × 10⁵ or more, more preferably 1.00 × 10⁵ or more, still more preferably 1.50 × 10⁵ or more, and particularly preferably 1.80 × 10⁵ or more, and is preferably 6.00 × 10⁵ or less, more preferably 5.00 × 10⁵ or less, still more preferably 4.00 × 10⁵ or less, even more preferably 3.50 × 10⁵ or less, and particularly preferably 3.00 × 10⁵ or less; and the Mw is, for example, from 0.50 × 10⁵ to 6.00 × 10⁵.

The content of the polyethylene in the PE intermediate layer is preferably 80% by mass or more, more preferably 85% by mass or more, still more preferably 90% by mass or more, even more preferably 95% by mass or more, and particularly preferably 98% by mass or more.

Examples of the PE intermediate layer include:
an intermediate layer containing the high-density polyethylene (A) as a main component;
an intermediate layer containing the high-density polyethylene (B) as a main component;
an intermediate layer containing at least one kind of polyethylene selected from the group consisting of linear low-density polyethylene and high-pressure low-density polyethylene (low-density polyethylene (C)) as a main component; and
an intermediate layer containing medium-density polyethylene as a main component.

The multilayer film may comprise an intermediate layer containing the high-density polyethylene (A) as a main component (hereinafter also referred to as "intermediate layer (A)"). Details of the high-density polyethylene (A) are as described above. The stretched film of such a film is further excellent in heat resistance, and specifically is further excellent in thermal shape stability. When the first layer and/or the second layer contains the high-density polyethylene (A), the high-density polyethylene (A) contained in the first layer and/or the second layer may be the same polyethylene as the high-density polyethylene (A) contained in the intermediate layer (A), or may be a different polyethylene.

The intermediate layer (A) may contain two or more kinds of high-density polyethylenes (A).

"The intermediate layer (A) may further contain the high-density polyethylene (B). Such a multilayer film is further excellent in stretchability and the like. In one embodiment, the intermediate layer (A) may be the layer (1_{AB}) described above.

The multilayer film may comprise an intermediate layer containing the high-density polyethylene (B) as a main component. Details of the high-density polyethylene (B) are as described above. Such a film is excellent in stretchability itself. The multilayer film of one embodiment comprising the intermediate layer containing the high-density polyethylene (B) as a main component in addition to the first layer and/or the second layer containing the high-density polyethylene (A) as a main component can not only suppress heat deformation such as thermal shrinkage after a stretching treatment, but is also excellent in stretchability itself. The multilayer film of one embodiment comprising the intermediate layer containing the high-density polyethylene (B) as a main component in addition to the intermediate layer (A) can not only suppress heat deformation such as thermal shrinkage after a stretching treatment, but is also excellent in stretchability itself. The multilayer film of one embodiment comprising the first layer and/or the second layer containing the high-density polyethylene (B) as a main component in addition to the intermediate layer (A) can not only suppress heat deformation such as thermal shrinkage after a stretching treatment, but is also excellent in stretchability itself. It is presumed that this is because polyethylene having a broad molecular weight distribution is more excellent in stretchability than polyethylene having a narrow molecular weight distribution.

The intermediate layer may contain two or more kinds of high-density polyethylenes (B).

The multilayer film may comprise an intermediate layer containing the low-density polyethylene (C) as a main component. The multilayer film of one embodiment comprising the intermediate layer containing the low-density polyethylene (C) as a main component is excellent in stretchability itself, and is also excellent in impact resistance (for example, puncture resistance) after a stretching treatment. The multilayer film of one embodiment comprising the intermediate layer containing the low-density polyethylene (C) as a main component in addition to the first layer and/or the second layer containing the high-density polyethylene (A) as a main component can not only suppress heat deformation such as thermal shrinkage after a stretching treatment, but is also excellent in stretchability itself, and is also excellent in impact resistance (for example, puncture resistance) after the stretching treatment. The multilayer film of one embodiment comprising the intermediate layer containing the low-density polyethylene (C) as a main component in addition to the intermediate layer (A) can not only suppress heat deformation such as thermal shrinkage after a stretching treatment, but is also excellent in stretchability itself, and is also excellent in puncture resistance after the stretching treatment. The multilayer film of one embodiment in which the first layer and/or the second layer contains the low-density polyethylene (C) as a main component in addition to the intermediate layer (A) can not only suppress heat deformation such as thermal shrinkage after a stretching treatment, but is also excellent in stretchability itself, and is also excellent in puncture resistance after the stretching treatment. It is presumed that this is because linear low-density polyethylene and high-pressure low-density polyethylene usually contain a larger amount of amorphous components than high-density polyethylene, and thus are more excellent in stretchability and more excellent in impact resistance (for example, puncture resistance).

The (intermediate) layer containing the low-density polyethylene (C) as a main component means a layer in which the total content of the linear low-density polyethylene and the high-pressure low-density polyethylene is 50% by mass or more when the (intermediate) layer contains the linear low-density polyethylene and the high-pressure low-density polyethylene. The (intermediate) layer means an intermediate layer or simply a layer.

The low-density polyethylene (C) is preferably linear low-density polyethylene.

The low-density polyethylene (C) tends to be excellent in stretchability because it usually contains a larger amount of amorphous components than high-density polyethylene. In addition, since the low-density polyethylene (C) is a polymer that is less likely to be oriented by a stretching treatment than high-density polyethylene, its effect on thermal shape stability tends to be small. Therefore, the broadness or narrowness of the molecular weight distribution of the low-density polyethylene (C) is not particularly limited.

The low-density polyethylene (C) may have a narrow molecular weight distribution in a differential molecular weight distribution curve obtained by high-temperature GPC measurement, from the viewpoint of further improvement of thermal shape stability.

The low-density polyethylene (C) may have a peak whose 1/4 width is less than 1.5 in a differential molecular weight distribution curve obtained by high-temperature GPC measurement. The 1/4 width at the peak of the low-density polyethylene (C) is preferably 1.47 or less, more preferably 1.43 or less, and particularly preferably 1.4 or less, and is preferably 0.8 or more, more preferably 1.0 or more, still more preferably 1.1 or more, and particularly preferably 1.2 or more; and the 1/4 width is, for example, 0.8 or more and less than 1.5.

In one embodiment, the difference (LogM₉₀ - LogM₁₀) between the 90th percentile value (LogM₉₀) and the 10th percentile value (LogM₁₀) of the differential molecular weight distribution of the low-density polyethylene (C) is preferably less than 1.25, more preferably 1.20 or less, still more preferably 1.15 or less, and particularly preferably 1.12 or less, and is preferably 0.70 or more, more preferably 0.80 or more, still more preferably 0.90 or more, and particularly preferably 0.95 or more; and the difference is, for example, 0.70 or more and less than 1.25.

In one embodiment, the maximum value of dW/d(LogM) at the peak whose 1/4 width is less than 1.5 of the low-density polyethylene (C) is, for example, 0.80 or more, preferably 0.85 or more, more preferably 0.90 or more, and particularly preferably 0.95 or more, and is preferably 1.30 or less, more preferably 1.25 or less, still more preferably 1.20 or less, and particularly preferably 1.10 or less; and the maximum value is, for example, from 0.80 to 1.30.

In one embodiment, the low-density polyethylene (C) may have a peak in which a maximum value of dW/d(LogM) is 0.80 or more and a half-width is less than 1.1 in the above differential molecular weight distribution curve, from the viewpoint of further improvement of thermal shape stability.

The maximum value of dW/d(LogM) at the peak of the low-density polyethylene (C) is preferably 0.80 or more, more preferably 0.85 or more, still more preferably 0.90 or more, and particularly preferably 0.95 or more, and is preferably 1.30 or less, more preferably 1.25 or less, still more preferably 1.20 or less, and particularly preferably 1.10 or less; and the maximum value is, for example, from 0.80 to 1.30.

The half-width at the peak of the low-density polyethylene (C) is preferably less than 1.1, more preferably 1.08 or less, still more preferably 1.06 or less, and particularly preferably 1.04 or less, and is preferably 0.66 or more, more preferably 0.68 or more, still more preferably 0.70 or more, and particularly preferably 0.72 or more, 0.74 or more, or 0.76 or more; and the half-width is, for example, 0.66 or more and less than 1.1.

The low-density polyethylene (C) may have a broad molecular weight distribution in a differential molecular weight distribution curve obtained by high-temperature GPC measurement, from the viewpoint of further improvement of stretchability and the like.

The low-density polyethylene (C) may have a peak whose 1/4 width is 1.5 or more in a differential molecular weight distribution curve obtained by high-temperature GPC measurement. The 1/4 width at the peak of the low-density polyethylene (C) is preferably 1.6 or more, and more preferably 1.65 or more, and is preferably 4.5 or less, more preferably 4.0 or less, still more preferably 3.5 or less, and particularly preferably 3.2 or less; and the 1/4 width is, for example, from 1.5 to 4.5.

In one embodiment, the difference (LogM₉₀ - LogM₁₀) between the 90th percentile value (LogM₉₀) and the 10th percentile value (LogM₁₀) of the differential molecular weight distribution of the low-density polyethylene (C) is preferably 1.25 or more, and more preferably 1.30 or more, and is preferably 4.00 or less, more preferably 3.50 or less, still more preferably 3.00 or less, even more preferably 2.50 or less, and particularly preferably 2.00 or less; and the difference is, for example, from 1.25 to 4.00.

In one embodiment, the maximum value of dW/d(LogM) at the peak whose 1/4 width is 1.5 or more of the low-density polyethylene (C) is, for example, less than 0.80, preferably 0.79 or less, and more preferably 0.78 or less, and is preferably 0.20 or more, more preferably 0.25 or more, still more preferably 0.30 or more, and particularly preferably 0.35 or more; and the maximum value is, for example, 0.20 or more and less than 0.80.

The intermediate layer may contain two or more kinds of low-density polyethylenes (C). In the case of a mixture of two or more kinds of low-density polyethylenes (C), it is preferable that the above differential molecular weight distribution curve of the mixture has a peak satisfying the requirement of the 1/4 width (preferably further satisfying the requirement of the maximum value of dW/d(LogM)), and it is preferable that the above differential molecular weight distribution of the mixture satisfies the requirement of the above difference, or it is preferable that the above differential molecular weight distribution curve of the mixture has a peak satisfying the requirements of the maximum value of dW/d(LogM) and the half-width.

The low-density polyethylene (C) may have a differential molecular weight distribution curve having unimodality, or may have a differential molecular weight distribution curve having multimodality such as bimodality.

The weight-average molecular weight (Mw) of the low-density polyethylene (C) is preferably 0.50 × 10⁵ or more, more preferably 1.00 × 10⁵ or more, still more preferably 1.50 ×10⁵ or more, and particularly preferably 1.80 × 10⁵ or more, and is preferably 6.00 × 10⁵ or less, more preferably 5.00 × 10⁵ or less, still more preferably 4.00 × 10⁵ or less, even more preferably 3.50 × 10⁵ or less, and particularly preferably 3.00 × 10⁵ or less; and the Mw is, for example, from 0.50 × 10⁵ to 6.00 × 10⁵.

The density of the low-density polyethylene (C) is preferably 0.920 g/cm³ or less, more preferably 0.915 g/cm³ or less, and still more preferably 0.910 g/cm³ or less. The low-density polyethylene (C) having such a density contributes to, for example, the improvement of the stretchability of the multilayer film and the impact resistance (for example, puncture resistance) of the stretched film. The density of the low-density polyethylene (C) is preferably 0.860 g/cm³ or more, and more preferably 0.900 g/cm³ or more. The density is, for example, from 0.860 g/cm³ to 0.920 g/cm³.

The melting point of the low-density polyethylene (C) is preferably less than 130°C, more preferably less than 125°C, and still more preferably less than 120°C, and particularly preferably in one embodiment, may be less than 115°C, may be less than 110°C, may be 105°C or lower, or may be 100°C or lower. The melting point of the low-density polyethylene (C) is preferably 70°C or higher, more preferably 80°C or higher, and still more preferably 85°C or higher. The melting point is, for example, 70°C or higher and less than 130°C.

The stretched film of a film comprising a PE intermediate layer containing the low-density polyethylene (C) having a low melting point tends to be more excellent in thermal shape stability. It is presumed that this is because the low-density polyethylene (C) having a low melting point is melted or softened by heating during the stretching treatment of the film, and orientation due to the stretching treatment is suppressed.

The multilayer film may comprise an intermediate layer containing medium-density polyethylene as a main component.

The medium-density polyethylene may have a narrow molecular weight distribution in a differential molecular weight distribution curve obtained by high-temperature GPC measurement, from the viewpoint of further improvement of thermal shape stability.

The medium-density polyethylene may have a peak whose 1/4 width is less than 1.5 in a differential molecular weight distribution curve obtained by high-temperature GPC measurement. The 1/4 width at the peak of the medium-density polyethylene is preferably 1.47 or less, more preferably 1.43 or less, and particularly preferably 1.4 or less, and is preferably 0.8 or more, more preferably 1.0 or more, still more preferably 1.1 or more, and particularly preferably 1.2 or more; and the 1/4 width is, for example, 0.8 or more and less than 1.5.

In one embodiment, the difference (LogM₉₀ - LogM₁₀) between the 90th percentile value (LogM₉₀) and the 10th percentile value (LogM₁₀) of the differential molecular weight distribution of the medium-density polyethylene is preferably less than 1.25, more preferably 1.20 or less, still more preferably 1.15 or less, and particularly preferably 1.12 or less, and is preferably 0.70 or more, more preferably 0.80 or more, still more preferably 0.90 or more, and particularly preferably 0.95 or more; and the difference is, for example, 0.70 or more and less than 1.25.

In one embodiment, the maximum value of dW/d(LogM) at the peak whose 1/4 width is less than 1.5 of the medium-density polyethylene is, for example, 0.80 or more, preferably 0.85 or more, more preferably 0.90 or more, and particularly preferably 0.95 or more, and is preferably 1.30 or less, more preferably 1.25 or less, still more preferably 1.20 or less, and particularly preferably 1.10 or less; and the maximum value is, for example, from 0.80 to 1.30.

The medium-density polyethylene may have a broad molecular weight distribution in a differential molecular weight distribution curve obtained by high-temperature GPC measurement, from the viewpoint of further improvement of stretchability and the like.

The medium-density polyethylene may have a peak whose 1/4 width is 1.5 or more in a differential molecular weight distribution curve obtained by high-temperature GPC measurement. The 1/4 width at the peak of the medium-density polyethylene is preferably 1.6 or more, and more preferably 1.65 or more, and is preferably 4.5 or less, more preferably 4.0 or less, still more preferably 3.5 or less, and particularly preferably 3.2 or less; and the 1/4 width is, for example, from 1.5 to 4.5.

In one embodiment, the difference (LogM90 - LogM10) between the 90th percentile value (LogM90) and the 10th percentile value (LogM10) of the differential molecular weight distribution of the medium-density polyethylene is preferably 1.25 or more, and more preferably 1.30 or more, and is preferably 4.00 or less, more preferably 3.50 or less, still more preferably 3.00 or less, even more preferably 2.50 or less, and particularly preferably 2.00 or less; and the difference is, for example, from 1.25 to 4.00.

In one embodiment, the maximum value of dW/d(LogM) at the peak whose 1/4 width is 1.5 or more of the medium-density polyethylene is, for example, less than 0.80, preferably 0.79 or less, and more preferably 0.78 or less, and is preferably 0.20 or more, more preferably 0.25 or more, still more preferably 0.30 or more, and particularly preferably 0.35 or more; and the maximum value is, for example, 0.20 or more and less than 0.80.

The intermediate layer may contain two or more kinds of medium-density polyethylenes. In the case of a mixture of two or more kinds of medium-density polyethylenes, it is preferable that the above differential molecular weight distribution curve of the mixture has a peak satisfying the requirement of the 1/4 width (preferably further satisfying the requirement of the maximum value of dW/d(LogM)), and it is preferable that the above differential molecular weight distribution of the mixture satisfies the requirement of the above difference.

The medium-density polyethylene may have a differential molecular weight distribution curve having unimodality, or may have a differential molecular weight distribution curve having multimodality such as bimodality.

The weight-average molecular weight (Mw) of the medium-density polyethylene is preferably 0.50 × 10⁵ or more, more preferably 1.00 × 10⁵ or more, still more preferably 1.50 × 10⁵ or more, and particularly preferably 1.80 × 10⁵ or more, and is preferably 6.00 × 10⁵ or less, more preferably 5.00 × 10⁵ or less, still more preferably 4.00 × 10⁵ or less, even more preferably 3.50 × 10⁵ or less, and particularly preferably 3.00 × 10⁵ or less; and the Mw is, for example, from 0.50 × 10⁵ to 6.00 × 10⁵.

In a multilayer film corresponding to a stretched film of a second embodiment described later, the PE intermediate layer may be, for example, an intermediate layer containing high-density polyethylene (A) or (B) (preferably high-density polyethylene (A)) as a main component, and further containing at least one selected from the group consisting of low-density polyethylene (C) and medium-density polyethylene (preferably low-density polyethylene (C)) as other polyethylene.

In the multilayer film corresponding to the stretched film of the second embodiment described later, the PE intermediate layer may be, for example, an intermediate layer containing medium-density polyethylene as a main component, and further containing at least one selected from the group consisting of low-density polyethylene (C), high-density polyethylene (A), and high-density polyethylene (B) (preferably low-density polyethylene (C)) as other polyethylene.

In the multilayer film corresponding to the stretched film of the second embodiment described later, the PE intermediate layer may be, for example, an intermediate layer containing high-density polyethylene (A) as a main component, and further containing high-density polyethylene (B) as other polyethylene.

In these cases, the content ratio of the main component in the PE intermediate layer is preferably from 50% by mass to 90% by mass, and more preferably from 55% by mass to 85% by mass; and the content ratio of the other polyethylene is preferably from 10% by mass to 50% by mass, and more preferably from 15% by mass to 45% by mass.

In one embodiment, the content ratio of the main component in the PE intermediate layer in the multilayer film is preferably 80% by mass or more, more preferably 85% by mass or more, still more preferably 90% by mass or more, even more preferably 95% by mass or more, and particularly preferably 98% by mass or more.

In one embodiment, the content ratio of the high-density polyethylene (A) in the intermediate layer (A) is preferably 80% by mass or more, more preferably 85% by mass or more, still more preferably 90% by mass or more, even more preferably 95% by mass or more, and particularly preferably 98% by mass or more, from the viewpoint of heat resistance.

The PE intermediate layer may contain a polyethylene other than the above main component.

The PE intermediate layer may contain the resin material described above other than polyethylene.

The PE intermediate layer may contain the additives described above.

The thickness of the PE intermediate layer in the stretched film is preferably 4 µm or more, more preferably 8 µm or more, still more preferably 10 µm or more, and particularly preferably 12 µm or more, and is preferably 150 µm or less, more preferably 80 µm or less, still more preferably 40 µm or less, and particularly preferably 25 µm or less; and the thickness is, for example, from 4 µm to 150 µm. A stretched film comprising a PE intermediate layer having a thickness of the lower limit or more is, for example, excellent in strength, rigidity, heat resistance, and recyclability. A stretched film comprising a PE intermediate layer having a thickness of the upper limit or less is, for example, excellent in processability. When the stretched film comprises two or more PE intermediate layers, the above "thickness of the PE intermediate layer" means the total thickness of the respective PE intermediate layers.

The total thickness of the second layer and the PE intermediate layer in the stretched film may be, for example, from 10% or more to 95% or less, from 15% or more to 95% or less, or from 20% or more to 95% or less, preferably from 25% or more to 95% or less, more preferably from 28% or more to 92% or less, still more preferably from 30% or more to 92% or less, and particularly preferably from 50% or more to 90% or less, with respect to the thickness of the stretched film, from the viewpoint of heat resistance. When the stretched film comprises two or more PE intermediate layers, the thickness of the PE intermediate layer means the total thickness of the respective PE intermediate layers. Similarly, the total thickness of the second layer and the PE intermediate layer in the multilayer film may be, for example, from 10% or more to 95% or less, from 15% or more to 95% or less, or from 20% or more to 95% or less, preferably from 25% or more to 95% or less, more preferably from 28% or more to 92% or less, still more preferably from 30% or more to 92% or less, and particularly preferably from 50% or more to 90% or less, with respect to the thickness of the multilayer film, from the viewpoint of heat resistance.

The thickness of the PE intermediate layer in the stretched film is preferably 20% or more, more preferably 30% or more, still more preferably 34% or more, and particularly preferably 40% or more, and is preferably 90% or less, more preferably 84% or less, and still more preferably 80% or less, with respect to the thickness of the stretched film; and the thickness is, for example, from 20% to 90%. When the stretched film comprises two or more PE intermediate layers, the above "thickness of the PE intermediate layer" means the total thickness of the respective PE intermediate layers. Similarly, the thickness of the PE intermediate layer in the multilayer film is preferably 20% or more, more preferably 30% or more, still more preferably 34% or more, and particularly preferably 40% or more, and is preferably 90% or less, more preferably 84% or less, and still more preferably 80% or less, with respect to the thickness of the multilayer film; and the thickness is, for example, from 20% or more to 90% or less.

Hereinafter, multilayer films having various layer configurations will be exemplified. In the following examples, when polyethylenes having the same symbol are contained in each of two or more layers, the polyethylenes may be the same polyethylene or may be different polyethylenes.

In one embodiment, the multilayer film comprises at least:
a first layer;
a PE intermediate layer; and
a second layer,
in this order in a laminating direction.

In one embodiment, the multilayer film is a three-layer coextruded film.

In one embodiment, the multilayer film is a film (hereinafter also referred to as "film α1") comprising:
a first layer containing the high-density polyethylene (A) as a main component;
the intermediate layer containing the low-density polyethylene (C) as a main component; and
a second layer containing the high-density polyethylene (B) as a main component.

In one embodiment, the film α1 is a three-layer coextruded film. The film α1 is excellent in stretchability because the intermediate layer and the second layer impart stretchability. The stretched film of the film α1 is excellent in heat resistance because the first layer suppresses heat deformation such as thermal shrinkage.

In one embodiment, the multilayer film is a film (hereinafter also referred to as "film α2") comprising:
a first layer containing the high-density polyethylene (A) as a main component;
the intermediate layer containing medium-density polyethylene as a main component; and
a second layer containing the high-density polyethylene (B) as a main component.

In one embodiment, the film α2 is a three-layer coextruded film. The film α2 is excellent in stretchability because the second layer imparts stretchability. The stretched film of the film α2 is excellent in heat resistance because the first layer suppresses heat deformation such as thermal shrinkage.

In one embodiment, the multilayer film is a film (hereinafter also referred to as "film α3") comprising:
a first layer containing the high-density polyethylene (A) as a main component;
the intermediate layer containing the low-density polyethylene (C) as a main component; and
a second layer containing medium-density polyethylene as a main component.

In one embodiment, the film α3 is a three-layer coextruded film. The film α3 is excellent in stretchability because the intermediate layer imparts stretchability. The stretched film of the film α3 is excellent in heat resistance because the first layer suppresses heat deformation such as thermal shrinkage.

In one embodiment, the multilayer film is a film (hereinafter also referred to as "film α4") comprising:
a first layer containing the high-density polyethylene (A) as a main component;
the intermediate layer containing medium-density polyethylene as a main component; and
a second layer containing medium-density polyethylene as a main component.

In one embodiment, the film α4 is a three-layer coextruded film. The stretched film of the film α4 is excellent in heat resistance because the first layer suppresses heat deformation such as thermal shrinkage.

In one embodiment, the multilayer film is a film (hereinafter also referred to as "film α5") comprising:
a first layer containing the high-density polyethylene (A) as a main component;
the intermediate layer containing the low-density polyethylene (C) as a main component; and
a second layer containing the low-density polyethylene (C) as a main component.

In one embodiment, the film α5 is a three-layer coextruded film. The film α5 is excellent in stretchability because the second layer and the intermediate layer impart stretchability. The stretched film of the film α5 is excellent in heat resistance because the first layer suppresses heat deformation such as thermal shrinkage.

In one embodiment, the multilayer film is a film (hereinafter also referred to as "film β1") comprising:
a first layer containing the high-density polyethylene (A) as a main component;
the intermediate layer containing the high-density polyethylene (B) as a main component; and
a second layer containing the high-density polyethylene (A) as a main component.

In one embodiment, the film β1 is a three-layer coextruded film. The film β1 is excellent in stretchability because the intermediate layer imparts stretchability. The stretched film of the film β1 is excellent in heat resistance because the first and second layers suppress heat deformation such as thermal shrinkage.

In one embodiment, the multilayer film is a film (hereinafter also referred to as "film β2") comprising:
a first layer containing the high-density polyethylene (A) as a main component;
the intermediate layer containing the high-density polyethylene (A) as a main component; and
a second layer containing the high-density polyethylene (A) as a main component.

In one embodiment, the film β2 is a three-layer coextruded film. The stretched film of the film β2 is excellent in heat resistance because each of the above layers suppresses heat deformation such as thermal shrinkage.

In one embodiment, the multilayer film is a film (hereinafter also referred to as "film β3") comprising:
a first layer containing the high-density polyethylene (A) as a main component;
the intermediate layer containing the low-density polyethylene (C) as a main component; and
a second layer containing the high-density polyethylene (A) as a main component.

In one embodiment, the film β3 is a three-layer coextruded film. The film β3 is excellent in stretchability because the intermediate layer imparts stretchability. The stretched film of the film β3 is excellent in heat resistance because the first and second layers suppress heat deformation such as thermal shrinkage.

In one embodiment, the multilayer film is a film (hereinafter also referred to as "film β4") comprising:
a first layer containing the high-density polyethylene (A) as a main component;
the intermediate layer containing medium-density polyethylene as a main component; and
a second layer containing the high-density polyethylene (A) as a main component.

In one embodiment, the film β4 is a three-layer coextruded film. The stretched film of the film β4 is excellent in heat resistance because the first and second layers suppress heat deformation such as thermal shrinkage.

In one embodiment, at least one layer selected from the group consisting of the first layer, the PE intermediate layer, and the second layer in the multilayer film is the layer (1_{AB}). The first layer and the second layer may each independently be the layer (1_{AB}). The PE intermediate layer may be the layer (1_{AB}). In one embodiment, the multilayer film is a three-layer coextruded film. The stretched film of the multilayer film is excellent in heat resistance because the layer (1_{AB}) suppresses heat deformation such as thermal shrinkage. The multilayer film is also excellent in stretchability.

In one embodiment, the multilayer film comprises at least:
a first layer;
a first PE intermediate layer;
a second PE intermediate layer;
a third PE intermediate layer; and
a second layer,
in this order in a laminating direction.

In one embodiment, the multilayer film is a five-layer coextruded film.

The thicknesses of the first and third PE intermediate layers are each independently preferably 5% or more, more preferably 10% or more, still more preferably 15% or more, and particularly preferably 20% or more, and are preferably 40% or less, more preferably 35% or less, still more preferably 30% or less, and particularly preferably 25% or less, with respect to the total thickness of the PE intermediate layers; and the thicknesses are, for example, from 5% to 40%.

The thickness of the second PE intermediate layer is preferably 20% or more, more preferably 30% or more, still more preferably 40% or more, and particularly preferably 50% or more, and is preferably 90% or less, more preferably 80% or less, still more preferably 70% or less, and particularly preferably 60% or less, with respect to the total thickness of the PE intermediate layers; and the thickness is, for example, from 20% to 90%.

The ratio of the thickness of the first PE intermediate layer to the thickness of the third PE intermediate layer is, from the viewpoint of the symmetry of the film and suppressing the occurrence of curling, preferably from 0.6 to 1.4, more preferably from 0.7 to 1.3, still more preferably from 0.8 to 1.2, and particularly preferably from 0.9 to 1.1.

In one embodiment, the multilayer film is a film (hereinafter also referred to as "film γ") comprising:
a first layer containing the high-density polyethylene (A) as a main component;
a first PE intermediate layer which is the intermediate layer containing the high-density polyethylene (B) as a main component;
a second PE intermediate layer which is the intermediate layer containing polyethylene as a main component;
a third PE intermediate layer which is the intermediate layer containing the high-density polyethylene (B) as a main component; and
a second layer containing the high-density polyethylene (A) as a main component.

In one embodiment, the film γ is a five-layer coextruded film. The film γ is excellent in stretchability because the first and third PE intermediate layers (also the second PE intermediate layer when the second PE intermediate layer contains the low-density polyethylene (C) as a main component) impart stretchability. The stretched film of the film γ is excellent in heat resistance because the first and second layers suppress heat deformation such as thermal shrinkage, and is excellent in puncture resistance because the second PE intermediate layer is present when the second PE intermediate layer contains the low-density polyethylene (C) as a main component.

In the film γ, the high-density polyethylene (B) contained in the first PE intermediate layer may be the same polyethylene as the high-density polyethylene (B) contained in the third PE intermediate layer, or may be a different polyethylene.

In the film γ, the first PE intermediate layer may further contain the low-density polyethylene (C), and the third PE intermediate layer may further contain the low-density polyethylene (C). In this case, the low-density polyethylene (C) contained in the first PE intermediate layer may be the same polyethylene as the low-density polyethylene (C) contained in the third PE intermediate layer, or may be a different polyethylene. In this case, the contents of the low-density polyethylene (C) in the first PE intermediate layer and the third PE intermediate layer are each independently preferably from 2% by mass to 50% by mass, more preferably from 5% by mass to 50% by mass, and still more preferably from 10% by mass to 50% by mass, and the contents of the high-density polyethylene (B) are each independently preferably from 50% by mass to 98% by mass, more preferably from 50% by mass to 95% by mass, and still more preferably from 50% by mass to 90% by mass.

Examples of the polyethylene contained in the second PE intermediate layer of the film γ include high-density polyethylene, medium-density polyethylene, linear low-density polyethylene, high-pressure low-density polyethylene, ethylene-vinyl acetate copolymers, and ethylene-(meth)acrylic acid ester copolymers. Among these, at least one selected from the group consisting of high-density polyethylene, medium-density polyethylene, linear low-density polyethylene, and high-pressure low-density polyethylene is preferable.

The second PE intermediate layer of the film γ may contain the low-density polyethylene (C) as a main component. The multilayer film of one embodiment comprising the PE intermediate layer containing the low-density polyethylene (C) as a main component in addition to the first and second layers containing the high-density polyethylene (A) as a main component can not only suppress heat deformation such as thermal shrinkage after a stretching treatment, but is also excellent in stretchability itself, and is also excellent in puncture resistance after the stretching treatment. It is presumed that this is because linear low-density polyethylene and high-pressure low-density polyethylene usually contain a larger amount of amorphous components than high-density polyethylene, and thus are more excellent in stretchability and more excellent in puncture resistance.

In one embodiment, the film γ is a multilayer film (hereinafter also referred to as "film γ1") comprising at least:
a first layer containing the high-density polyethylene (A) as a main component;
a first PE intermediate layer containing the high-density polyethylene (B) as a main component;
a second PE intermediate layer containing the low-density polyethylene (C) as a main component;
a third PE intermediate layer containing the high-density polyethylene (B) as a main component; and
a second layer containing the high-density polyethylene (A) as a main component,
in this order in a laminating direction.

In one embodiment, the film γ1 is a five-layer coextruded film. The film γ1 is excellent in stretchability because the first to third PE intermediate layers impart stretchability. The stretched film of the film γ1 is excellent in heat resistance because the first and second layers suppress heat deformation such as thermal shrinkage, and is excellent in puncture resistance because the second intermediate layer is present.

In the film γ1, the content of the high-density polyethylene (B) in the first PE intermediate layer is preferably 80% by mass or more, more preferably 85% by mass or more, still more preferably 90% by mass or more, even more preferably 95% by mass or more, and particularly preferably 98% by mass or more, from the viewpoint of stretchability and the like.

In the film γ1, the content of the high-density polyethylene (B) in the third PE intermediate layer is preferably 80% by mass or more, more preferably 85% by mass or more, still more preferably 90% by mass or more, even more preferably 95% by mass or more, and particularly preferably 98% by mass or more, from the viewpoint of stretchability and the like.

In the film γ1, the content of the low-density polyethylene (C) in the second PE intermediate layer is preferably 80% by mass or more, more preferably 85% by mass or more, still more preferably 90% by mass or more, even more preferably 95% by mass or more, and particularly preferably 98% by mass or more, from the viewpoint of stretchability and the like.

In one embodiment, the film γ is a multilayer film (hereinafter also referred to as "film γ2") comprising at least:
a first layer containing the high-density polyethylene (A) as a main component;
a first PE intermediate layer containing the high-density polyethylene (B) as a main component and containing the low-density polyethylene (C);
a second PE intermediate layer containing the low-density polyethylene (C) as a main component;
a third PE intermediate layer containing the high-density polyethylene (B) as a main component and containing the low-density polyethylene (C); and
a second layer containing the high-density polyethylene (A) as a main component,
in this order in a laminating direction.

In one embodiment, the film γ2 is a five-layer coextruded film. The film γ2 is excellent in stretchability because the first to third PE intermediate layers impart stretchability. The stretched film of the film γ2 is excellent in heat resistance because the first and second layers suppress heat deformation such as thermal shrinkage, and is excellent in puncture resistance because the second PE intermediate layer is present.

In the film γ2, the low-density polyethylenes (C) contained in the first PE intermediate layer, the second PE intermediate layer, and the third PE intermediate layer may be the same polyethylene as each other, or may be different polyethylenes.

In the film γ2, the contents of the high-density polyethylene (B) in the first PE intermediate layer and the third PE intermediate layer are each independently preferably from 50% by mass to 98% by mass, more preferably from 50% by mass to 95% by mass, still more preferably from 60% by mass to 95% by mass, and particularly preferably from 65% by mass to 90% by mass.

In the film γ2, the contents of the low-density polyethylene (C) in the first PE intermediate layer and the third PE intermediate layer are each independently preferably from 2% by mass to 50% by mass, more preferably from 5% by mass to 50% by mass, still more preferably from 5% by mass to 40% by mass, and particularly preferably from 10% by mass to 35% by mass.

In such a case, a film is obtained which is excellent in stretchability while being excellent in heat resistance due to the presence of the high-density polyethylene (B) having a broad molecular weight distribution, and which is excellent in stretchability, impact resistance, puncture resistance, and transparency due to the presence of the low-density polyethylene (C). Therefore, a film is obtained which is excellent in heat resistance as a whole, and is excellent in stretchability, impact resistance, and puncture resistance.

In the film γ2, the content of the low-density polyethylene (C) in the second PE intermediate layer is preferably 80% by mass or more, more preferably 85% by mass or more, still more preferably 90% by mass or more, even more preferably 95% by mass or more, and particularly preferably 98% by mass or more, from the viewpoint of stretchability and the like.

In one embodiment, the multilayer film is a film (hereinafter also referred to as "film δ") comprising:
a first layer containing the high-density polyethylene (A) as a main component;
a first PE intermediate layer which is the intermediate layer containing the high-density polyethylene (A) as a main component;
a second PE intermediate layer which is the intermediate layer containing polyethylene as a main component;
a third PE intermediate layer which is the intermediate layer containing the high-density polyethylene (A) as a main component; and
a second layer containing the high-density polyethylene (A) as a main component.

In one embodiment, the film δ is a five-layer coextruded film. The film δ is excellent in stretchability because the second PE intermediate layer imparts stretchability when the second PE intermediate layer contains the low-density polyethylene (C) as a main component. The stretched film of the film δ is excellent in heat resistance because the first and second layers, and the first PE intermediate layer and the third PE intermediate layer suppress heat deformation such as thermal shrinkage, and is excellent in puncture resistance because the second PE intermediate layer is present when the second PE intermediate layer contains the low-density polyethylene (C) as a main component.

In the film δ, the high-density polyethylene (A) contained in the first PE intermediate layer may be the same polyethylene as the high-density polyethylene (A) contained in the third PE intermediate layer, or may be a different polyethylene.

In the film δ, the first PE intermediate layer may further contain the low-density polyethylene (C), and the third PE intermediate layer may further contain the low-density polyethylene (C). In this case, the low-density polyethylene (C) contained in the first PE intermediate layer may be the same polyethylene as the low-density polyethylene (C) contained in the third PE intermediate layer, or may be a different polyethylene. In this case, the contents of the low-density polyethylene (C) in the first PE intermediate layer and the third PE intermediate layer are each independently preferably from 2% by mass to 50% by mass, more preferably from 5% by mass to 50% by mass, and still more preferably from 10% by mass to 50% by mass, and the contents of the high-density polyethylene (A) are each independently preferably from 50% by mass to 98% by mass, more preferably from 50% by mass to 95% by mass, and still more preferably from 50% by mass to 90% by mass.

Examples of the polyethylene contained in the second PE intermediate layer of the film δ include high-density polyethylene, medium-density polyethylene, linear low-density polyethylene, high-pressure low-density polyethylene, ethylene-vinyl acetate copolymers, and ethylene-(meth)acrylic acid ester copolymers. Among these, at least one selected from the group consisting of high-density polyethylene, medium-density polyethylene, linear low-density polyethylene, and high-pressure low-density polyethylene is preferable.

The second PE intermediate layer of the film δ may contain the low-density polyethylene (C) as a main component. The multilayer film of one embodiment comprising the PE intermediate layer containing the low-density polyethylene (C) as a main component in addition to the first and second layers, and the first and third PE intermediate layers containing the high-density polyethylene (A) as a main component can not only suppress heat deformation such as thermal shrinkage after a stretching treatment, but is also excellent in stretchability itself, and is also excellent in puncture resistance after the stretching treatment. It is presumed that this is because linear low-density polyethylene and high-pressure low-density polyethylene usually contain a larger amount of amorphous components than high-density polyethylene, and thus are more excellent in stretchability and more excellent in puncture resistance.

In one embodiment, the film δ is a multilayer film (hereinafter also referred to as "film δ1") comprising at least:
a first layer containing the high-density polyethylene (A) as a main component;
a first PE intermediate layer containing the high-density polyethylene (A) as a main component and containing the low-density polyethylene (C);
a second PE intermediate layer containing the low-density polyethylene (C) as a main component;
a third PE intermediate layer containing the high-density polyethylene (A) as a main component and containing the low-density polyethylene (C); and
a second layer containing the high-density polyethylene (A) as a main component,
in this order in a laminating direction.

In one embodiment, the film δ1 is a five-layer coextruded film. The film δ1 is excellent in stretchability because the first to third PE intermediate layers impart stretchability. The stretched film of the film δ1 is excellent in heat resistance because the first and second layers, and the first and third PE intermediate layers suppress heat deformation such as thermal shrinkage, and is excellent in puncture resistance because the second PE intermediate layer is present.

The high-density polyethylenes (A) contained in the first layer, the first PE intermediate layer, the third PE intermediate layer, and the second layer may be the same polyethylene as each other, or may be different polyethylenes. The low-density polyethylenes (C) contained in the first PE intermediate layer, the second PE intermediate layer, and the third PE intermediate layer may be the same polyethylene as each other, or may be different polyethylenes.

In the film δ1, the contents of the high-density polyethylene (A) in the first PE intermediate layer and the third PE intermediate layer are each independently preferably from 50% by mass to 98% by mass, more preferably from 50% by mass to 95% by mass, still more preferably from 60% by mass to 95% by mass, and particularly preferably from 65% by mass to 90% by mass.

In the film δ1, the contents of the low-density polyethylene (C) in the first PE intermediate layer and the third PE intermediate layer are each independently preferably from 2% by mass to 50% by mass, more preferably from 5% by mass to 50% by mass, still more preferably from 5% by mass to 40% by mass, and particularly preferably from 10% by mass to 35% by mass.

In such a case, a film is obtained which is excellent in heat resistance due to the presence of the high-density polyethylene (A) having a narrow molecular weight distribution, and which is excellent in stretchability, impact resistance, puncture resistance, and transparency due to the presence of the low-density polyethylene (C). Therefore, a film is obtained which is excellent in heat resistance as a whole, and is excellent in stretchability, impact resistance, and puncture resistance.

In the film δ1, the content of the low-density polyethylene (C) in the second PE intermediate layer is preferably 80% by mass or more, more preferably 85% by mass or more, still more preferably 90% by mass or more, even more preferably 95% by mass or more, and particularly preferably 98% by mass or more, from the viewpoint of stretchability and the like.

The thickness of the first layer in the stretched films of the films γ and δ is, from the viewpoint of heat resistance, preferably from 5% to 50%, more preferably from 5% to 35%, still more preferably from 8% to 33%, and particularly preferably from 10% to 30%, and may be from 20% to 30%, with respect to the thickness of the stretched film. It is preferable that the thickness of the first layer in the films γ and δ with respect to the thickness of the films γ and δ is also in the same range.

The thickness of the first PE intermediate layer in the stretched films of the films γ and δ is, from the viewpoint of stretchability, puncture resistance (one embodiment), and heat resistance, preferably from 5% to 35%, more preferably from 8% to 33%, and still more preferably from 10% to 30%, and may be from 10% to 20%, with respect to the thickness of the stretched film. It is preferable that the thickness of the first PE intermediate layer in the films γ and δ with respect to the thickness of the films γ and δ is also in the same range.

The thickness of the second PE intermediate layer in the stretched films of the films γ and δ is, from the viewpoint of stretchability and puncture resistance, preferably from 10% to 80%, more preferably from 15% to 68%, and still more preferably from 20% to 60%, and may be from 20% to 50% or from 20% to 40%, with respect to the thickness of the stretched film. It is preferable that the thickness of the second PE intermediate layer in the films γ and δ with respect to the thickness of the films γ and δ is also in the same range.

The thickness of the third PE intermediate layer in the stretched films of the films γ and δ is, from the viewpoint of stretchability, puncture resistance (one embodiment), and heat resistance, preferably from 5% to 35%, more preferably from 8% to 33%, and still more preferably from 10% to 30%, and may be from 10% to 20%, with respect to the thickness of the stretched film. It is preferable that the thickness of the third PE intermediate layer in the films γ and δ with respect to the thickness of the films γ and δ is also in the same range.

The thickness of the second layer in the stretched films of the films γ and δ is, from the viewpoint of heat resistance, preferably from 5% to 50%, more preferably from 5% to 35%, still more preferably from 8% to 33%, and particularly preferably from 10% to 30%, and may be from 20% to 30%, with respect to the thickness of the stretched film. It is preferable that the thickness of the second layer in the films γ and δ with respect to the thickness of the films γ and δ is also in the same range.

In one embodiment, the multilayer film is a film (hereinafter also referred to as "film ε") comprising:
a first layer containing the high-density polyethylene (A) as a main component;
a first PE intermediate layer which is the intermediate layer containing the low-density polyethylene (C) as a main component;
a second PE intermediate layer which is the intermediate layer containing the high-density polyethylene (B) as a main component;
a third PE intermediate layer which is the intermediate layer containing the low-density polyethylene (C) as a main component; and
a second layer containing the high-density polyethylene (A) as a main component.

In one embodiment, the film ε is a five-layer coextruded film. The film ε is excellent in stretchability because the first to third PE intermediate layers impart stretchability. The stretched film of the film ε is excellent in heat resistance because the first and second layers suppress heat deformation such as thermal shrinkage, and is excellent in puncture resistance because the first and third PE intermediate layers are present.

A case where a three-material five-layer machine is used as an inflation molding machine will be described. The inflation molding machine may have specifications in which the screw diameters of the second layer and the fourth layer are small. When high-density polyethylene is fed to the second layer and the fourth layer of such an inflation molding machine, the resin pressure tends to be higher than when high-density polyethylene is fed to the first layer, the third layer, and the fifth layer, and a load tends to be applied to the molding machine. Therefore, it is preferable to feed linear low-density polyethylene and/or high-pressure low-density polyethylene to the second layer and the fourth layer of the inflation molding machine. That is, the film having the above laminated structure is also preferable from the viewpoint that the machine load in the manufacturing process can be reduced.

The multilayer film of one embodiment comprising the PE intermediate layer containing the low-density polyethylene (C) as a main component in addition to the first and second layers containing the high-density polyethylene (A) as a main component can not only suppress heat deformation such as thermal shrinkage after a stretching treatment, but is also excellent in stretchability itself, and is also excellent in puncture resistance after the stretching treatment. It is presumed that this is because linear low-density polyethylene and high-pressure low-density polyethylene usually contain a larger amount of amorphous components than high-density polyethylene, and thus are more excellent in stretchability and more excellent in puncture resistance.

In the film ε, the low-density polyethylene (C) contained in the first PE intermediate layer may be the same polyethylene as the low-density polyethylene (C) contained in the third PE intermediate layer, or may be a different polyethylene.

The thickness of the first layer in the stretched film of the film ε is, from the viewpoint of heat resistance, preferably from 5% to 50%, more preferably from 5% to 35%, still more preferably from 8% to 33%, and particularly preferably from 10% to 30%, with respect to the thickness of the stretched film. It is preferable that the thickness of the first layer in the film ε with respect to the thickness of the film ε is also in the same range.

The thickness of the first PE intermediate layer in the stretched film of the film ε is, from the viewpoint of stretchability and puncture resistance, preferably from 5% to 35%, more preferably from 8% to 33%, and still more preferably from 10% to 30%, with respect to the thickness of the stretched film. It is preferable that the thickness of the first PE intermediate layer in the film ε with respect to the thickness of the film ε is also in the same range.

The thickness of the second PE intermediate layer in the stretched film of the film ε is, from the viewpoint of stretchability and heat resistance, preferably from 10% to 70%, more preferably from 15% to 60%, and still more preferably from 20% to 50%, with respect to the thickness of the stretched film. It is preferable that the thickness of the second PE intermediate layer in the film ε with respect to the thickness of the film ε is also in the same range.

The thickness of the third PE intermediate layer in the stretched film of the film ε is, from the viewpoint of stretchability and puncture resistance, preferably from 5% to 35%, more preferably from 8% to 33%, and still more preferably from 10% to 30%, with respect to the thickness of the stretched film. It is preferable that the thickness of the third PE intermediate layer in the film ε with respect to the thickness of the film ε is also in the same range.

The thickness of the second layer in the stretched film of the film ε is, from the viewpoint of heat resistance, preferably from 5% to 50%, more preferably from 5% to 35%, still more preferably from 8% to 33%, and particularly preferably from 10% to 30%, with respect to the thickness of the stretched film. It is preferable that the thickness of the second layer in the film ε with respect to the thickness of the film ε is also in the same range.

In one embodiment, the multilayer film comprises at least:
a first layer containing polyethylene as a main component;
an intermediate layer (A) containing the high-density polyethylene (A) as a main component; and
a second layer containing polyethylene as a main component,
in this order in a laminating direction.

In one embodiment, the multilayer film is a three-layer coextruded film.

In one embodiment, the multilayer film is a film (hereinafter also referred to as "film αm") comprising:
a first layer containing the high-density polyethylene (B) as a main component;
the intermediate layer containing the high-density polyethylene (A) as a main component; and
a second layer containing the high-density polyethylene (B) as a main component.

In one embodiment, the film αm is a three-layer coextruded film. The film αm is excellent in stretchability because the first layer and the second layer impart stretchability. The stretched film of the film αm is excellent in heat resistance because the intermediate layer suppresses heat deformation such as thermal shrinkage.

In the film αm, the high-density polyethylene (B) contained in the first layer may be the same polyethylene as the high-density polyethylene (B) contained in the second layer, or may be a different polyethylene.

In one embodiment, the multilayer film is a film (hereinafter also referred to as "film βm") comprising:
a first layer containing the high-density polyethylene (B) as a main component;
a first PE intermediate layer which is the intermediate layer (A);
a second PE intermediate layer which is the intermediate layer containing polyethylene as a main component;
a third PE intermediate layer which is the intermediate layer (A); and
a second layer containing the high-density polyethylene (B) as a main component.

In one embodiment, the film βm is a five-layer coextruded film. The film βm is excellent in stretchability because the first and second layers (also the second PE intermediate layer when the second PE intermediate layer contains the low-density polyethylene (C) or the high-density polyethylene (B) as a main component) impart stretchability. The stretched film of the film βm is excellent in heat resistance because the first and third PE intermediate layers (also the second PE intermediate layer when the second PE intermediate layer is the intermediate layer (A)) suppress heat deformation such as thermal shrinkage, and is excellent in puncture resistance because the second PE intermediate layer is present when the second PE intermediate layer contains the low-density polyethylene (C) as a main component.

In the film βm, the high-density polyethylene (A) contained in the first PE intermediate layer may be the same polyethylene as the high-density polyethylene (A) contained in the third PE intermediate layer, or may be a different polyethylene.

In the film βm, the high-density polyethylene (B) contained in the first layer may be the same polyethylene as the high-density polyethylene (B) contained in the second layer, or may be a different polyethylene. The first and second layers of the film βm may contain a polyethylene other than the high-density polyethylene (B) as a main component.

Examples of the polyethylene contained in the second PE intermediate layer of the film βm include high-density polyethylene, medium-density polyethylene, linear low-density polyethylene, high-pressure low-density polyethylene, ethylene-vinyl acetate copolymers, and ethylene-(meth)acrylic acid ester copolymers. Among these, at least one selected from the group consisting of high-density polyethylene, medium-density polyethylene, linear low-density polyethylene, and high-pressure low-density polyethylene is preferable.

The second PE intermediate layer of the film βm may be the intermediate layer (A). The multilayer film of one embodiment comprising the second PE intermediate layer containing the high-density polyethylene (A) as a main component in addition to the first PE intermediate layer and the third PE intermediate layer containing the high-density polyethylene (A) as a main component can further suppress heat deformation such as thermal shrinkage after a stretching treatment.

The second PE intermediate layer of the film βm may contain the high-density polyethylene (B) or medium-density polyethylene as a main component.

The second PE intermediate layer of the film βm may contain the low-density polyethylene (C) as a main component. The multilayer film of one embodiment comprising the second PE intermediate layer containing the low-density polyethylene (C) as a main component in addition to the first PE intermediate layer and the third PE intermediate layer containing the high-density polyethylene (A) as a main component can not only suppress heat deformation such as thermal shrinkage after a stretching treatment, but is also excellent in stretchability itself, and is also excellent in puncture resistance after the stretching treatment. It is presumed that this is because linear low-density polyethylene and high-pressure low-density polyethylene usually contain a larger amount of amorphous components than high-density polyethylene, and thus are more excellent in stretchability and more excellent in puncture resistance.

In one embodiment, the multilayer film is a film (hereinafter also referred to as "film γm") comprising:
a first layer containing the high-density polyethylene (B) as a main component;
a first PE intermediate layer which is the intermediate layer containing the low-density polyethylene (C) as a main component;
a second PE intermediate layer which is the intermediate layer (A);
a third PE intermediate layer which is the intermediate layer containing the low-density polyethylene (C) as a main component; and
a second layer containing the high-density polyethylene (B) as a main component.

In one embodiment, the film γm is a five-layer coextruded film. The film γm is excellent in stretchability because the first and second layers, and the first and third PE intermediate layers impart stretchability. The stretched film of the film γm is excellent in heat resistance because the second PE intermediate layer suppresses heat deformation such as thermal shrinkage, and is excellent in puncture resistance because the first and third PE intermediate layers are present.

A case where a three-material five-layer machine is used as an inflation molding machine will be described. The inflation molding machine may have specifications in which the screw diameters of the second layer and the fourth layer are small. When high-density polyethylene is fed to the second layer and the fourth layer of such an inflation molding machine, the resin pressure tends to be higher than when high-density polyethylene is fed to the first layer, the third layer, and the fifth layer, and a load tends to be applied to the molding machine. Therefore, it is preferable to feed linear low-density polyethylene and/or high-pressure low-density polyethylene to the second layer and the fourth layer of the inflation molding machine. That is, the film having the above laminated structure is also preferable from the viewpoint that the machine load in the manufacturing process can be reduced.

The multilayer film comprising the first and third PE intermediate layers containing the low-density polyethylene (C) as a main component in addition to the second PE intermediate layer containing the high-density polyethylene (A) as a main component can not only suppress heat deformation such as thermal shrinkage after a stretching treatment, but is also excellent in stretchability itself, and is also excellent in puncture resistance after the stretching treatment. It is presumed that this is because linear low-density polyethylene and high-pressure low-density polyethylene usually contain a larger amount of amorphous components than high-density polyethylene, and thus are more excellent in stretchability and more excellent in puncture resistance.

In the film γm, the low-density polyethylene (C) contained in the first PE intermediate layer may be the same polyethylene as the low-density polyethylene (C) contained in the third PE intermediate layer, or may be a different polyethylene.

In the film γm, the high-density polyethylene (B) contained in the first layer may be the same polyethylene as the high-density polyethylene (B) contained in the second layer, or may be a different polyethylene. The first and second layers of the film γm may contain a polyethylene other than the high-density polyethylene (B) as a main component.

The thickness of the first layer in the stretched films of the films βm and γm is, from the viewpoint of heat resistance and stretchability, preferably from 5% to 50%, more preferably from 5% to 35%, still more preferably from 8% to 33%, and particularly preferably from 10% to 30%, and may be from 20% to 30%, with respect to the thickness of the stretched film. It is preferable that the thickness of the first layer in the films βm and γm with respect to the thickness of the films βm and γm is also in the same range.

The thickness of the first PE intermediate layer in the stretched films of the films βm and γm is, from the viewpoint of heat resistance, stretchability, and puncture resistance, preferably from 5% to 35%, more preferably from 8% to 33%, and still more preferably from 10% to 30%, and may be from 10% to 20%, with respect to the thickness of the stretched film. It is preferable that the thickness of the first PE intermediate layer in the films βm and γm with respect to the thickness of the films βm and γm is also in the same range.

The thickness of the second PE intermediate layer in the stretched films of the films βm and γm is, from the viewpoint of heat resistance and stretchability, preferably from 10% to 80%, more preferably from 15% to 68%, and still more preferably from 20% to 60%, and may be from 20% to 50% or from 20% to 40%, with respect to the thickness of the stretched film. It is preferable that the thickness of the second PE intermediate layer in the films βm and γm with respect to the thickness of the films βm and γm is also in the same range.

The thickness of the third PE intermediate layer in the stretched films of the films βm and γm is, from the viewpoint of heat resistance, stretchability, and puncture resistance, preferably from 5% to 35%, more preferably from 8% to 33%, and still more preferably from 10% to 30%, and may be from 10% to 20%, with respect to the thickness of the stretched film. It is preferable that the thickness of the third PE intermediate layer in the films βm and γm with respect to the thickness of the films βm and γm is also in the same range.

The thickness of the second layer in the stretched films of the films βm and γm is, from the viewpoint of heat resistance and stretchability, preferably from 5% to 50%, more preferably from 5% to 35%, still more preferably from 8% to 33%, and particularly preferably from 10% to 30%, and may be from 20% to 30%, with respect to the thickness of the stretched film. It is preferable that the thickness of the second layer in the films βm and γm with respect to the thickness of the films βm and γm is also in the same range.

The PE intermediate layer in the multilayer film comprising the layer (1_{AB}) is preferably the layer (1_{AB}). In one embodiment, at least one layer selected from the group consisting of the first layer, the first PE intermediate layer, the second PE intermediate layer, the third PE intermediate layer, and the second layer of the multilayer film is the layer (1_{AB}). The first layer and the second layer are each independently preferably the layer (1_{AB}). The first to third PE intermediate layers are each independently preferably the layer (1_{AB}). In one embodiment, the multilayer film is a five-layer coextruded film.

In one embodiment, the multilayer film comprising the layer (1AB) comprises at least:
a first surface resin layer;
an intermediate layer; and
a second surface resin layer,
in this order in a laminating direction, and at least one layer selected from the group consisting of the first surface resin layer, the intermediate layer, and the second surface resin layer is the layer (1_{AB}).

The thickness of the PE intermediate layer in the stretched film of the multilayer film comprising the layer (1_{AB}) is preferably 0.5 µm or more, more preferably 1 µm or more, still more preferably 2 µm or more, even more preferably 3 µm or more, and particularly preferably 4 µm or more, and is preferably 25 µm or less, more preferably 20 µm or less, still more preferably 15 µm or less, even more preferably 12 µm or less, and particularly preferably 9 µm or less; and the thickness is, for example, from 0.5 µm to 25 µm. A stretched film comprising a PE intermediate layer having a thickness of the lower limit or more is, for example, excellent in strength, rigidity, heat resistance, and recyclability. A stretched film comprising a PE intermediate layer having a thickness of the upper limit or less is, for example, excellent in processability. When the stretched film comprises two or more PE intermediate layers, the above "thickness of the PE intermediate layer" means the total thickness of the respective PE intermediate layers.

The thickness of the PE intermediate layer in the stretched film of the multilayer film comprising the layer (1_{AB}) is preferably from 20% to 80%, more preferably from 20% to 50%, still more preferably from 20% to 45%, and particularly preferably from 25% to 40%, with respect to the thickness of the stretched film. When the stretched film comprises two or more PE intermediate layers, the above "thickness of the PE intermediate layer" means the total thickness of the respective PE intermediate layers. Similarly, the thickness of the PE intermediate layer in the multilayer film is preferably from 20% to 80%, more preferably from 20% to 50%, still more preferably from 20% to 45%, and particularly preferably from 25% to 40%, with respect to the thickness of the multilayer film.

In the description of the present specification, when the resin compositions of adjacent layers constituting the multilayer film or the stretched film are the same and cannot be distinguished from each other, the adjacent layers may be integrated to constitute a single layer.

### <Layer configuration of the stretched film>

Hereinafter, several examples of the layer configuration of the stretched film of the present disclosure will be given with reference to the drawings.

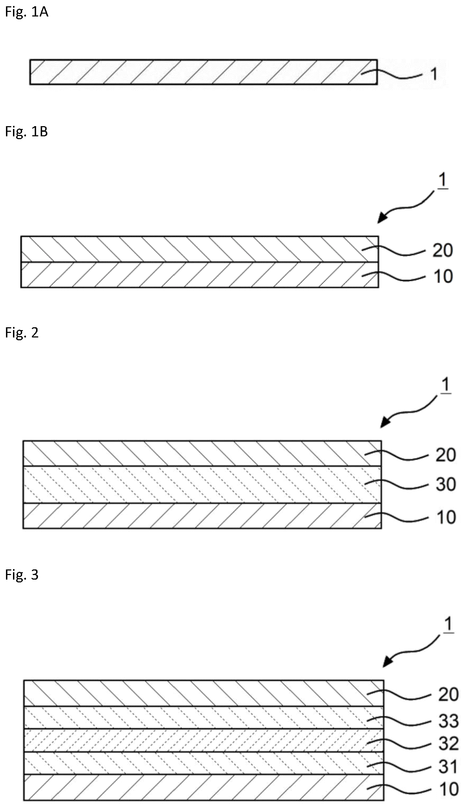

A stretched film 1 shown in FIG. 1A is a single-layer film. A stretched film 1 shown in FIG. 1B comprises a first layer 10 and a second layer 20 in this order in a laminating direction. A stretched film 1 shown in FIG. 2 comprises a first layer 10, a PE intermediate layer 30, and a second layer 20 in this order in a laminating direction. A stretched film 1 shown in FIG. 3 comprises a first layer 10, a first PE intermediate layer 31, a second PE intermediate layer 32, a third PE intermediate layer 33, and a second layer 20 in this order in a laminating direction.

### <Raman spectroscopic measurement>

In the stretched film of the present disclosure, it is preferable that a scattering intensity obtained by Raman spectroscopic measurement on a cross section of the film satisfies the requirements described below. The cross section of the stretched film is a surface parallel to a plane including a thickness direction (laminating direction) perpendicular to a main surface of the film and a stretching direction (for example, MD direction or TD direction) of the film. The method for obtaining the cross section and details of the Raman spectroscopic measurement are described in the Examples section.

By the Raman spectroscopic measurement, a Raman spectrum in which a vertical axis represents the scattering intensity (Intensity) of Raman scattered light and a horizontal axis represents the Raman shift (cm⁻¹) is obtained. In the Raman spectrum, the maximum scattering intensity of a peak (peak 1) observed in a region from 1100 cm⁻¹ to 1150 cm⁻¹ is described as "I₁", and particularly, the maximum scattering intensity of a peak near 1130 cm⁻¹ is described as "I₁₁₃₀". In addition, the maximum scattering intensity of a peak (peak 2) observed in a region of 1050 cm⁻¹ or more and less than 1100 cm⁻¹ is described as "I₂", and particularly, the maximum scattering intensity of a peak near 1063 cm⁻¹ is described as "I₁₀₆₃". The maximum scattering intensity (peak intensity) means the height of each peak from a baseline.

In one embodiment, the peak 1 is assigned to a C-C symmetric stretching vibration in a trans chain of a polyethylene crystal phase. The scattering intensity of the peak 1 easily changes depending on the molecular orientation state of the polyethylene. When the stretching direction and the vibration direction of excitation light (polarized laser) are parallel to each other, the scattering intensity of the peak 1 becomes strong. The strong scattering intensity of the peak 1 indicates that the orientation of the polyethylene in the stretching direction is advanced.

In one embodiment, the peak 2 is assigned to a C-C antisymmetric stretching vibration in the trans chain of the polyethylene crystal phase. The scattering intensity of the peak 2 does not show a large change depending on the molecular orientation state of the polyethylene, and therefore is not significantly affected by a stretching treatment.

As described above, the peak 1 and the peak 2 are different in the influence of the molecular orientation state. By comparing the scattering intensity I₁ and the scattering intensity I₂, the molecular orientation of polyethylene by a stretching treatment can be evaluated. That is, the molecular orientation of polyethylene can be evaluated by using the value of I₁/I₂. Polyethylene in a state with high molecular orientation tends to show an I₁/I₂ of 1.1 or more. Polyethylene in a state with low molecular orientation tends to show an I₁/I₂ of less than 1.1. In one embodiment, I₁/I₂ is I₁₁₃₀/I₁₀₆₃.

Examples of the polyethylene whose orientation tends to be easily increased by a stretching treatment include high-density polyethylene and medium-density polyethylene. In one embodiment, a layer containing high-density polyethylene and/or medium-density polyethylene as a main component has I₁/I₂ of 1.1 or more, preferably from 1.2 to 4.0, more preferably from 1.4 to 3.0, and still more preferably from 1.5 to 2.0 after the stretching treatment. In such a layer, oriented crystals are aligned, and it can be said that molecular motion is less likely to occur after the stretching treatment as compared to before the stretching treatment.

Examples of the polyethylene whose orientation has a small change due to a stretching treatment include linear low-density polyethylene and high-pressure low-density polyethylene. In one embodiment, a layer containing linear low-density polyethylene and/or high-pressure low-density polyethylene as a main component has I₁/I₂ of less than 1.1, preferably 0.5 or more and less than 1.1, more preferably 0.6 or more and less than 1.1, and still more preferably 0.7 or more and less than 1.1 after the stretching treatment. This indicates that the polyethylene has a small orientation or is not oriented even though the polyethylene is subjected to the stretching treatment.

In the case of a film in which the first layer contains the high-density polyethylene (A) as a main component and the second layer contains high-density polyethylene and/or medium-density polyethylene as a main component, a film in which the first layer contains high-density polyethylene and/or medium-density polyethylene as a main component and the second layer contains high-density polyethylene and/or medium-density polyethylene as a main component, or a film containing the high-density polyethylene (A) as a main component, it is considered that the stress in the intermediate layer containing linear low-density polyethylene and/or high-pressure low-density polyethylene as a main component is small, and it is presumed that the layer does not largely contribute to shrinkage.

I₁/I₂ obtained by Raman spectroscopic measurement on the cross section of a layer corresponding to the (intermediate) layer containing the high-density polyethylene (A) as a main component, a layer corresponding to the (intermediate) layer containing the high-density polyethylene (B) as a main component, and a layer corresponding to the (intermediate) layer containing medium-density polyethylene as a main component of the stretched film are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of a layer corresponding to the (intermediate) layer containing the low-density polyethylene (C) as a main component of the stretched film is preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the first layer, the intermediate layer, and the second layer of the stretched film of the film β1 are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first layer, the first PE intermediate layer, the third PE intermediate layer, and the second layer of the stretched film of the film γ or the film δ are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the second PE intermediate layer of the stretched film of the film γ or the film δ is not particularly limited.

I₁/I₂obtained by Raman spectroscopic measurement on the cross section of the second PE intermediate layer of the stretched film of the film γ or the film δ is, in one embodiment (for example, when the second PE intermediate layer contains the low-density polyethylene (C) as a main component), preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the second PE intermediate layer of the stretched film of the film γ or the film δ is, in another embodiment (for example, when the second PE intermediate layer contains high-density polyethylene or medium-density polyethylene as a main component), preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first layer and the second layer of the stretched film of the film γ2 are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first PE intermediate layer and the third PE intermediate layer of the stretched film of the film γ2 are each independently preferably 1.1 or more, more preferably from 1.2 to 3.8, still more preferably from 1.2 to 2.8, and particularly preferably from 1.3 to 1.8.

I₁/I₂ obtained by Raman spectroscopic measurement on the cross section of the second PE intermediate layer of the stretched film of the film γ2 is preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the first layer and the second layer of the stretched film of the film δ1 are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first PE intermediate layer and the third PE intermediate layer of the stretched film of the film δ1 are each independently preferably 1.1 or more, more preferably from 1.2 to 3.8, still more preferably from 1.2 to 2.8, and particularly preferably from 1.3 to 1.8.

I₁/I₂ obtained by Raman spectroscopic measurement on the cross section of the second PE intermediate layer of the stretched film of the film δ1 is preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the first layer, the second PE intermediate layer, and the second layer of the stretched film of the film ε are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first PE intermediate layer and the third PE intermediate layer of the stretched film of the film ε are each independently preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the first layer, the first PE intermediate layer, the third PE intermediate layer, and the second layer of the stretched film of the film βm are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the second PE intermediate layer of the stretched film of the film βm is not particularly limited.

I₁/I₂ obtained by Raman spectroscopic measurement on the cross section of the second PE intermediate layer of the stretched film of the film βm is, in one embodiment, preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the second PE intermediate layer of the stretched film of the film βm is, in another embodiment, preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first layer, the second PE intermediate layer, and the second layer of the stretched film of the film γm are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first PE intermediate layer and the third PE intermediate layer of the stretched film of the film γm are preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the stretched film of a film containing the high-density polyethylene (A) as a main component is preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of a layer corresponding to the layer (1AB) of the stretched film is preferably 1.1 or more, more preferably from 1.2 to 4.0, still more preferably from 1.4 to 3.0, and particularly preferably from 1.5 to 2.0. In one embodiment, I1/I2 obtained by Raman spectroscopic measurement on the cross section of the first layer, the PE intermediate layer, and the second layer of the stretched film are each independently preferably 1.1 or more, more preferably from 1.2 to 4.0, still more preferably from 1.4 to 3.0, and particularly preferably from 1.5 to 2.0.

In the case where the stretched film is a uniaxially stretched film stretched in the MD direction, the cross section is a cross section in a direction parallel to the MD direction. In the case where the stretched film is a uniaxially stretched film stretched in the TD direction, the cross section is a cross section in a direction parallel to the TD direction. In the case where the stretched film is a biaxially stretched film stretched in the MD direction and the TD direction, the cross section is a cross section in a direction parallel to the MD direction and a cross section in a direction parallel to the TD direction, and it is preferable that the stretched film satisfies the above requirement of the scattering intensity ratio for each cross section.

Hereinafter, the stretched film of the second embodiment of the present disclosure will be described. Unless otherwise specified, the items described above (for example, details of various polyethylenes such as high-density polyethylenes (A) and (B), the number of layers, layer configurations, compositions of respective layers, thicknesses of respective layers, film thickness, and manufacturing conditions such as stretching treatment) can also be applied to the stretched film of the second embodiment.

The stretched film of the second embodiment comprises at least:
a first layer containing polyethylene as a main component; and
a second layer containing polyethylene as a main component,
in this order in a laminating direction.

The stretched film of the second embodiment further comprises, between the first layer and the second layer, an intermediate layer containing polyethylene as a main component and having a scattering intensity ratio I1/I2 of less than 1.1 (hereinafter also referred to as "intermediate layer (I)"). The scattering intensity ratio I₁/I₂ is obtained by Raman spectroscopic measurement on a cross section of the intermediate layer (I).

The scattering intensity ratio I₁/I₂ of the intermediate layer (I) is less than 1.1, preferably 0.5 or more and less than 1.1, more preferably 0.6 or more and less than 1.1, and still more preferably 0.7 or more and less than 1.1. A stretched film comprising such an intermediate layer (I) is excellent in impact resistance (for example, puncture resistance) and is preferable as a substrate constituting a packaging material, and is preferable, for example, as a substrate constituting a large-capacity packaging bag. The intermediate layer (I) is preferably an intermediate layer containing the low-density polyethylene (C) as a main component.

The scattering intensity ratios I₁/I₂ obtained by Raman spectroscopic measurement on the respective cross sections of the first layer and the second layer of the stretched film of the second embodiment are each independently preferably 1.1 or more, more preferably from 1.2 to 4.0, still more preferably from 1.4 to 3.0, and particularly preferably from 1.5 to 2.0. A stretched film comprising such a first layer and a second layer is also excellent in heat resistance and is preferable as a substrate constituting a packaging material, particularly as a substrate for printing.

The stretched film of the second embodiment is obtained by stretching a multilayer film comprising at least:
a first layer containing polyethylene as a main component;
an intermediate layer containing polyethylene as a main component; and
a second layer containing polyethylene as a main component,
in this order in a laminating direction.

The stretched film of the second embodiment may further comprise, between the first layer and the second layer, an intermediate layer containing polyethylene as a main component and having a scattering intensity ratio I₁/I₂ of 1.1 or more (hereinafter also referred to as "intermediate layer (II)"). The scattering intensity ratio I1/I2 is obtained by Raman spectroscopic measurement on a cross section of the intermediate layer (II).

The scattering intensity ratio I₁/I₂ of the intermediate layer (II) is 1.1 or more, preferably from 1.1 to 4.0, more preferably from 1.1 to 3.0, and still more preferably from 1.1 to 2.0. A stretched film comprising such an intermediate layer (II) is also excellent in heat resistance and is preferable as a substrate constituting a packaging material.

In one embodiment, the stretched film of the second embodiment comprises at least:
a first layer;
a first PE intermediate layer;
a second PE intermediate layer;
a third PE intermediate layer; and
a second layer,
in this order in a laminating direction.

In one embodiment of the stretched film of the second embodiment, the second PE intermediate layer is the intermediate layer (I) having a scattering intensity ratio I₁/I₂ of less than 1.1, and the first PE intermediate layer and the third PE intermediate layer are each independently the intermediate layer (II) having a scattering intensity ratio I₁/I₂ of 1.1 or more.

It is preferable that the stretched film of the second embodiment satisfies, for example,
I₁/I₂ of the first layer ≥ I1/I2 of the first intermediate layer; and
I₁/I₂ of the second layer ≥ I1/I2 of the third intermediate layer.

Such a stretched film is excellent in balance of, for example, heat resistance, impact resistance (for example, puncture resistance), and the like.

The difference between the I₁/I₂ of the first layer and the I₁/I₂ of the first intermediate layer, and the difference between the I₁/I₂ of the second layer and the I₁/I₂ of the third intermediate layer are each independently preferably 1.0 or less, more preferably 0.8 or less, still more preferably 0.6 or less, even more preferably 0.4 or less, and particularly preferably 0.2 or less. Such a stretched film is excellent in balance of, for example, heat resistance, impact resistance (for example, puncture resistance), and the like.

In the case of a film in which the first layer contains high-density polyethylene and/or medium-density polyethylene as a main component and the second layer contains high-density polyethylene and/or medium-density polyethylene as a main component, it is considered that the stress in the intermediate layer containing linear low-density polyethylene and/or high-pressure low-density polyethylene as a main component is small, and it is presumed that the layer does not largely contribute to shrinkage.

In one embodiment, the multilayer film corresponding to the stretched film of the second embodiment comprises at least:
a first layer;
the intermediate layer containing the low-density polyethylene (C) as a main component; and
a second layer,
in this order in a laminating direction.

In one embodiment, the multilayer film is a three-layer coextruded film.

In one embodiment, the multilayer film corresponding to the stretched film of the second embodiment comprises at least:
a first layer containing high-density polyethylene or medium-density polyethylene as a main component;
a first PE intermediate layer containing high-density polyethylene or medium-density polyethylene as a main component;
a second PE intermediate layer containing at least one selected from the group consisting of linear low-density polyethylene and high-pressure low-density polyethylene as a main component;
a third PE intermediate layer containing high-density polyethylene or medium-density polyethylene as a main component; and
a second PE layer containing high-density polyethylene or medium-density polyethylene as a main component,
in this order in a laminating direction.

In one embodiment, the multilayer film corresponding to the stretched film of the second embodiment is a film (hereinafter also referred to as "film αn") comprising:
a first layer which is the layer containing the high-density polyethylene (A) as a main component;
a first PE intermediate layer which is the intermediate layer containing the high-density polyethylene (A) or (B) as a main component;
a second PE intermediate layer which is the intermediate layer containing the low-density polyethylene (C) as a main component;
a third PE intermediate layer which is the intermediate layer containing the high-density polyethylene (A) or (B) as a main component; and
a second layer which is the layer containing the high-density polyethylene (A) as a main component.

In one embodiment, the film αn is a five-layer coextruded film. The stretched film of the film αn is excellent in heat resistance because the first and second layers suppress heat deformation such as thermal shrinkage. The film αn is excellent in stretchability because the second PE intermediate layer imparts stretchability, and is excellent in impact resistance (for example, puncture resistance) because the second PE intermediate layer is present.

The first PE intermediate layer and the third PE intermediate layer of the film αn may be the intermediate layer containing the high-density polyethylene (A) or (B) (preferably the high-density polyethylene (A)) as a main component, and further containing at least one selected from the group consisting of the low-density polyethylene (C) and medium-density polyethylene (preferably the low-density polyethylene (C)) as other polyethylene.

In one embodiment, the multilayer film is a film (hereinafter also referred to as "film βn") comprising:
a first layer which is the layer containing the high-density polyethylene (A) as a main component;
a first PE intermediate layer which is the intermediate layer containing medium-density polyethylene as a main component;
a second PE intermediate layer which is the intermediate layer containing the low-density polyethylene (C) as a main component;
a third PE intermediate layer which is the intermediate layer containing medium-density polyethylene as a main component; and
a second layer which is the layer containing the high-density polyethylene (A) as a main component.

In one embodiment, the film βn is a five-layer coextruded film. The stretched film of the film βn is excellent in heat resistance because the first and second layers suppress heat deformation such as thermal shrinkage. The film βn is excellent in stretchability because the second PE intermediate layer imparts stretchability, and is excellent in impact resistance (for example, puncture resistance) because the second PE intermediate layer is present.

In one embodiment of the film βn,
the first layer and the second layer are the layers containing the high-density polyethylene (A) as a main component, and further containing medium-density polyethylene as other polyethylene; and
the first PE intermediate layer and the third PE intermediate layer are the intermediate layers containing medium-density polyethylene as a main component, and further containing the low-density polyethylene (C) as other polyethylene.

In one embodiment, the multilayer film is a film (hereinafter also referred to as "film γn") comprising:
a first layer which is the layer containing medium-density polyethylene as a main component;
a first PE intermediate layer which is the intermediate layer containing medium-density polyethylene as a main component;
a second PE intermediate layer which is the intermediate layer containing the low-density polyethylene (C) as a main component;
a third PE intermediate layer which is the intermediate layer containing medium-density polyethylene as a main component; and
a second layer which is the layer containing medium-density polyethylene as a main component.

In one embodiment, the film γn is a five-layer coextruded film. The film γn is excellent in stretchability because the second PE intermediate layer imparts stretchability, and is excellent in impact resistance (for example, puncture resistance) because the second PE intermediate layer is present.

In one embodiment of the film γn,
the first layer and the second layer are the layers containing medium-density polyethylene as a main component, and further containing the high-density polyethylene (B) as other polyethylene; and
the first PE intermediate layer and the third PE intermediate layer are the intermediate layers containing medium-density polyethylene as a main component, and further containing the low-density polyethylene (C) as other polyethylene.

The thickness of the first layer in the stretched films of the films αn, βn, and γn is, from the viewpoint of heat resistance and stretchability, preferably from 5% to 50%, more preferably from 5% to 35%, still more preferably from 8% to 33%, and particularly preferably from 10% to 30%, and may be from 20% to 30%, with respect to the thickness of the stretched film. It is preferable that the thickness of the first layer in the films with respect to the thickness of the films αn, βn, and γn is also in the same range.

The thickness of the first PE intermediate layer in the stretched films of the films αn, βn, and γn is, from the viewpoint of heat resistance, stretchability, and impact resistance (for example, puncture resistance), preferably from 5% to 35%, more preferably from 8% to 33%, and still more preferably from 10% to 30%, and may be from 10% to 20%, with respect to the thickness of the stretched film. It is preferable that the thickness of the first PE intermediate layer in the films with respect to the thickness of the films αn, βn, and γn is also in the same range.

The thickness of the second PE intermediate layer in the stretched films of the films αn, βn, and γn is, from the viewpoint of stretchability and impact resistance (for example, puncture resistance), preferably from 10% to 80%, more preferably from 15% to 68%, and still more preferably from 20% to 60%, and may be from 20% to 50% or from 20% to 40%, with respect to the thickness of the stretched film. It is preferable that the thickness of the second PE intermediate layer in the films with respect to the thickness of the films αn, βn, and γn is also in the same range.

The thickness of the third PE intermediate layer in the stretched films of the films αn, βn, and γn is, from the viewpoint of heat resistance, stretchability, and impact resistance (for example, puncture resistance), preferably from 5% to 35%, more preferably from 8% to 33%, and still more preferably from 10% to 30%, and may be from 10% to 20%, with respect to the thickness of the stretched film. It is preferable that the thickness of the third PE intermediate layer in the films with respect to the thickness of the films αn, βn, and γn is also in the same range.

The thickness of the second layer in the stretched films of the films αn, βn, and γn is, from the viewpoint of heat resistance and stretchability, preferably from 5% to 50%, more preferably from 5% to 35%, still more preferably from 8% to 33%, and particularly preferably from 10% to 30%, and may be from 20% to 30%, with respect to the thickness of the stretched film. It is preferable that the thickness of the second layer in the films with respect to the thickness of the films αn, βn, and γn is also in the same range.

I₁/I₂ obtained by Raman spectroscopic measurement on the cross section of the first layer, the first PE intermediate layer, the third PE intermediate layer, and the second layer of the stretched film of the film αn are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the second PE intermediate layer of the stretched film of the film αn is preferably less than 1.1, more preferably 0.5 or more and less than 1.1, still more preferably 0.6 or more and less than 1.1, and particularly preferably 0.7 or more and less than 1.1.

I₁/I₂ obtained by Raman spectroscopic measurement on the cross section of the first layer and the second layer of the stretched films of the films βn and γn are each independently preferably 1.1 or more, more preferably from 1.2 to 4.0, still more preferably from 1.4 to 3.0, and particularly preferably from 1.5 to 2.0.

I₁/I₂ obtained by Raman spectroscopic measurement on the cross section of the first PE intermediate layer and the third PE intermediate layer of the stretched films of the films βn and γn are preferably 1.1 or more, more preferably from 1.1 to 1.8, still more preferably from 1.1 to 1.6, and particularly preferably from 1.1 to 1.4.

I₁/I₂ obtained by Raman spectroscopic measurement on the cross section of the second PE intermediate layer of the stretched films of the films βn and γn is preferably less than 1.1, more preferably 0.5 or more and less than 1.1, still more preferably 0.6 or more and less than 1.1, and particularly preferably 0.7 or more and less than 1.1.

### <Dimensional change rate>

In the stretched film of the present disclosure, the dimensional change rate in the stretching direction is preferably from -10% to 0%, more preferably from -8% to 0%, still more preferably from -6% to 0%, even more preferably from -4% to 0%, and particularly preferably from -3% to 0%. The dimensional change rate is measured by hanging a test piece of the stretched film such that a film surface is parallel to a vertical direction and a stretching direction of the film is in a direction perpendicular to the vertical direction, and leaving it in an environment of 120°C for 5 minutes.

The stretched film of the present disclosure also includes the stretched film of the second embodiment.

In the case where the stretched film of the present disclosure is a uniaxially stretched film, it is preferable that the dimensional change rate in the stretching direction (for example, the MD direction or the TD direction) is within the above range. In the case where the stretched film of the present disclosure is a biaxially stretched film, it is preferable that the dimensional change rate in the stretching direction (for example, each of the MD direction and the TD direction) is within the above range.

The definition and measurement conditions of the dimensional change rate are described in the Examples section.

### <Dimensional change rate (2)>

In the stretched film of the present disclosure, the dimensional change rate (2) in the stretching direction, which is measured by being allowed to stand in an environment of 120°C for 5 minutes, is preferably from -7% to 0%, more preferably from -6% to 0%, still more preferably from -5% to 0%, even more preferably from -4% to 0%, and particularly preferably from -3% to 0%.

In the case where the stretched film of the present disclosure is a uniaxially stretched film, the dimensional change rate (2) in the stretching direction (for example, the MD direction or the TD direction) is preferably from -7% to 0%, more preferably from -6% to 0%, still more preferably from -5% to 0%, even more preferably from -4% to 0%, and particularly preferably from -3% to 0%.

In the case where the stretched film of the present disclosure is a biaxially stretched film, the dimensional change rate (2) in the stretching direction (for example, each of the MD direction and the TD direction) is preferably from -7% to 0%, more preferably from -6% to 0%, still more preferably from - 5% to 0%, even more preferably from -4% to 0%, and particularly preferably from -3% to 0%.

The definition and measurement conditions of the dimensional change rate (2) are described in the Examples section.

### <Maximum dimensional change rate>

The maximum dimensional change rate of the stretched film of the present disclosure in the stretching direction in a range from 20°C to 120°C by a tensile mode of thermomechanical analysis (TMA) is preferably from -15% to 15%, more preferably from -12% to 12%, still more preferably from - 10% to 10%, even more preferably from -8% to 8%, particularly preferably from -6% to 6%, and most preferably from -4% to 4%.

The maximum dimensional change rate of the stretched film of a multilayer film comprising a first layer containing polyethylene as a main component, an intermediate layer containing the high-density polyethylene (A) as a main component, and a second layer containing polyethylene as a main component in this order in a laminating direction, in the stretching direction in a range from 20°C to 120°C by a tensile mode of thermomechanical analysis (TMA), is preferably more than -25% and less than 25%, more preferably -23% or more and 23% or less, still more preferably -20% or more and 20% or less, and particularly preferably -18% or more and 18% or less. The absolute value of the maximum dimensional change rate may be, for example, more than 15% and less than 25%.

In the case where the stretched film of the present disclosure is a uniaxially stretched film, it is preferable that the maximum dimensional change rate in the stretching direction (for example, the MD direction or the TD direction) is within the above range. In the case where the stretched film of the present disclosure is a biaxially stretched film, it is preferable that the maximum dimensional change rate in the stretching direction (for example, each of the MD direction and the TD direction) is within the above range.

The definition and measurement conditions of the maximum dimensional change rate are described in the Examples section. In the TMA measurement, since a load (tensile force) is applied, when the load (tensile force) is larger than the force by which the stretched film shrinks, the maximum dimensional change rate may take a value of elongation (a positive value).

### <Puncture strength>

The puncture strength of the stretched film of the present disclosure is not particularly limited, but is preferably 2.5 N/mmϕ or more, more preferably 3.0 N/mmϕ or more, still more preferably 3.5 N/mmϕ or more, and particularly preferably 4.0 N/mmϕ or more. The puncture strength of the stretched film of the present disclosure may be, for example, 10.0 N/mmϕ or less, 8.0 N/mmϕ or less, or 6.0 N/mmϕ or less. In the case of a multilayer film, the puncture strength is measured from the first layer side in accordance with JIS Z1707:2019, and details of the measurement conditions are described in the Examples section. The puncture strength can be increased, for example, by using a high-density polyethylene having a high melt tension or a medium-density polyethylene having a high melt tension, or by using the above-described low-density polyethylene (C).

### <1/4 Width>

In one embodiment, it is preferable that the entire polyethylene contained in the present film or stretched film has a peak whose 1/4 width is less than 1.8 in a differential molecular weight distribution curve obtained by high-temperature GPC measurement. The 1/4 width may be, for example, less than 1.7. The 1/4 width is preferably 1.0 or more. The 1/4 width is, for example, 1.0 or more and less than 1.8. The differential molecular weight distribution curve is measured for the entire polyethylene contained in the present film or stretched film.

In the case of a film containing the high-density polyethylene (A) as a main component, the 1/4 width of the entire polyethylene is preferably less than 1.5, more preferably 1.47 or less, still more preferably 1.43 or less, and particularly preferably 1.4 or less, and is more preferably 1.1 or more, and still more preferably 1.2 or more.

In one embodiment, it is preferable that the entire polyethylene contained in the present film or stretched film has a peak whose half-width is less than 1.3 in a differential molecular weight distribution curve obtained by high-temperature GPC measurement. The half-width may be, for example, less than 1.1. The half-width is preferably 0.75 or more. The differential molecular weight distribution curve is measured for the entire polyethylene contained in the present film or stretched film.

### [Printed film]

The printed film of the present disclosure comprises the present film or stretched film described above and a printed layer, and specifically comprises the present film or stretched film described above and a printed layer provided on at least one main surface selected from the group consisting of a first main surface and a second main surface of the present film or the stretched film. In the case where the first surface resin layer is a layer containing the high-density polyethylene (A) as a main component, the printed layer is preferably provided on the first surface resin layer from the viewpoint of suppression of heat deformation of the stretched film, printability, and the like.

The printed layer includes an image. Examples of the image include characters, figures, patterns, symbols, and combinations thereof. The image may include character information such as a product name, a name of an article in a packaging container, a manufacturer, and a name of a raw material. The image may be a monochromatic solid color (so-called solid image).

The printed layer can be formed, for example, by using an ink composition. Examples of the method for forming the printed layer include a gravure printing method, an offset printing method, a flexographic printing method, a screen printing method, a letterpress printing method, and a transfer printing method. The printed layer may be formed by a flexographic printing method from the viewpoint of reducing environmental load. The printed layer may be formed using a biomass-derived ink from the viewpoint of reducing environmental load.

The thickness of the printed layer is preferably 0.1 µm or more, more preferably 0.2 µm or more, and still more preferably 0.3 µm or more, and is preferably 10 µm or less, more preferably 5 µm or less, and still more preferably 3 µm or less; and the thickness is, for example, from 0.1 µm to 10 µm.

### [Barrier film]

The barrier film of the present disclosure comprises the present film or stretched film described above and a deposition film, and specifically comprises the present film or stretched film described above and a deposition film provided on at least one main surface selected from the group consisting of a first main surface and a second main surface of the present film or the stretched film. In the case where the first surface resin layer is a layer containing the high-density polyethylene (A) as a main component, the deposition film is preferably provided on the first surface resin layer from the viewpoint of suppression of heat deformation of the stretched film, suppression of cracks in the deposition film, and the like. The barrier film is excellent in, for example, gas barrier properties, specifically, oxygen barrier properties and water vapor barrier properties, and is also excellent in brightness when the deposition film is a metal-deposited film. A packaging container produced using such a barrier film is excellent in gas barrier properties.

The barrier film may be subjected to the above-described surface treatment. Such a barrier film is excellent in, for example, adhesion to other layers.

### <Deposition film>

The deposition film is composed of, for example, a metal and/or an inorganic oxide. The deposition film may be a metal-deposited film composed of one or two or more kinds of metals, or may be an inorganic oxide-deposited film composed of one or two or more kinds of inorganic oxides. The inorganic oxide-deposited film may be a transparent deposition film. Examples of the metal include aluminum, chromium, tin, nickel, copper, silver, gold, and platinum. Examples of the inorganic oxide include aluminum oxide, silicon oxide, magnesium oxide, calcium oxide, zirconium oxide, titanium oxide, boron oxide, hafnium oxide, barium oxide, and silicon oxycarbide (carbon-containing silicon oxide). Among the deposition films, an aluminum-deposited film, an aluminum oxide (alumina)-deposited film, a silicon oxide (silica)-deposited film, and a silicon oxycarbide-deposited film are preferable.

The barrier film may comprise two or more layers of the deposition film on the present film or the stretched film.

The thickness of the deposition film is, from the viewpoint of gas barrier properties, preferably 1 nm or more, more preferably 5 nm or more, and still more preferably 10 nm or more. The thickness of the deposition film is, from the viewpoint of suppression of occurrence of cracks in the deposition film and recyclability of a packaging container, preferably 150 nm or less, more preferably 100 nm or less, and still more preferably 80 nm or less; and the thickness is, for example, from 1 nm to 150 nm.

The surface of the deposition film may be subjected to the above-described surface treatment. Such a deposition film is excellent in, for example, adhesion to other layers.

Examples of the method for forming the deposition film include physical vapor deposition (PVD) methods such as a vacuum deposition method, a sputtering method, and an ion plating method, and chemical vapor deposition (CVD) methods such as a plasma chemical vapor deposition method, a thermal chemical vapor deposition method, and a photochemical vapor deposition method. The deposition film may be a composite film formed by using both a physical vapor deposition method and a chemical vapor deposition method in combination and including two or more layers of different kinds of deposition films.

The degree of vacuum in the deposition chamber is preferably about 10⁻² to 10⁻⁸ mbar before introduction of oxygen, and is preferably about 10⁻¹ to 10⁻⁶ mbar after introduction of oxygen. The amount of oxygen to be introduced and the like vary depending on the size of a deposition machine and the like. The oxygen to be introduced may be mixed with an inert gas such as an argon gas, a helium gas, and a nitrogen gas as a carrier gas as long as there is no problem. The transport speed of the target film on which the deposition film is to be formed is, for example, 10 m/min or more and 800 m/min or less.

The deposition film may be a single layer formed by a single deposition step, or may be a multilayer formed by a plurality of deposition steps. In the case where the deposition film is a multilayer, the respective layers may be composed of the same component, or may be composed of different components. The respective layers may be formed by the same method, or may be formed by different methods.

### <Barrier coat layer>

The barrier film of the present disclosure may further comprise a barrier coat layer on the deposition film. That is, the barrier film may further comprise a barrier coat layer on a surface of the deposition film opposite to a surface facing the present film or the stretched film. Such a barrier film is excellent in scratch resistance and gas barrier properties, and when the deposition film is composed of an inorganic oxide such as aluminum oxide and silicon oxide, for example, occurrence of cracks in the deposition film can be effectively suppressed, and a decrease in gas barrier properties can be suppressed.

In one embodiment, the barrier coat layer contains a gas barrier resin. A barrier film comprising such a layer is further excellent in gas barrier properties. The barrier coat layer can be formed, for example, by applying a coating liquid obtained by dissolving or dispersing a material such as a gas barrier resin in water or an appropriate organic solvent to the deposition film, and drying the coating liquid.

Examples of the gas barrier resin include an ethylene-vinyl alcohol copolymer, polyvinyl alcohol, a polyamide, a polyvinylidene chloride, a polyester, a polyether polyol, a polyester polyol, a polyurethane, a polyacrylonitrile, and a (meth)acrylic resin.

In one embodiment, the content of the gas barrier resin in the barrier coat layer is preferably 50% by mass or more, more preferably 60% by mass or more, still more preferably 70% by mass or more, even more preferably 80% by mass or more, and particularly preferably 90% by mass or more. Such a layer is excellent in, for example, gas barrier properties.

The barrier coat layer may contain the above additives.

The thickness of the barrier coat layer containing the gas barrier resin is, from the viewpoint of gas barrier properties, preferably 0.01 µm or more, and more preferably 0.1 µm or more. The thickness of the barrier coat layer containing the gas barrier resin is, from the viewpoint of the processability of the barrier film and the recyclability of a packaging container, preferably 10 µm or less, and more preferably 5 µm or less; and the thickness is, for example, from 0.01 µm to 10 µm.

In another embodiment, the barrier coat layer is a gas barrier coating film formed by applying a gas barrier composition to the deposition film and drying the composition. The gas barrier composition is obtained by mixing a metal alkoxide, a water-soluble polymer, and if necessary, a silane coupling agent, and adding water if necessary, an organic solvent if necessary, and a sol-gel method catalyst if necessary. The gas barrier coating film contains a hydrolyzed polycondensate in which the metal alkoxide and the like are hydrolyzed and polycondensed by a sol-gel method. By providing such a film on the deposition film, when the deposition film is composed of an inorganic oxide, the gas barrier properties can be improved, and occurrence of cracks in the deposition film can be effectively suppressed.

Examples of the metal alkoxide include alkoxysilanes, and specific examples thereof include tetramethoxysilane, tetraethoxysilane, tetrapropoxysilane, and tetrabutoxysilane.

Examples of the water-soluble polymer include hydroxyl group-containing polymers such as polyvinyl alcohol and an ethylene-vinyl alcohol copolymer. These water-soluble polymers can also contribute to, for example, improvement of gas barrier properties. Depending on desired physical properties such as oxygen barrier properties, water vapor barrier properties, water resistance, and weather resistance, either one of polyvinyl alcohol and an ethylene-vinyl alcohol copolymer may be used, both of them may be used in combination, or a gas barrier coating film obtained using polyvinyl alcohol and a gas barrier coating film obtained using an ethylene-vinyl alcohol copolymer may be laminated. The amount of the water-soluble polymer to be used is preferably 5 parts by mass or more and 500 parts by mass or less with respect to 100 parts by mass of the metal alkoxide.

As the silane coupling agent, a known organoalkoxysilane containing an organic reactive group can be used, and an organoalkoxysilane having an epoxy group is preferable, and examples thereof include γ-glycidoxypropyltrimethoxysilane, γ-glycidoxypropyltriethoxysilane, γ-glycidoxypropylmethyldiethoxysilane, and β-(3,4-epoxycyclohexyl)ethyltrimethoxysilane. The amount of the silane coupling agent to be used is preferably 1 part by mass or more and 20 parts by mass or less with respect to 100 parts by mass of the metal alkoxide.

The gas barrier composition may contain water in an amount of preferably 0.1 mol or more, and more preferably 0.5 mol or more, and may contain water in an amount of preferably 100 mol or less, and more preferably 60 mol or less, with respect to 1 mol of the metal alkoxide. By setting the content of water to be the lower limit or more, for example, the oxygen barrier properties and the water vapor barrier properties of the barrier film can be improved. By setting the content of water to be the upper limit or less, for example, a hydrolysis reaction can be performed promptly.

The gas barrier composition may contain an organic solvent. Examples of the organic solvent include methyl alcohol, ethyl alcohol, n-propyl alcohol, isopropyl alcohol, and n-butyl alcohol.

As the sol-gel method catalyst, an acid or an amine-based compound is preferable.

Examples of the method for applying the gas barrier composition include coating means such as a roll coat such as a gravure roll coater, a spray coat, a spin coat, dipping, a brush, a bar coat, and an applicator.

Hereinafter, one embodiment of a method for forming a gas barrier coating film will be described.

A gas barrier composition is prepared by mixing a metal alkoxide, a water-soluble polymer, a sol-gel method catalyst, water, an organic solvent, and if necessary, a silane coupling agent and the like. In the composition, a polycondensation reaction gradually proceeds. The composition is applied to the deposition film by a conventional method and dried. By this drying, the polycondensation of the metal alkoxide and the water-soluble polymer (also the silane coupling agent when the composition contains a silane coupling agent) further proceeds, and a layer of a composite polymer is formed. The above operation may be repeated to laminate a plurality of composite polymer layers. For example, the applied composition is heated at a temperature of preferably 20°C or more, more preferably 50°C or more, and still more preferably 70°C or more, and preferably 150°C or less, more preferably 120°C or less, and still more preferably 100°C or less for 1 second or more and 10 minutes or less. In this way, a gas barrier coating film can be formed.

The thickness of the gas barrier coating film is preferably 0.01 µm or more, more preferably 0.05 µm or more, and still more preferably 0.1 µm or more, and is preferably 100 µm or less, more preferably 50 µm or less, still more preferably 5 µm or less, even more preferably 2 µm or less, and particularly preferably 1 µm or less; and the thickness is, for example, from 0.01 µm to 100 µm. A barrier film comprising such a gas barrier coating film is, for example, excellent in gas barrier properties, can suppress occurrence of cracks in the deposition film composed of an inorganic oxide, and is also excellent in the recyclability and processability of a packaging container.

### <Printed layer>

The barrier film of the present disclosure may further comprise the printed layer described above. For example, the printed layer may be provided on at least one main surface selected from the group consisting of the first main surface and the second main surface of the present film or the stretched film, may be provided on the surface of the deposition film, or may be provided on the surface of the barrier coat layer.

### [Use]

At least one film selected from the group consisting of the present film, the stretched film, the printed film, and the barrier film described above is hereinafter also referred to as "the film of the present disclosure". The film of the present disclosure can be suitably used as a substrate constituting a packaging material such as a polyethylene-based monomaterial packaging material. Since the film of the present disclosure has high heat resistance, it can be suitably used as a substrate for printing.

### [Laminate]

The laminate of the present disclosure comprises at least:
the film of the present disclosure; and
a heat-seal layer,
in this order in a laminating direction.

In one embodiment, the laminate of the present disclosure comprises at least:
a first heat-seal layer;
the film of the present disclosure; and
a second heat-seal layer,
in this order in a laminating direction.

The laminate of the present disclosure can be suitably used as a packaging material such as a polyethylene-based monomaterial packaging material.

The laminate of the present disclosure comprising the first and second heat-seal layers can be suitably used, for example, as a packaging material for forming a body portion of a tube container body. In this case, for example, the second heat-seal layer is a sealant layer on an outer surface side of the body portion, and the first heat-seal layer is a sealant layer on an inner surface side of the body portion. That is, the body portion comprises, from an outside to an inside of the body portion, the second heat-seal layer, the film of the present disclosure, and the first heat-seal layer in this order.

In one embodiment, the laminate of the present disclosure does not comprise an aluminum foil. In one embodiment, the laminate of the present disclosure comprises neither a polyethylene terephthalate film nor an aluminum foil. Such a laminate and a packaging container comprising the laminate are excellent in recyclability.

In one embodiment, the total thickness of the laminate of the present disclosure may be 40 µm or more, may be 60 µm or more, may be 80 µm or more, may be 100 µm or more, may be 120 µm or more, may be 140 µm or more, may be 400 µm or less, may be 350 µm or less, may be 300 µm or less; and the total thickness is, for example, from 40 µm to 400 µm. The total thickness of the laminate can be appropriately changed, for example, according to the use or form of a packaging container.

### <Substrate>

The laminate of the present disclosure comprises the film of the present disclosure as a substrate. The laminate of the present disclosure may comprise two or more films of the present disclosure. Details of these films are as described above, and detailed description thereof is omitted in this section.

The laminate of the present disclosure may further comprise a stretched polyolefin substrate other than the stretched film described above. The stretched polyolefin substrate is a polyolefin substrate that has been subjected to a stretching treatment. The stretched polyolefin substrate contains a polyolefin as a main component. Examples of the polyolefin include polyethylene, polypropylene, polybutene, and polymethylpentene. Among these, polyethylene and polypropylene are preferable, and polyethylene is more preferable. As the stretched polyolefin substrate, for example, a stretched polyethylene substrate containing polyethylene as a main component and a stretched polypropylene substrate containing polypropylene as a main component are preferable, and a stretched polyethylene substrate is more preferable. The stretching treatment may be uniaxial stretching or biaxial stretching. Details of the stretching treatment are as described above, and description thereof is omitted in this section. The stretched polyolefin substrate may be, for example, a uniaxially stretched substrate or a biaxially stretched substrate.

The stretched polyolefin substrate may contain a biomass polyolefin. The stretched polyolefin substrate may contain a recycled polyolefin. The stretched polyolefin substrate may contain the above additives.

The content of the polyolefin in the stretched polyolefin substrate is 50% by mass or more. The content is preferably 60% by mass or more, more preferably 70% by mass or more, still more preferably 80% by mass or more, even more preferably 90% by mass or more, and particularly preferably 95% by mass or more.

The stretched polyolefin substrate may have a single-layer structure or a multilayer structure.

The thickness of the stretched polyolefin substrate is, from the viewpoint of the strength and heat resistance of the laminate, preferably 5 µm or more, more preferably 8 µm or more, and still more preferably 10 µm or more, and is, from the viewpoint of the processability of the laminate, preferably 300 µm or less, more preferably 100 µm or less, and still more preferably 50 µm or less; and the thickness is, for example, from 5 µm to 300 µm.

The stretched polyolefin substrate may be subjected to the above-described surface treatment. Such a stretched polyolefin substrate is excellent in, for example, adhesion to a layer adjacent to the substrate. An anchor coat layer may be formed on the surface of the stretched polyolefin substrate by using a conventionally known anchor coat agent.

The laminate further comprising the stretched polyolefin substrate may comprise, for example, a heat-seal layer, the film of the present disclosure, and a stretched polyolefin substrate in this order, or may comprise a heat-seal layer, a stretched polyolefin substrate, and the film of the present disclosure in this order.

### <Printed layer>

The laminate of the present disclosure may comprise a printed layer on one surface or both surfaces of a substrate such as the film of the present disclosure and the stretched polyolefin substrate. The laminate of the present disclosure may comprise a printed layer on a second heat-seal layer described later. Details of the printed layer are as described above, and description thereof is omitted in this section.

### <Heat-seal layer>

The laminate of the present disclosure comprises a heat-seal layer.

The heat-seal layer contains, as a main component, a heat-fusible resin that can be melted by heat and fused to each other. Examples of the heat-fusible resin include polyolefins such as polyethylene, polypropylene, and polymethylpentene, cyclic polyolefins, cyclic olefin copolymers, ionomer resins, acid-modified polyolefins, and terpolymers of ethylene-(meth)acrylic acid ester-unsaturated carboxylic acid. Examples of the polyethylene include linear low-density polyethylene, high-pressure low-density polyethylene, medium-density polyethylene, high-density polyethylene, an ethylene-propylene copolymer, an ethylene-vinyl acetate copolymer, and an ethylene-(meth)acrylic acid ester copolymer. Examples of the acid-modified polyolefin include resins obtained by modifying a polyolefin such as polyethylene and polypropylene with an unsaturated carboxylic acid-based compound such as (meth)acrylic acid and maleic anhydride. The heat-fusible resin may be a material derived from fossil fuels, may be a material derived from biomass, or may use both of them.

In recent years, it has been required to recycle packaging containers from the viewpoint of reducing environmental load. From the viewpoint of recyclability, it is preferable that the substrate and the heat-seal layer are each composed of the same kind of resin material (monomaterialization). In one embodiment, the heat-seal layer contains polyethylene as a main component. With such a configuration, monomaterialization of the packaging container can be achieved. Such a packaging container is excellent in recyclability, and for example, after collecting a used packaging container, it is not necessary to separate the substrate and the heat-seal layer.

From the viewpoint of heat-sealability, it is preferable that the heat-seal layer contains high-pressure low-density polyethylene and/or linear low-density polyethylene. When the heat-seal layer contains high-pressure low-density polyethylene and linear low-density polyethylene, the content (% by mass) of the linear low-density polyethylene may be larger than the content (% by mass) of the high-pressure low-density polyethylene.

The melting point of the polyethylene contained in the heat-seal layer is, from the viewpoint of the balance between heat resistance and heat-sealability, preferably 90°C or more, and more preferably 95°C or more, and is preferably 140°C or less, and more preferably 130°C or less; and the melting point is, for example, from 90°C to 140°C.

In one embodiment, the content of the polyethylene in the heat-seal layer is 50% by mass or more. The content is preferably 60% by mass or more, more preferably 70% by mass or more, still more preferably 80% by mass or more, even more preferably 90% by mass or more, and particularly preferably 95% by mass or more. A laminate comprising such a heat-seal layer is, for example, excellent in recyclability.

The heat-seal layer may contain the above additives.

In one embodiment, the content of the polyethylene in the entire laminate of the present disclosure is preferably 80% by mass or more, more preferably 85% by mass or more, still more preferably 90% by mass or more, and particularly preferably 95% by mass or more. Such a laminate is, for example, excellent in recyclability. For example, a monomaterialized packaging container can be produced using the laminate, and the recyclability of the packaging container can be improved.

The laminate of the present disclosure may comprise a first heat-seal layer as the heat-seal layer, the film of the present disclosure, and a second heat-seal layer as the heat-seal layer in this order in a laminating direction. The first heat-seal layer and the second heat-seal layer are respectively melted by heating and can be fused to each other. Such a laminate can be suitably used, for example, as a packaging material for forming a body portion of a tube container body.

In one embodiment, the first heat-seal layer and the second heat-seal layer contain polyethylene as a main component. The polyethylene contained in the first heat-seal layer and the polyethylene contained in the second heat-seal layer may be the same or different.

The heat-seal layer may have a single-layer structure or a multilayer structure.

The first and second heat-seal layers may have a single-layer structure or a multilayer structure.

The thickness of the heat-seal layer may be 10 µm or more, may be 20 µm or more, may be 30 µm or more, may be 50 µm or more, may be 60 µm or more, may be 70 µm or more, or may be 80 µm or more, from the viewpoint of heat-sealability and recyclability of a packaging container. The thickness of the heat-seal layer may be 300 µm or less, may be 200 µm or less, or may be 150 µm or less, from the viewpoint of the processability of the laminate. The thickness of the heat-seal layer is, for example, from 10 µm to 300 µm. It is preferable that the thicknesses of the first and second heat-seal layers are also each independently within the above range. The thickness of the heat-seal layer can be appropriately changed, for example, according to the use or form of a packaging container. In the case of a small bag, the thickness of the heat-seal layer may be, for example, from 20 µm to 60 µm, but is not particularly limited. In the case of a standing pouch, the thickness of the heat-seal layer may be, for example, from 60 µm to 150 µm, but is not particularly limited. In the case of a tube container, the thickness of each heat-seal layer may be, for example, 50 µm or more, may be 60 µm or more, may be 70 µm or more, or may be 80 µm or more, but is not particularly limited.

The heat-seal layer is, from the viewpoint of heat-sealability, preferably an unstretched resin film, and more preferably an unstretched coextruded resin film, and each of the layers constituting the heat-seal layer is a coextruded resin layer. The resin film can be produced, for example, by using a T-die cast molding method or an inflation molding method. The term "unstretched film" is a concept including not only a film that is not stretched at all but also a film that is slightly stretched due to a tension applied during film formation.

For example, an unstretched resin film corresponding to the heat-seal layer may be laminated on the film of the present disclosure through an adhesive layer if necessary, or the heat-seal layer may be formed by melt-extruding a heat-fusible resin or a resin composition thereof onto the film of the present disclosure. In the latter case, the adhesive layer does not have to be provided. Examples of the adhesive layer include the following adhesive layers.

### <Adhesive layer>

The laminate of the present disclosure may comprise an adhesive layer between optional layers such as between a substrate such as the film of the present disclosure and the heat-seal layer. Such a laminate is, for example, excellent in adhesion between the substrate and the heat-seal layer.

The laminate of the present disclosure may comprise, for example, a heat-seal layer, an adhesive layer, and the film of the present disclosure in this order in a laminating direction, may comprise a heat-seal layer, a first adhesive layer, the film of the present disclosure, a second adhesive layer, and a stretched polyolefin substrate in this order in a laminating direction, or may comprise a heat-seal layer, a first adhesive layer, a stretched polyolefin substrate, a second adhesive layer, and the film of the present disclosure in this order in a laminating direction. The laminate of the present disclosure may comprise, for example, a first heat-seal layer, a first adhesive layer, the film of the present disclosure, a second adhesive layer, and a second heat-seal layer in this order in a laminating direction.

In one embodiment, the adhesive layer may be an adhesive agent layer composed of an adhesive agent. The adhesive agent may be any of a one-component curable adhesive agent, a two-component curable adhesive agent, and a non-curable adhesive agent. The adhesive agent may be a solvent-free adhesive agent or a solvent-based adhesive agent. Among these, a solvent-based adhesive agent is preferable because it is more excellent in content resistance.

Examples of the solvent-free adhesive agent, that is, a non-solvent laminate adhesive agent, include a polyether-based adhesive agent, a polyester-based adhesive agent, a silicone-based adhesive agent, an epoxy-based adhesive agent, and a urethane-based adhesive agent. Among these, a urethane-based adhesive agent is preferable, and a two-component curable urethane-based adhesive agent is more preferable.

Examples of the solvent-based adhesive agent include a rubber-based adhesive agent, a vinyl-based adhesive agent, an olefin-based adhesive agent, a silicone-based adhesive agent, an epoxy-based adhesive agent, a phenol-based adhesive agent, and a urethane-based adhesive agent. Among these, a urethane-based adhesive agent is preferable, and a two-component curable urethane-based adhesive agent is more preferable.

In one embodiment, the laminate of the present disclosure may be produced by laminating the film of the present disclosure, a stretched polyolefin substrate if desired, and a resin film corresponding to a heat-seal layer by a non-solvent laminate method using a solvent-free adhesive agent, or may be produced by laminating them by a dry laminate method using a solvent-based adhesive agent. The adhesive agent layer can be formed, for example, by applying an adhesive agent to the film of the present disclosure or the like and drying it by a method such as a direct gravure roll coat method, a gravure roll coat method, a kiss coat method, a reverse roll coat method, a fountain method, and a transfer roll coat method.

The thickness of the adhesive agent layer may be 0.1 µm or more, may be 0.2 µm or more, may be 0.5 µm or more, may be 10 µm or less, may be 8 µm or less, may be 6 µm or less; and the thickness is, for example, from 0.1 µm to 10 µm. The thickness of the adhesive agent layer may be 2 µm or less.

In one embodiment, the adhesive layer may be an adhesive resin layer containing a thermoplastic resin, or may be an extruded resin layer containing a thermoplastic resin. Examples of the thermoplastic resin include the heat-fusible resins described above. The thermoplastic resin may be a material derived from fossil fuels, may be a material derived from biomass, or may use both of them.

The thickness of the extruded resin layer is, from the viewpoint of interlayer adhesion, preferably 5 µm or more, and more preferably 10 µm or more. The thickness of the extruded resin layer is, from the viewpoint of reducing the production cost of the laminate and improving its productivity, preferably 30 µm or less, and more preferably 25 µm or less; and the thickness is, for example, from 5 µm to 30 µm.

### <Layer configuration of the laminate >

Hereinafter, several examples of the layer configuration of the laminate of the present disclosure will be given with reference to the drawings.

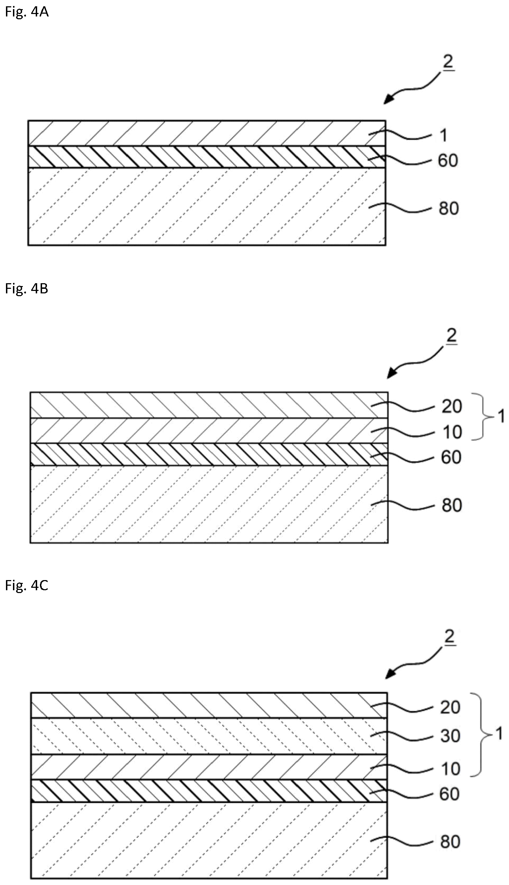

A laminate 2 shown in FIGS. 4A to 4D comprises a heat-seal layer 80, an adhesive layer 60, and a stretched film 1 in this order in a laminating direction. The laminate 2 may further comprise a printed layer (not shown), and for example, may further comprise a printed layer on the stretched film 1.

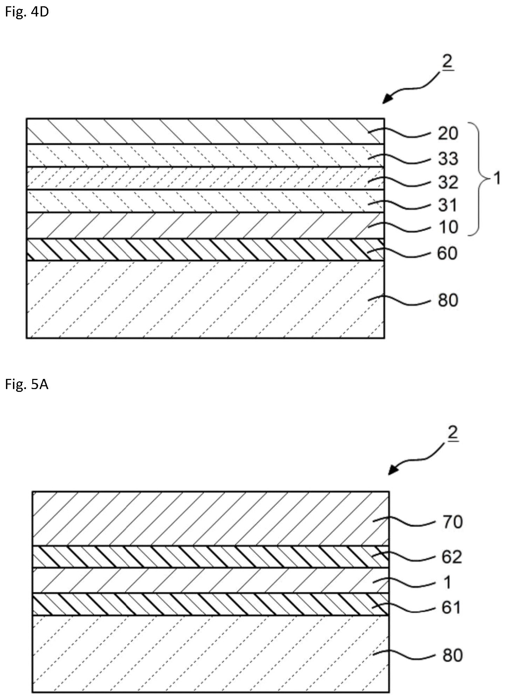

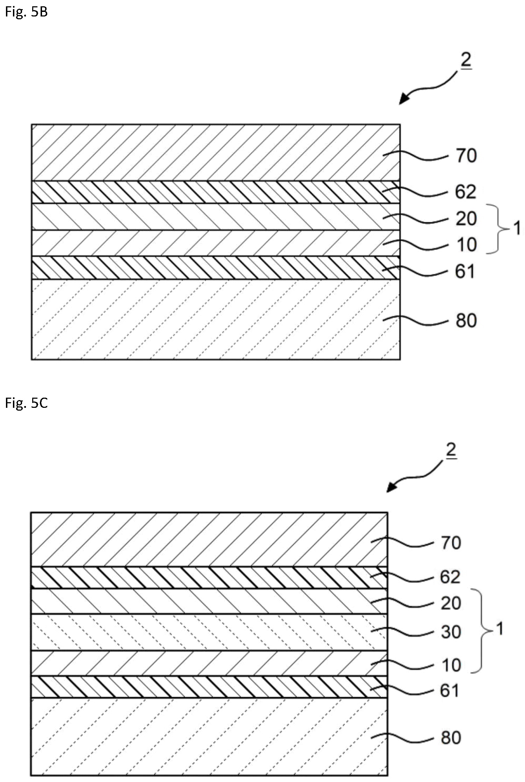

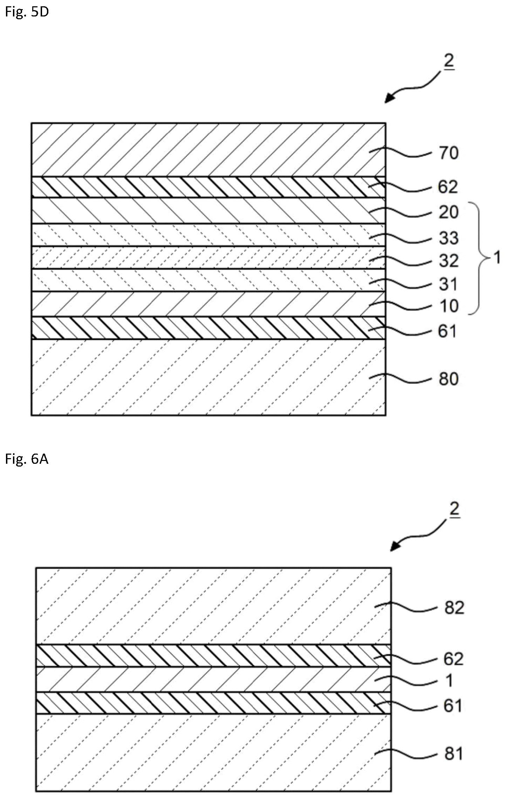

A laminate 2 shown in FIGS. 5A to 5D comprises a heat-seal layer 80, a first adhesive layer 61, a stretched film 1, a second adhesive layer 62, and a stretched polyolefin substrate 70 in this order in a laminating direction. The laminate 2 may further comprise a printed layer (not shown), and for example, may further comprise a printed layer on the stretched polyolefin substrate 70.

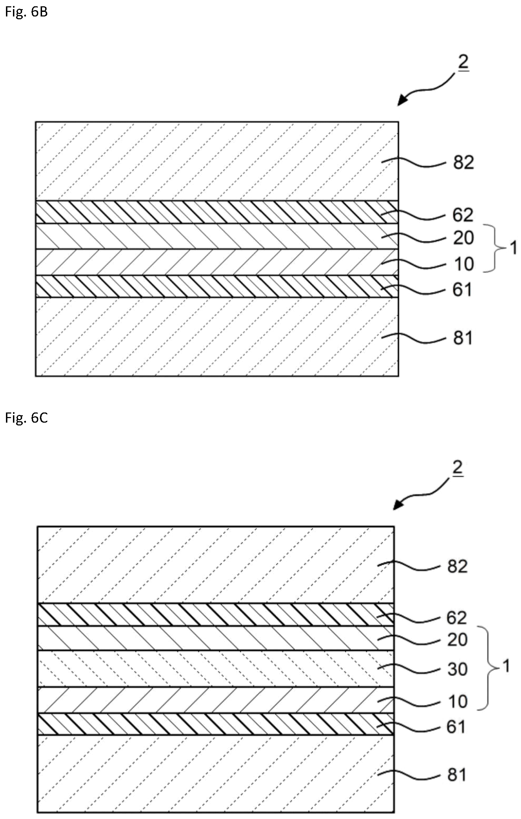

A laminate 2 shown in FIGS. 6A to 6D comprises a first heat-seal layer 81, a first adhesive layer 61, a stretched film 1, a second adhesive layer 62, and a second heat-seal layer 82 in this order in a laminating direction. The laminate 2 may further comprise a printed layer (not shown), and for example, may further comprise a printed layer on the second heat-seal layer 82. A laminate having such a configuration is suitable, for example, as a packaging material for forming a body portion of a tube container body.

In the laminates 2 of FIGS. 4 to 6, the orientation of the stretched film 1 may be opposite. In the laminates 2 of FIGS. 4 to 6, the present film such as a multilayer film, a printed film, or a barrier film may be provided instead of the stretched film 1. In FIGS. 4 to 6, the adhesive layers 60, 61, and 62 may be, for example, adhesive agent layers or extruded resin layers.

### [Packaging Container]

The laminate of the present disclosure can be suitably used for packaging material applications. The packaging material is used for producing a packaging container. Examples of the packaging container include packaging bags, tube containers, and containers with lids.

Examples of the packaging bag include packaging bags in various forms such as a standing pouch type, a side-sealed type, a two-side-sealed type, a three-side-sealed type, a four-side-sealed type, an envelope-style-sealed type, a fin-sealed type (pillow-sealed type), a folded-sealed type, a flat-bottom-sealed type, a square-bottom-sealed type, and a gusseted type. The packaging bag may be, for example, a small bag or a zippered bag. The packaging bag may be a refill pouch, particularly a standing pouch, containing content such as a liquid or a powder to be refilled into a container such as a bottle. The packaging bag may be, for example, a flexible packaging bag.

The packaging container of the present disclosure comprises the laminate of the present disclosure.

The packaging container of the present disclosure has, for example:
one or more laminates of the present disclosure;
a sealed portion in which the heat-seal layers of the laminates are joined to each other; and
a housing portion containing content.

The sealed portion includes an inner edge defining the housing portion.

Examples of the method for forming the sealed portion include heat sealing in which the heat-seal layer of the laminate is melted by heating or the like to fuse the heat-seal layers to each other, and specific examples thereof include bar sealing, rotary roll sealing, belt sealing, impulse sealing, high-frequency sealing, and ultrasonic sealing. For example, after housing content in a packaging bag, the packaging bag can be sealed by heat-sealing an opening of the packaging bag.

The packaging bag may comprise an easy-opening portion. Examples of the easy-opening portion include a notch portion serving as a starting point for tearing the packaging bag, and a half-cut line formed by laser processing, a cutter, or the like as a path for tearing the packaging bag.

In one embodiment, the laminate of the present disclosure is used as a lid material in a container with a lid. The container with a lid comprises a container body having a housing portion, and a lid material joined (heat-sealed) to the container body so as to seal the housing portion. Here, the lid material, that is, the heat-seal layer of the laminate, and the container body are heat-sealed. Examples of the shape of the container body include a cup shape and a bottomed cylindrical shape. The container body is made of, for example, polystyrene, polypropylene, polyethylene, or paper.

Examples of the content housed in the packaging container include a liquid, a solid, a powder, and a gel. The content may be food and drink, or may be non-food and drink such as a chemical product, a cosmetic product, a pharmaceutical product, a metal part, and an electronic part. Examples of the content include shampoo, rinse, conditioner, hand soap, body soap, an aromatic agent, a deodorant, a deodorizer, an insect repellent, a fabric softener, a detergent; sauce, soy sauce, dressing, cooking oil, mayonnaise, ketchup, syrup, cooking alcoholic beverages, other liquid or viscous seasonings; fruit juices; spices; liquid beverages, jelly-like beverages, liquid soups, powdered soups, instant foods, other food and drink; cream; toothpaste, tooth paste; metal parts, and electronic parts. For example, as the content of the tube container, toothpaste and tooth paste are preferable.

In one embodiment, a packaging bag can be produced by folding two a laminate of the present disclosure such that, for example, the film of the present disclosure is located on the outside and the heat-seal layer is located on the inside, superimposing them, and heat-sealing an end portion or the like thereof. In another embodiment, a packaging bag can be produced by superimposing a plurality of the laminates of the present disclosure such that the heat-seal layers face each other, and heat-sealing an end portion or the like thereof. The entire packaging bag may be composed of the laminate, or a part of the packaging bag may be composed of the laminate.

In one embodiment, the standing pouch comprises a body portion composed of a side surface sheet and a bottom portion composed of a bottom surface sheet. Since the bottom surface sheet holds the shape of the side surface sheet, self-standing properties are imparted to the pouch, and a standing type pouch can be obtained. A housing portion for housing content is formed in a region surrounded by the side surface sheet and the bottom surface sheet. In the standing pouch, only the side surface sheet may be the laminate of the present disclosure, only the bottom surface sheet may be the laminate of the present disclosure, or both the side surface sheet and the bottom surface sheet may be the laminate of the present disclosure.

In one embodiment, the side surface sheet can be formed by forming a bag such that the heat-seal layer comprised in the laminate of the present disclosure becomes an innermost layer. In one embodiment, the side surface sheet can be formed by preparing two laminates of the present disclosure, superimposing them such that the heat-seal layers face each other, and heat-sealing side edge portions on both sides to form a bag.

In another embodiment, the side surface sheet can be formed by preparing two laminates of the present disclosure, superimposing them such that the heat-seal layers face each other, inserting two laminates folded in a V-shape such that the heat-seal layer is located on the outside between the laminates at the side edge portions on both sides of the superimposed laminates, respectively, and heat-sealing them. According to such a production method, a standing pouch having a body portion with side gussets is obtained.

In one embodiment, the bottom surface sheet can be formed by inserting the laminate of the present disclosure between lower portions of the side surface sheets formed into a bag, and heat-sealing them. More specifically, the bottom surface sheet can be formed by inserting the laminate folded in a V-shape such that the heat-seal layer is located on the outside between the lower portions of the side surface sheets formed into a bag, and heat-sealing them.

In one embodiment, two laminates of the present disclosure are prepared, they are superimposed such that the heat-seal layers face each other, and then another laminate of the present disclosure is folded in a V-shape such that the heat-seal layer is located on the outside, this is sandwiched in a lower portion of the superimposed laminates, and a bottom portion is formed by heat-sealing. Next, a body portion is formed by heat-sealing two sides adjacent to the bottom portion. In this way, the standing pouch of one embodiment can be formed.

Hereinafter, a case where the laminate of the present disclosure is applied to a tube container body constituting a tube container will be described. The tube container body comprises the laminate of the present disclosure. The tube container body comprises a head portion and a body portion, and for example, the body portion is composed of the laminate of the present disclosure.

The head portion comprises a shoulder portion connected to one end of the body portion, and an extraction port portion connected to the shoulder portion. In one embodiment, the extraction port portion comprises a thread for screwing a cap.

In one embodiment, the head portion is formed of a resin composition containing a thermoplastic resin. Examples of the thermoplastic resin include polyolefins such as polyethylene and polypropylene, polyesters, cellulose resins, and vinyl resins. The resin composition may contain the above additives. In one embodiment, the head portion is formed of a resin composition containing polyethylene. With such a configuration, the recyclability of the tube container body can be improved. Examples of the polyethylene include high-density polyethylene, medium-density polyethylene, high-pressure low-density polyethylene, and linear low-density polyethylene. Among these, high-density polyethylene is preferable from the viewpoint of shape retention and moldability. The resin composition may contain at least one selected from the group consisting of biomass polyethylene and recycled polyethylene.

The head portion can be produced by a conventionally known method. For example, the head portion can be produced by a compression molding method (compression molding method) or an injection molding method (injection molding method), and at the same time, can be joined to the body portion.

In the tube container body, the body portion is connected to the shoulder portion of the head portion. The body portion comprises, for example, a fused portion formed by superimposing the laminate of the present disclosure such that a surface on a first heat-seal layer side of one end portion of the laminate and a surface on a second heat-seal layer side of the other end portion thereof are in contact with each other, rolling it into a cylindrical shape, and heat-sealing the superimposed portion. The body portion comprises, for example, a bottom-sealed portion formed by heat-sealing an opening of the laminate rolled into a cylindrical shape.

Examples of the heat-sealing method include conventionally known methods such as bar sealing, rotary roll sealing, belt sealing, impulse sealing, high-frequency sealing, ultrasonic sealing, and flame sealing.

For example, a cylindrical body portion may be produced by superimposing the laminate of the present disclosure such that the surface on the first heat-seal layer side of one end portion of the laminate and the surface on the second heat-seal layer side of the other end portion thereof are in contact with each other, rolling it into a cylindrical shape, and heat-sealing the superimposed portion. From the viewpoint of heat-sealability, it is preferable that one end portion superimposed is the first heat-seal layer and the other end portion is the second heat-seal layer. In this case, the first heat-seal layer and the second heat-seal layer are melted and joined to each other to form a fused portion.

In the above embodiment, the fused portion is formed by superimposing. The same surfaces of both end portions of the laminate may be butted against each other, and the first heat-seal layers may be heat-sealed and joined to each other. In this case, a joining tape may be attached to the outer surface side of the body portion so as to cover the joined portion.

The tube container comprises a tube container body and a cap attached to the head portion.

The cap is detachably attached to the extraction port portion of the head portion and has a role of closing the extraction port portion. In one embodiment, the cap is formed of a resin composition containing a thermoplastic resin. Examples of the thermoplastic resin include polyolefins such as polyethylene and polypropylene, polyesters, cellulose resins, and vinyl resins. From the viewpoint of recyclability, polyethylene is particularly preferable. Examples of the polyethylene include high-density polyethylene, medium-density polyethylene, low-density polyethylene, linear low-density polyethylene, and ultra-low-density polyethylene. Among these, high-density polyethylene is preferable from the viewpoint of shape retention and openability. The resin composition may contain at least one selected from the group consisting of biomass polyethylene and recycled polyethylene. The resin composition may contain the above additives.

The cap may be a screw type having a groove on an inner surface of the cap so as to be screwed into a thread provided on the extraction port portion, or may be a plugging type fitted by plugging into the extraction port portion.

### [Examples of aspect]

The present disclosure relates to, for example, the following [1] to [34].
[1] A film comprising at least a layer containing, as a main component, a high-density polyethylene (A) satisfying at least one requirement selected from the group consisting of the following (a1) to (a2):
   (a1) the high-density polyethylene (A) has a peak whose Full-Width at Quarter-Maximum (FWQM) value is less than 1.5 in a differential molecular weight distribution curve (horizontal axis: common logarithmic value (LogM) of molecular weight (M), vertical axis: value dW/d(LogM) obtained by differentiating an integrated concentration fraction (W) with respect to the common logarithmic value of molecular weight (M)) obtained by high-temperature gel permeation chromatography (GPC) measurement;
   (a2) a difference (LogM₉₀-LogM₁₀) between a 90th percentile value (LogM₉₀) and a 10th percentile value (LogM₁₀) of a molecular weight distribution in the differential molecular weight distribution curve of the high-density polyethylene (A) is less than 1.25.
[2] The film according to [1], which is a film containing the high-density polyethylene (A) as a main component.
[3] The film according to [1] or [2], which is a single-layer film containing the high-density polyethylene (A) as a main component, or is a multilayer film comprising two or more layers of the layer containing the high-density polyethylene (A) as a main component.
[2A, 3A] A stretched film obtained by stretching the film according to [2] or [3], wherein a scattering intensity ratio I₁/I₂ obtained by Raman spectroscopic measurement on a cross section of the stretched film is 1.1 or more.
[4] The film according to any one of [1] to [3], wherein the layer further contains a high-density polyethylene (B), the high-density polyethylene (A) has a narrower molecular weight distribution than the high-density polyethylene (B) in a differential molecular weight distribution curve obtained by high-temperature gel permeation chromatography (GPC) measurement, the content of the high-density polyethylene (A) in the layer is from 50% by mass to 98% by mass, the content of the high-density polyethylene (B) is from 2% by mass to 50% by mass, and the film comprises one or two or more layers of the layer.
[4A] The film according to [4], wherein the film comprises at least a first surface resin layer, an intermediate layer, and a second surface resin layer in this order in a laminating direction, and at least one layer selected from the group consisting of the first surface resin layer, the intermediate layer, and the second surface resin layer is the layer containing the high-density polyethylene (A) and the high-density polyethylene (B).
[4B] The film according to [4A], wherein, with respect to the thickness of the film, the thickness of the first surface resin layer is from 10% to 50%, the thickness of the intermediate layer is from 20% to 80%, and the thickness of the second surface resin layer is from 10% to 50%.
[4C] A stretched film obtained by stretching the film according to [4A] or [4B], wherein a scattering intensity ratio I₁/I₂ obtained by Raman spectroscopic measurement on a cross section of a layer corresponding to the layer containing the high-density polyethylene (A) and the high-density polyethylene (B) of the stretched film is 1.1 or more.
[5] The film according to any one of [1] to [4], which is a multilayer film comprising at least a first layer as the layer containing the high-density polyethylene (A) as a main component, and a second layer containing polyethylene as a main component.
[6] The film according to [5], wherein the second layer contains the high-density polyethylene (A) as a main component, and the high-density polyethylene (A) contained in the first layer may be the same polyethylene as or a different polyethylene from the high-density polyethylene (A) contained in the second layer.
[7] The film according to [5] or [6], wherein the multilayer film further comprises, between the first layer and the second layer, at least one layer selected from the group consisting of an intermediate layer containing the high-density polyethylene (A) as a main component, an intermediate layer containing a high-density polyethylene (B) as a main component, an intermediate layer containing at least one low-density polyethylene (C) selected from the group consisting of linear low-density polyethylene and high-pressure low-density polyethylene as a main component, and an intermediate layer containing medium-density polyethylene as a main component, and the high-density polyethylene (B) has a broader molecular weight distribution than the high-density polyethylene (A) in a differential molecular weight distribution curve obtained by high-temperature GPC measurement.
[7A] A stretched film obtained by stretching the film according to [7], wherein I₁/I₂ obtained by Raman spectroscopic measurement on the cross section of a layer corresponding to the first layer of the stretched film is 1.1 or more, I₁/I₂ obtained by Raman spectroscopic measurement on the cross section of a layer corresponding to the intermediate layer containing the high-density polyethylene (A) as a main component, a layer corresponding to the intermediate layer containing the high-density polyethylene (B) as a main component, and a layer corresponding to the intermediate layer containing medium-density polyethylene as a main component of the stretched film are each independently 1.1 or more, and I₁/I₂ obtained by Raman spectroscopic measurement on the cross section of a layer corresponding to the intermediate layer containing the low-density polyethylene (C) as a main component of the stretched film is less than 1.1.
[8] The film according to [5] or [6], wherein the multilayer film further comprises, between the first layer and the second layer, an intermediate layer containing a high-density polyethylene (B) as a main component.
[9] The film according to [5] or [6], wherein the multilayer film comprises at least, between the first layer and the second layer, a first intermediate layer containing a high-density polyethylene (B) as a main component, a second intermediate layer containing polyethylene as a main component, and a third intermediate layer containing a high-density polyethylene (B) as a main component in this order in a laminating direction, and the high-density polyethylene (B) contained in the first intermediate layer may be the same polyethylene as or a different polyethylene from the high-density polyethylene (B) contained in the third intermediate layer.
[10] The film according to [9], wherein the second intermediate layer contains at least one low-density polyethylene (C) selected from the group consisting of linear low-density polyethylene and high-pressure low-density polyethylene as a main component.
[11] The film according to [5] or [6], wherein the multilayer film comprises at least, between the first layer and the second layer, a first intermediate layer containing a low-density polyethylene (C) as a main component, a second intermediate layer containing a high-density polyethylene (B) as a main component, and a third intermediate layer containing a low-density polyethylene (C) as a main component in this order in a laminating direction, and the low-density polyethylene (C) contained in the first intermediate layer may be the same polyethylene as or a different polyethylene from the low-density polyethylene (C) contained in the third intermediate layer.
[12] The film according to [5] or [6], which is a multilayer film comprising at least, in this order in a laminating direction, a first layer containing the high-density polyethylene (A) as a main component, a first intermediate layer containing the high-density polyethylene (A) as a main component and containing a low-density polyethylene (C), a second intermediate layer containing the low-density polyethylene (C) as a main component, a third intermediate layer containing the high-density polyethylene (A) as a main component and containing a low-density polyethylene (C), and a second layer containing the high-density polyethylene (A) as a main component, wherein the high-density polyethylenes (A) contained in the first layer, the first intermediate layer, the third intermediate layer, and the second layer may be the same as or different from each other, the low-density polyethylene (C) is at least one polyethylene selected from the group consisting of linear low-density polyethylene and high-pressure low-density polyethylene, and the low-density polyethylenes (C) contained in the first intermediate layer, the second intermediate layer, and the third intermediate layer may be the same as or different from each other.
[12A] The film according to [12], wherein, in the first and third intermediate layers, each independently, the content of the high-density polyethylene (A) is from 50% by mass to 98% by mass, and the content of the low-density polyethylene (C) is from 2% by mass to 50% by mass.
[12B] The film according to [12] or [12A], wherein, with respect to the thickness of the multilayer film, the thickness of the first layer is from 5% to 50%, the total thickness of intermediate layers present between the first layer and the second layer is from 20% to 90%, and the thickness of the second layer is from 5% to 50%.
[12C] A stretched film obtained by stretching the film according to [12], [12A], or [12B], wherein I1/I2 obtained by Raman spectroscopic measurement on the respective cross sections of a layer corresponding to the first layer, a layer corresponding to the first intermediate layer, a layer corresponding to the third intermediate layer, and a layer corresponding to the second layer of the stretched film are each independently 1.1 or more, and I1/I2 obtained by Raman spectroscopic measurement on the cross section of a layer corresponding to the second intermediate layer of the stretched film is less than 1.1.
[13] The film according to any one of [1] to [6], which is a multilayer film comprising at least a first layer containing polyethylene as a main component, an intermediate layer as the layer containing the high-density polyethylene (A) as a main component, and a second layer containing polyethylene as a main component in this order in a laminating direction, wherein the polyethylene contained in the first layer may be the same polyethylene as or a different polyethylene from the polyethylene contained in the second layer.
[13A] The film according to [13], wherein the multilayer film further comprises, between the first layer and the second layer, at least one layer selected from the group consisting of an intermediate layer containing a high-density polyethylene (B) as a main component, an intermediate layer containing at least one low-density polyethylene (C) selected from the group consisting of linear low-density polyethylene and high-pressure low-density polyethylene as a main component, and an intermediate layer containing medium-density polyethylene as a main component, and the high-density polyethylene (B) has a broader molecular weight distribution than the high-density polyethylene (A) in a differential molecular weight distribution curve obtained by high-temperature GPC measurement.
[13B] The film according to [13] or [13A], wherein the multilayer film comprises at least, between the first layer and the second layer, a first intermediate layer, a second intermediate layer, and a third intermediate layer in this order in a laminating direction, the first intermediate layer and the third intermediate layer are the intermediate layers containing the high-density polyethylene (A) as a main component, the high-density polyethylene (A) contained in the first intermediate layer may be the same polyethylene as or a different polyethylene from the high-density polyethylene (A) contained in the third intermediate layer, and the second intermediate layer is at least one layer selected from the group consisting of the intermediate layer containing the high-density polyethylene (A) as a main component, an intermediate layer containing at least one low-density polyethylene (C) selected from the group consisting of linear low-density polyethylene and high-pressure low-density polyethylene as a main component, and an intermediate layer containing medium-density polyethylene as a main component.
[13C] The film according to [13] or [13A], wherein the multilayer film comprises at least, between the first layer and the second layer, a first intermediate layer, a second intermediate layer, and a third intermediate layer in this order in a laminating direction, the second intermediate layer is the intermediate layer containing the high-density polyethylene (A) as a main component, the first intermediate layer and the third intermediate layer are intermediate layers containing at least one low-density polyethylene (C) selected from the group consisting of linear low-density polyethylene and high-pressure low-density polyethylene as a main component, and the low-density polyethylene (C) contained in the first intermediate layer may be the same polyethylene as or a different polyethylene from the low-density polyethylene (C) contained in the third intermediate layer.
[13D] The film according to any one of [13] and [13A] to [13C], wherein the first layer and the second layer are layers containing a high-density polyethylene (B) as a main component, the high-density polyethylene (B) contained in the first layer may be the same polyethylene as or a different polyethylene from the high-density polyethylene (B) contained in the second layer, and the high-density polyethylene (B) has a broader molecular weight distribution than the high-density polyethylene (A) in a differential molecular weight distribution curve obtained by high-temperature GPC measurement.
[13E] A stretched film obtained by stretching the film according to any one of [13] and [13A] to [13D], wherein a scattering intensity ratio I1/I2 obtained by Raman spectroscopic measurement on a cross section of a layer corresponding to the intermediate layer containing the high-density polyethylene (A) as a main component of the stretched film is 1.1 or more.
[13F] A stretched film obtained by stretching the film according to any one of [13] and [13A] to [13D], wherein a maximum dimensional change rate in a stretching direction in a range from 20°C to 120°C by a tensile mode of thermomechanical analysis (TMA) is more than -25% and less than 25%.
[14] The film according to any one of [1] to [13], wherein the high-density polyethylene (A) further satisfies at least one requirement selected from the group consisting of the following (a3) to (a4):
   (a3) the peak of the high-density polyethylene (A) has a maximum value of dW/d(LogM) of 0.80 or more in the differential molecular weight distribution curve;
   (a4) the high-density polyethylene (A) has a density of more than 0.945 g/cm³ and 0.970 g/cm³ or less, and/or a melting point of 125°C or more and 140°C or less.
[14A] The film according to any one of [7] to [14], wherein the low-density polyethylene (C) has a density of 0.920 g/cm³ or less, and/or a melting point of less than 120°C, and the medium-density polyethylene has a density of 0.930 g/cm³ or more and 0.945 g/cm³ or less, and/or a melting point of 120°C or more and 135°C or less.
[15] The film according to any one of [4] to [14], wherein the high-density polyethylene (B) satisfies at least one requirement selected from the group consisting of the following (b1) to (b2):
   (b1) the high-density polyethylene (B) has a peak whose Full-Width at Quarter-Maximum (FWQM) value is 1.5 or more in a differential molecular weight distribution curve obtained by high-temperature GPC measurement;
   (b2) a difference (LogM₉₀-LogM₁₀) between a 90th percentile value (LogM₉₀) and a 10th percentile value (LogM₁₀) of a molecular weight distribution in the differential molecular weight distribution curve of the high-density polyethylene (B) is 1.25 or more.
[16] The film according to [15], wherein the high-density polyethylene (B) further satisfies at least one requirement selected from the group consisting of the following (b3) to (b4):
   (b3) the peak of the high-density polyethylene (B) has a maximum value of dW/d(LogM) of less than 0.80 in the differential molecular weight distribution curve;
   (b4) the high-density polyethylene (B) has a density of more than 0.945 g/cm³ and 0.970 g/cm³ or less, and/or a melting point of 125°C or more and 140°C or less.
[17] A multilayer film comprising at least, in this order in a laminating direction: a first layer containing a high-density polyethylene (A) as a main component; a first intermediate layer containing a high-density polyethylene (B) as a main component; a second intermediate layer containing at least one low-density polyethylene (C) selected from the group consisting of linear low-density polyethylene and high-pressure low-density polyethylene as a main component; a third intermediate layer containing a high-density polyethylene (B) as a main component; and a second layer containing a high-density polyethylene (A) as a main component,
   wherein the high-density polyethylene (A) has a narrower molecular weight distribution than the high-density polyethylene (B) in a differential molecular weight distribution curve (horizontal axis: common logarithmic value (LogM) of molecular weight (M), vertical axis: value dW/d(LogM) obtained by differentiating an integrated concentration fraction (W) with respect to the common logarithmic value of molecular weight (M)) obtained by high-temperature gel permeation chromatography (GPC) measurement,
   the high-density polyethylene (A) contained in the first layer may be the same polyethylene as or a different polyethylene from the high-density polyethylene (A) contained in the second layer, and the high-density polyethylene (B) contained in the first intermediate layer may be the same polyethylene as or a different polyethylene from the high-density polyethylene (B) contained in the third intermediate layer.
[17A] The multilayer film according to [17], wherein, with respect to the thickness of the multilayer film, the thickness of the first layer is from 5% to 50%, the total thickness of intermediate layers present between the first layer and the second layer is from 20% to 90%, and the thickness of the second layer is from 5% to 50%.
[17B] A stretched film obtained by stretching the film according to [17] or [17A], wherein I₁/I₂ obtained by Raman spectroscopic measurement on the respective cross sections of a layer corresponding to the first layer, a layer corresponding to the first intermediate layer, a layer corresponding to the third intermediate layer, and a layer corresponding to the second layer of the stretched film are each independently 1.1 or more, and I₁/I₂ obtained by Raman spectroscopic measurement on the cross section of a layer corresponding to the second intermediate layer is less than 1.1.
[17C] A stretched film obtained by stretching the film according to any one of [17], [17A], and [17B], wherein a dimensional change rate in a stretching direction, which is measured by being allowed to stand in an environment of 120°C for 5 minutes, is from -7% to 0%.
[17D] A stretched film obtained by stretching the film according to any one of [17] and [17A] to [17C], wherein the entire polyethylene has a peak whose half-width is less than 1.3 in a differential molecular weight distribution curve obtained by high-temperature GPC measurement.
[18] The multilayer film according to [17], wherein the high-density polyethylene (A) has a peak in which a maximum value of dW/d(LogM) is 0.80 or more and a half-width is less than 1.1 in the differential molecular weight distribution curve, and the high-density polyethylene (B) has a peak in which a maximum value of dW/d(LogM) is less than 0.80 and a half-width is 1.1 or more in the differential molecular weight distribution curve.
[19] The multilayer film according to [17] or [18], wherein the first intermediate layer further contains a low-density polyethylene (C), the third intermediate layer further contains a low-density polyethylene (C), and the low-density polyethylenes (C) contained in the first intermediate layer, the second intermediate layer, and the third intermediate layer may be the same as or different from each other.
[19A] The multilayer film according to [19], wherein the high-density polyethylene (A) satisfies at least one requirement selected from the group consisting of the (a1) to (a2).
[19B] The multilayer film according to [19] or [19A], wherein, in the first and third intermediate layers, each independently, the content of the high-density polyethylene (B) is from 50% by mass to 98% by mass, and the content of the low-density polyethylene (C) is from 2% by mass to 50% by mass.
[19C] The multilayer film according to any one of [19], [19A], and [19B], wherein, with respect to the thickness of the multilayer film, the thickness of the first layer is from 5% to 50%, the total thickness of intermediate layers present between the first layer and the second layer is from 20% to 90%, and the thickness of the second layer is from 5% to 50%.
[19D] A stretched film obtained by stretching the film according to any one of [19] and [19A] to [19C], wherein I₁/I₂ obtained by Raman spectroscopic measurement on the respective cross sections of a layer corresponding to the first layer, a layer corresponding to the first intermediate layer, a layer corresponding to the third intermediate layer, and a layer corresponding to the second layer of the stretched film are each independently 1.1 or more, and I₁/I₂ obtained by Raman spectroscopic measurement on the cross section of a layer corresponding to the second intermediate layer of the stretched film is less than 1.1.
[20] The film or the multilayer film according to any one of [1] to [19], which is a coextruded film.
[21] The film or the multilayer film according to any one of [1] to [20], which is a substrate.
[22] The film or the multilayer film according to any one of [1] to [21], which is a substrate for printing.
[23] A stretched film comprising at least a first layer containing polyethylene as a main component and a second layer containing polyethylene as a main component in this order in a laminating direction, wherein the stretched film further comprises, between the first layer and the second layer, an intermediate layer containing polyethylene as a main component and having a scattering intensity ratio I₁/I₂ of less than 1.1, the scattering intensity ratio I₁/I₂ is obtained by Raman spectroscopic measurement on a cross section of the intermediate layer, the cross section is a surface parallel to a plane including the laminating direction perpendicular to a main surface of the stretched film and a stretching direction of the stretched film, the I₁ is a maximum scattering intensity of a peak observed in a region from 1100 cm⁻¹ to 1150 cm⁻¹ in the Raman spectroscopic measurement, and the I₂ is a maximum scattering intensity of a peak observed in a region of 1050 cm⁻¹ or more and less than 1100 cm⁻¹ in the Raman spectroscopic measurement.
[23A] The stretched film according to [23], wherein I₁/I₂ obtained by Raman spectroscopic measurement on the respective cross sections of the first layer and the second layer of the stretched film are each independently 1.1 or more.
[23B] The stretched film according to [23] or [23A], wherein the stretched film comprises, between the first layer and the second layer, a first intermediate layer containing polyethylene as a main component, a second intermediate layer containing polyethylene as a main component, and a third intermediate layer containing polyethylene as a main component, the second intermediate layer is the intermediate layer having the scattering intensity ratio I₁/I₂ of less than 1.1, and the first intermediate layer and the third intermediate layer are each independently an intermediate layer having a scattering intensity ratio I₁/I₂ obtained by Raman spectroscopic measurement on a cross section thereof of 1.1 or more.
[23C] The stretched film according to [23B], wherein the stretched film comprises at least the first layer, the first intermediate layer, the second intermediate layer, the third intermediate layer, and the second layer in this order in a laminating direction, I₁/I₂ of the first layer ≥ I₁/I₂ of the first intermediate layer, and I₁/I₂ of the second layer ≥ I₁/I₂ of the third intermediate layer.
[23D] The stretched film according to any one of [23] and [23A] to [23C], wherein the stretched film is obtained by stretching a multilayer film comprising at least a first layer containing high-density polyethylene or medium-density polyethylene as a main component, a first intermediate layer containing high-density polyethylene or medium-density polyethylene as a main component, a second intermediate layer containing at least one selected from the group consisting of linear low-density polyethylene and high-pressure low-density polyethylene as a main component, a third intermediate layer containing high-density polyethylene or medium-density polyethylene as a main component, and a second layer containing high-density polyethylene or medium-density polyethylene as a main component in this order in a laminating direction.
[23E] The stretched film according to any one of [23] and [23A] to [23D], wherein, with respect to the thickness of the stretched film, the thickness of the first layer is from 5% to 50%, the total thickness of intermediate layers present between the first layer and the second layer is from 20% to 90%, and the thickness of the second layer is from 5% to 50%.
[24] A stretched film obtained by stretching the film or the multilayer film according to any one of [1] to [22].
[25] The stretched film according to [23] or [24], which is a uniaxially stretched film.
[26] The stretched film according to any one of [23] to [25], which is a substrate.
[27] The stretched film according to any one of [23] to [26], which is a substrate for printing.
[28] The stretched film according to any one of [23] to [27], wherein the content of polyethylene in the stretched film is 80% by mass or more.
[29] The stretched film according to any one of [23] to [28], wherein the stretched film satisfies at least one requirement selected from the group consisting of the following (1) to (2):
   (1) the stretched film has a dimensional change rate in a stretching direction of -10% or more and 0% or less, which is measured by hanging a test piece such that a film surface is parallel to a vertical direction and a stretching direction of the film is in a direction perpendicular to the vertical direction, and leaving it in an environment of 120°C for 5 minutes;
   (2) the stretched film has a maximum dimensional change rate in a stretching direction in a range from 20°C to 120°C by a tensile mode of thermomechanical analysis (TMA) of -15% or more and 15% or less.
[30] The stretched film according to any one of [23] to [29], wherein the entire polyethylene contained in the stretched film has a peak whose FWQM value is less than 1.8 in a differential molecular weight distribution curve obtained by high-temperature GPC measurement.
[31] A laminate comprising at least: at least one film selected from the group consisting of the film or the multilayer film according to any one of [1] to [22] and the stretched film according to any one of [23] to [30]; and a heat-seal layer.
[32] The laminate according to [31], wherein the heat-seal layer contains polyethylene as a main component, and the content of polyethylene in the entire laminate is 80% by mass or more.
[33] A packaging container comprising the laminate according to [32].
[34] The packaging container according to [33], which is a packaging bag.

### Example

Hereinafter, the present film, the stretched film, and the like will be described more specifically by way of Examples, but the present film, the stretched film, and the like are not limited to the following Examples in any way.

### [Differential Molecular Weight Distribution Curve]

A differential molecular weight distribution curve of polyethylene was obtained by high-temperature gel permeation chromatography (GPC) measurement as follows. Polyethylene was dissolved in o-dichlorobenzene (containing 0.025 wt% BHT) at 145°C under conditions of being allowed to stand for 1 hour and being stirred for 1 hour. The obtained solution was pressure-filtered using a membrane filter having a filter pore size of 1.0 µm and a membrane filter having a filter pore size of 0.5 µm. High-temperature GPC measurement was performed on the solution after the pressure filtration under the following conditions. From the obtained data, an integrated concentration fraction (mass ratio of polyethylene having a certain molecular weight or less to the entire polyethylene) was determined, and an integral molecular weight distribution curve was obtained in which a horizontal axis represents a common logarithmic value of a polystyrene-equivalent molecular weight and a vertical axis represents the integrated concentration fraction. Next, a differential molecular weight distribution curve was obtained in which a horizontal axis represents a common logarithmic value of a polystyrene-equivalent molecular weight and a vertical axis represents a value (dW/d(LogM)) obtained by differentiating the integrated concentration fraction with respect to the common logarithmic value of the polystyrene-equivalent molecular weight.

### (Conditions)

- Apparatus: Senshu Scientific Co., Ltd., SSC-7120 HT-GPC System
- Sample amount: about 3 mg of sample piece per 3 mL of solvent
- Injection volume: 300 µL
- Guard column: guardcolumn HHR-H(S) HT2
- Separation columns: two GMHHR-H(S) HT2 (inner diameter: 7.8 mm)
- Column temperature: 145°C
- Mobile phase: o-dichlorobenzene (containing 0.025 wt% BHT)
- Flow rate: 0.95 mL/min
- Detector: differential refractometer
- Molecular weight calibration: polystyrene-equivalent

The 1/4 width of the peak appearing in the differential molecular weight distribution curve and the maximum value (peak top value) of dW/d(LogM) were calculated. The 10th percentile value of the differential molecular weight distribution was determined as the common logarithmic value of the molecular weight when the integrated concentration fraction in the integral molecular weight distribution curve was 10% by mass. The 90th percentile value of the differential molecular weight distribution was determined as the common logarithmic value of the molecular weight when the integrated concentration fraction in the integral molecular weight distribution curve was 90% by mass.

With respect to the maximum value (peak top value) of dW/d(LogM) in the differential molecular weight distribution curve, when the peak top value is not explicitly shown on the data representing the differential molecular weight distribution curve, the peak top value may be determined from an approximate expression. In this case, the peak top value can be determined from an approximate expression of a sixth-order polynomial passing through the maximum data of dW/d(LogM) and four points before and after it (nine points in total).

The peak of the differential molecular weight distribution obtained by high-temperature GPC measurement of polyethylene was examined. A polyethylene having a peak with a 1/4 width of less than 1.5 in the differential molecular weight distribution, or a polyethylene in which the difference between the 90th percentile value and the 10th percentile value is less than 1.25, was judged to have a relatively "narrow molecular weight distribution" (sharp shape). A polyethylene having a peak with a 1/4 width of 1.5 or more in the differential molecular weight distribution, or a polyethylene in which the difference between the 90th percentile value and the 10th percentile value is 1.25 or more, was judged to have a relatively "broad molecular weight distribution" (broad shape).

The weight-average molecular weight (Mw) of polyethylene was obtained by the above high-temperature GPC measurement.

### [Materials for Present Film, Stretched Film, and the like (1)]

In the production of the present film, the stretched film, and the like, the following materials were used. The following high-density polyethylenes are conveniently given symbols (A) or (B) as high-density polyethylenes from the 1/4 width and the difference between the percentile values. However, this may vary depending on the layer configuration, and the following high-density polyethylenes are not necessarily classified in this way depending on the layer configuration.

**Table 1**

| | | | **Density g/cm³** | **Melting point °C** | **MFR g/10 min** | **Mw (x10⁵)** | **Width at 1/4 height** | **90th percentile - 10th percentile** | **Max. dW/d(LogM)** | **MWD evaluation** |
|---|---|---|---|---|---|---|---|---|---|---|
| **HDPE(A)** | **Niporon-P FY13** | **Tosoh Corporation** | **0.950** | **133** | **1.0** | **2.21** | **1.374** | **1.111** | **0.98** | **Narrow** |
| **HDPE(B)** | **Hz5000SF** | **Prime Polymer Co., Ltd.** | **0.954** | **132** | **0.66** | **3.16** | **2.299** | **1.810** | **0.60** | **Broad** |
| | **Hz3300F** | **Prime Polymer Co., Ltd.** | **0.950** | **130** | **1.1** | **2.38** | **1.748** | **1.458** | **0.77** | **Broad** |
| | **ELITE AT6900** | **The Dow Chemical Company** | **0.969** | **134** | **1.2** | **2.07** | **2.375** | **1.867** | **0.73** | **Broad** |
| | **HY540** | **Japan Polyethylene Corporation** | **0.960** | **135** | **1.0** | **2.74** | **1.954** | **1.580** | **0.70** | **Broad** |
| **MDPE** | **ELITE 5538G** | **The Dow Chemical Company** | **0.941** | **129** | **1.3** | **2.02** | **1.398** | **1.128** | **0.95** | **Narrow** |
| | **Niporon-P FY11** | **Tosoh Corporation** | **0.930** | **130** | **1.0** | **2.13** | **1.261** | **1.037** | **1.05** | **Narrow** |
| | **Enable4002MC** | **Exxon Mobil Corporation** | **0.940** | **128** | **0.25** | **2.36** | **1.705** | **1.312** | **0.76** | **Broad** |
| **C6-LLDPE** | **SP0820** | **Prime Polymer Co., Ltd.** | **0.910** | **98** | **1.7** | **2.10** | **1.241** | **1.066** | **1.06** | **Narrow** |
| **C6-LLDPE** | **SP0510** | **Prime Polymer Co., Ltd.** | **0.904** | **89** | **1.2** | **2.15** | **1.303** | **1.069** | **1.03** | **Narrow** |
| **LLDPE** | **Niporon-P FY12** | **Tosoh Corporation** | **0.918** | **128** | **1.5** | **2.02** | **1.219** | **0.987** | **1.09** | **Narrow** |
| **C6-LLDPE** | **XP8656M L** | **Exxon Mobil Corporation** | **0.916** | **121** | **0.5** | **2.77** | **1.695** | **1.309** | **0.77** | **Broad** |

### [Example 1A]

HDPE (A) (FY13), LLDPE (SP0820), and HDPE (B) (Hz5000SF) were three-layer coextruded by an inflation molding method at a layer thickness ratio of HDPE (A) layer (15.0 µm) / LLDPE layer (45.0 µm) / HDPE (B) layer (15.0 µm) and a film-forming temperature (die temperature) of 200°C to form a tubular film, thereby obtaining a multilayer film having a total thickness of 75 µm. The tubular multilayer film was folded at a nip point and doubled. The numerical value in parentheses indicates the thickness of the layer. The multilayer film produced above was stretched in the machine direction (MD direction) at a stretching ratio of 3 times at a stretching temperature of 125°C, and heat-set at an annealing temperature of 125°C. Next, an end portion was slit and divided into two to obtain a stretched film having a thickness of 25 µm. The stretched film comprises an HDPE (A) layer having a thickness of 5.0 µm, an LLDPE layer having a thickness of 15.0 µm, and an HDPE (B) layer having a thickness of 5.0 µm.

### [Examples 2A to 12A, 1B-8B and 1C to 8C, and Conparative Examples 1A to 6A ]

Multilayer films and stretched films were produced in the same manner as in Example 1A, except that at least one selected from the group consisting of the type of resin constituting each layer, the thickness of each layer, and the stretching ratio was changed as described in the following tables. However, in Example 12A, the stretching temperature and the annealing temperature were changed to 120°C. In the present specification, "←" in the tables means that the composition of the layer is the same as the composition in the left column.

### [Example 1D]

HDPE (A) (FY13), LLDPE (SP0820), HDPE (B) (Hz5000SF), LLDPE (SP0280), and HDPE (A) (FY13) were five-layer coextruded by an inflation molding method at a layer thickness ratio of HDPE (A) layer (17.0 µm) / LLDPE layer (9.5 µm) / HDPE (B) layer (22.0 µm) / LLDPE layer (9.5 µm) / HDPE (A) layer (17.0 µm) and a film-forming temperature (die temperature) of 200°C to form a tubular film, thereby obtaining a multilayer film having a total thickness of 75 µm. The tubular multilayer film was folded at a nip point and doubled. The numerical value in parentheses indicates the thickness of the layer. The multilayer film produced above was stretched in the machine direction (MD direction) at a stretching ratio of 3 times at a stretching temperature of 125°C, and heat-set at an annealing temperature of 125°C. Next, an end portion was slit and divided into two to obtain a stretched film having a thickness of 25 µm. The stretched film comprises an HDPE (A) layer having a thickness of 5.7 µm, an LLDPE layer having a thickness of 3.2 µm, an HDPE (B) layer having a thickness of 7.3 µm, an LLDPE layer having a thickness of 3.2 µm, and an HDPE (A) layer having a thickness of 5.7 µm.

### [Examples 2D to 9D, 1E to 10E and 1F to 8F and Comparative Examples 1B to 8B]

Multilayer films and stretched films were produced in the same manner as in Example 1D, except that at least one selected from the group consisting of the type of resin constituting each layer, the thickness of each layer, and the stretching ratio was changed as described in the following tables.

### [Example 1G]

90 parts by mass of HDPE (B) (Hz5000SF) and 10 parts by mass of LLDPE (SP0820) were mixed to obtain a blend polyethylene. HDPE (A) (FY13), the blend polyethylene, LLDPE (SP0820), the blend polyethylene, and HDPE (A) (FY13) were five-layer coextruded by an inflation molding method at a layer thickness ratio of HDPE (A) layer (22.5 µm) / blend polyethylene layer (12.5 µm) / LLDPE layer (30.0 µm) / blend polyethylene layer (12.5 µm) / HDPE (A) layer (22.5 µm) and a film-forming temperature (die temperature) of 200°C to form a tubular film, thereby obtaining a multilayer film having a total thickness of 100 µm. The tubular multilayer film was folded at a nip point and doubled. The numerical value in parentheses indicates the thickness of the layer. The multilayer film produced above was stretched in the machine direction (MD direction) at a stretching ratio of 4 times at a stretching temperature of 125°C, and heat-set at an annealing temperature of 125°C. Next, an end portion was slit and divided into two to obtain a stretched film having a thickness of 25 µm. The stretched film comprises an HDPE (A) layer having a thickness of 5.6 µm, a blend polyethylene layer having a thickness of 3.1 µm, an LLDPE layer having a thickness of 7.5 µm, a blend polyethylene layer having a thickness of 3.1 µm, and an HDPE (A) layer having a thickness of 5.6 µm.

### [Examples 2G to 10G and 1H to 10H, and Comparative Examples 1G to 2G]

Multilayer films and stretched films were produced in the same manner as in Example 1G, except that at least one selected from the group consisting of the type and blending ratio of the resin constituting each layer, the thickness of each layer, and the stretching ratio was changed as described in the following tables.

### [Example 1J]

HDPE (B) (Hz5000SF), HDPE (A) (FY13), MDPE (Enable4002MC), HDPE (A) (FY13), and HDPE (B) (Hz5000SF) were five-layer coextruded by an inflation molding method at a layer thickness ratio of HDPE (B) layer (22.5 µm) / HDPE (A) layer (12.5 µm) / MDPE layer (30.0 µm) / HDPE (A) layer (12.5 µm) / HDPE (B) layer (22.5 µm) and a film-forming temperature (die temperature) of 200°C to form a tubular film, thereby obtaining a multilayer film having a total thickness of 100 µm. The tubular multilayer film was folded at a nip point and doubled. The numerical value in parentheses indicates the thickness of the layer. The multilayer film produced above was stretched in the machine direction (MD direction) at a stretching ratio of 4 times at a stretching temperature of 125°C, and heat-set at an annealing temperature of 125°C. Next, an end portion was slit and divided into two to obtain a stretched film having a thickness of 25 µm. The stretched film comprises an HDPE (B) layer having a thickness of 5.6 µm, an HDPE (A) layer having a thickness of 3.1 µm, an MDPE layer having a thickness of 7.5 µm, an HDPE (A) layer having a thickness of 3.1 µm, and an HDPE (B) layer having a thickness of 5.6 µm.

### [Examples 2J to 13J and Comparative Examples 1J to 4J]

Multilayer films and stretched films were produced in the same manner as in Example 1J, except that at least one selected from the group consisting of the type of resin constituting each layer, the thickness of each layer, and the stretching ratio was changed as described in the following tables.

### [Example 1K]

90 parts by mass of HDPE (A) (FY13) and 10 parts by mass of HDPE (B) (Hz5000SF) were mixed to obtain a blend polyethylene. The blend polyethylene was three-layer coextruded by an inflation molding method at a layer thickness ratio of blend polyethylene layer (33.3 µm) / blend polyethylene layer (33.3 µm) / blend polyethylene layer (33.3 µm) and a film-forming temperature (die temperature) of 200°C to form a tubular film, thereby obtaining a multilayer film having a total thickness of 100 µm. The tubular multilayer film was folded at a nip point and doubled. The numerical value in parentheses indicates the thickness of the layer. The multilayer film produced above was stretched in the machine direction (MD direction) at a stretching ratio of 4 times at a stretching temperature of 125°C, and heat-set at an annealing temperature of 125°C. Next, an end portion was slit and divided into two to obtain a stretched film having a thickness of 25 µm. The stretched film comprises a blend polyethylene layer having a thickness of 8.3 µm, a blend polyethylene layer having a thickness of 8.3 µm, and a blend polyethylene layer having a thickness of 8.3 µm.

### [Examples 2K to 7K and Comparative Example 1K]

Multilayer films and stretched films were produced in the same manner as in Example 1K, except that at least one selected from the group consisting of the type and blending ratio of the resin constituting each layer, the thickness of each layer, and the stretching ratio was changed as described in the following tables.

### [Example 1L]

HDPE (A) (FY13) was five-layer coextruded by an inflation molding method at a layer thickness ratio of HDPE (A) layer (17.0 µm) / HDPE (A) layer (9.5 µm) / HDPE (A) layer (22.0 µm) / HDPE (A) layer (9.5 µm) / HDPE (A) layer (17.0 µm) and a film-forming temperature (die temperature) of 200°C to form a tubular film, thereby obtaining a polyethylene film (a single-layer film composed of HDPE (A)) having a total thickness of 75 µm. The tubular polyethylene film was folded at a nip point and doubled. The polyethylene film produced above was stretched in the machine direction (MD direction) at a stretching ratio of 3 times at a stretching temperature of 125°C, and heat-set at an annealing temperature of 125°C. Next, an end portion was slit and divided into two to obtain a stretched film having a thickness of 25 µm.

### [Examples 2L to 6L and Comparative Examples 1L to 4L]

Polyethylene films and stretched films were produced in the same manner as in Example 1L, except that at least one selected from the group consisting of the type of resin constituting each layer, the thickness of each layer, and the stretching ratio was changed as described in the following tables.

### [Example 1M]

80 parts by mass of HDPE (A) (FY13) and 20 parts by mass of LLDPE (SP0820) were mixed to obtain a blend polyethylene. HDPE (A) (FY13), the blend polyethylene, LLDPE (SP0820), the blend polyethylene, and HDPE (A) (FY13) were five-layer coextruded by an inflation molding method at a layer thickness ratio of HDPE (A) layer (22.5 µm) / blend polyethylene layer (12.5 µm) / LLDPE layer (30.0 µm) / blend polyethylene layer (12.5 µm) / HDPE (A) layer (22.5 µm) and a film-forming temperature (die temperature) of 200°C to form a tubular film, thereby obtaining a multilayer film having a total thickness of 100 µm. The tubular multilayer film was folded at a nip point and doubled. The numerical value in parentheses indicates the thickness of the layer. The multilayer film produced above was stretched in the machine direction (MD direction) at a stretching ratio of 4 times at a stretching temperature of 125°C, and heat-set at an annealing temperature of 125°C. Next, an end portion was slit and divided into two to obtain a stretched film having a thickness of 25 µm. The stretched film comprises an HDPE (A) layer having a thickness of 5.6 µm, a blend polyethylene layer having a thickness of 3.1 µm, an LLDPE layer having a thickness of 7.5 µm, a blend polyethylene layer having a thickness of 3.1 µm, and an HDPE (A) layer having a thickness of 5.6 µm.

### [Examples 2M to 10M and Comparative Examples 1M to 5M]

Multilayer films and stretched films (stretched films of a second aspect) were produced in the same manner as in Example 1M, except that at least one selected from the group consisting of the type and blending ratio of the resin constituting each layer, the thickness of each layer, and the stretching ratio was changed as described in the following tables.

### [Heat Resistance Evaluation (Appearance)]

The stretched film obtained in each Example or Comparative Example was cut into a size of 10 cm × 10 cm to obtain a test piece. Using a heat seal tester TP-701 (manufactured by Tester Sangyo Co., Ltd.), a region of 1 cm (MD direction) × 10 cm (TD direction) of the test piece was pressed under heat sealer conditions of a temperature of 120°C or 130°C, a pressure of 0.1 MPa, a pressing time of 1 second, and single-sided heating (with respect to the first layer), and the presence or absence of shrinkage in the region was visually evaluated according to the following evaluation criteria.

### <Evaluation >

A: The stretched film has not shrunk.
B: The stretched film has slightly shrunk.
C: The stretched film has largely shrunk.

### [Heat Resistance Evaluation (Dimensional Change Rate in Stretching Direction)]

The stretched film obtained in each Example or Comparative Example was cut into a size of 5 cm × 5 cm to obtain a test piece. On the surface of the test piece (of the first layer), a line of about 5 cm was drawn along the stretching direction of the stretched film (the MD direction in the above Examples or Comparative Examples), and the dimension of the line was measured using a glass scale for precision measurement S1004 (manufactured by Shibuya Optical Co., Ltd.). Hereinafter, the dimension is also referred to as "dimension before heat treatment". Using DY301 (manufactured by Yamato Scientific Co., Ltd.) as a heat treatment apparatus, the test piece was hung in a constant temperature bath such that a film surface was parallel to a vertical direction (gravity direction) and a stretching direction of the film was in a direction perpendicular to the vertical direction, and heat treatment was performed by leaving it in an environment of 120°C for 5 minutes. Using the above glass scale, the dimension of the line on the test piece after the heat treatment was measured. Hereinafter, the dimension is also referred to as "dimension after heat treatment". From the obtained dimensions before and after the heat treatment, the dimensional change rate in the stretching direction was determined. $\begin{matrix}Dimensional change rate \left(%\right) \\ = \left(\begin{matrix}\left(dimension after heat treatment-dimension before heat treatment\right) / dimension before heat \\ treatment\end{matrix}\right) \times 100\end{matrix}$

Elongation: The numerical value of the dimensional change rate shows a positive value.

Shrinkage: The numerical value of the dimensional change rate shows a negative value.

### [Heat Resistance Evaluation (Maximum Dimensional Change Rate in Stretching Direction)]

The dimensional change rate (ΔL) in the stretching direction of the stretched film was measured by a tensile mode of thermomechanical analysis (TMA). In the measurement of the dimensional change rate, a tensile force was applied to a sample of the stretched film held by chucks. Subsequently, the dimensional change rate of the sample was measured while changing the environment around the sample in the order of the following temperature-lowering step and temperature-raising step. The dimensional change rate was calculated from the dimension of the sample in the temperature-raising step.

Specific conditions are as follows.
- Apparatus: TMA-SS7100 (manufactured by Hitachi High-Tech Science Corporation)
- Length of sample between chucks: 10 mm
- Width of sample: 5 mm
- Tensile force: 100 mN
- Atmosphere gas: Nitrogen

Temperature-lowering step: After the temperature was lowered from 20°C to -10°C at 10°C/min, -10°C was maintained for 15 minutes.

Temperature-raising step: The temperature was raised from -10°C to 130°C at 10°C/min.

The dimensional change rate (ΔL) is calculated by the following formula.

The unit of the dimensional change rate (ΔL) is %. $\begin{matrix}ΔL = ΔL \left({T}_{1}\right) \\ = \left\{\left({L}_{1}\left({T}_{1}\right)-{L}_{0}\right)/{L}_{0}\right\} \times 100\end{matrix}$

L₀ is a distance between chucks when a load of 100 mN is applied at room temperature (23°C) before the start of measurement. L₁(T₁) is a distance between chucks at an arbitrary temperature T₁ in a range from 20°C to 120°C in the temperature-raising step.

Elongation: The numerical value of the dimensional change rate shows a positive value.

Shrinkage: The numerical value of the dimensional change rate shows a negative value. From the dimensional change rate (ΔL) obtained in the range from 20°C to 120°C, the value of ΔL when the absolute value of ΔL is the maximum was taken as the maximum dimensional change rate in the range from 20°C to 120°C.

### [Molecular Orientation Evaluation]

With respect to a cross section of each polyethylene layer of the stretched film obtained in each Example or Comparative Example, a Raman spectrum was obtained as follows using a Raman spectrometer (LabRAM HR800, manufactured by Horiba, Ltd.).

### (Pretreatment)

The stretched film was embedded in an embedding resin to produce a block. Using a commercially available ultramicrotome capable of producing a frozen section, the block was cut in a low-temperature environment of -100°C, parallel to a plane including the thickness direction (laminating direction) perpendicular to the main surface of the stretched film and the stretching direction of the stretched film (the MD direction in the above Examples or Comparative Examples). In this way, a cross section of the stretched film was obtained. Finishing was performed using a diamond knife.

### (Raman Measurement)

The block after the cutting was fixed on a stage of the Raman spectrometer such that the polarization direction of a laser and the stretching direction of the stretched film were parallel to each other. Using a He-Ne laser having a wavelength of 633 nm as an excitation light source, measurement was performed by irradiating a sample region of about 1 µmΦ with a laser through an objective lens with a magnification of 100 times. As the output of the laser, the irradiation time, and the number of integrations, recommended conditions of the apparatus and the like such that peaks could be sufficiently separated in a region from 1000 to 1600 cm⁻¹ and peak intensity could be stably obtained were used. The measurement was performed using a line mapping mode in which the stage was moved in a direction perpendicular to the stretching direction in steps of 1 µm so that one or more spectra could be obtained for the stretched film (for each layer thereof).

The stretching direction of the stretched film is defined as an X direction, the thickness direction (laminating direction) is defined as a Y direction, and the normal direction of the cross section is defined as a Z direction. The incident direction of the laser is the Z direction. The polarization direction of the laser is the X direction. The mapping direction is the Y direction.

In the Raman spectrum obtained by the above measurement, a ratio I₁₁₃₀/I₁₀₆₃ was calculated from the value of the maximum scattering intensity I₁₁₃₀ of a peak around 1130 cm⁻¹ and the value of the maximum scattering intensity I₁₀₆₃ of a peak around 1063 cm⁻¹. When two or more spectra were obtained in the same layer, the arithmetic mean value of the ratios obtained from the respective spectra was taken as the ratio I₁₁₃₀/I₁₀₆₃.

### [Puncture Strength]

The puncture strength of the stretched film obtained in each Example or Comparative Example was measured in accordance with JIS Z1707:2019. The stretched film obtained in each Example or Comparative Example was cut to obtain a test piece having a size of width: 5 cm and length: 5 cm. A Tensilon universal material testing machine RCT-1250A (manufactured by A&D Company, Limited) was used as a measuring instrument. A semicircular needle having a diameter of 1.0 mm and a tip shape radius of 0.5 mm was pierced into the test piece (of the first layer) at a test speed of 50 mm/min, and the maximum strength (N) until the needle penetrated the test piece was measured.

**Table 2**

| | | | Unit | Example | | | | | | | | | | | |
|---|---|---|---|---|---|---|---|---|---|---|---|---|---|---|---|
| | | | | 1A | 2A | 3A | 4A | 5A | 6A | 7A | 8A | 9A | 10A | 11A | 12A |
| Multilayer film, Stretched film | | | | | | | | | | | | | | | |
| Resin composition of the film | | First layer | | HDPE(A) (FY13) | ← | ← | ← | ← | ← | ← | HDPE(A) (FY13) | HDPE(A) (FY13) | HDPE(A) (FY13) | HDPE(A) (FY13) | HDPE(A) (FY13) |
| | | PE intermediate layer | | LLDPE (SP0820) | ← | ← | ← | ← | ← | ← | MDPE (ELITE 5538G) | LLDPE (XP8656ML) | LLDPE (XP8656ML) | MDPE (ELITE 5538G) | LLDPE (XP8656ML) |
| | | Second layer | | HDPE(B) (Hz5000SF) | ← | ← | ← | ← | ← | ← | HDPE(B) (Hz5000SF) | HDPE(B) (Hz5000SF) | MDPE (ELITE 5538G) | MDPE (ELITE 5538G) | LLDPE (XP8656ML) |
| Film thickness Thickness of each layer | Before stretching | First layer | µm | 15.0 | 20.0 | 25.0 | 30.0 | 50.0 | 10.0 | 34.0 | 20.0 | 20.0 | 20.0 | 20.0 | 20.0 |
| | | PE intermediate layer | µm | 45.0 | 60.0 | 75.0 | 40.0 | 25.0 | 80.0 | 32.0 | 60.0 | 60.0 | 60.0 | 60.0 | 60.0 |
| | | Second layer | µm | 15.0 | 20.0 | 25.0 | 30.0 | 25.0 | 10.0 | 34.0 | 20.0 | 20.0 | 20.0 | 20.0 | 20.0 |
| | | Total thickness | µm | 75 | 100 | 125 | 100 | 100 | 100 | 100 | 100 | 100 | 100 | 100 | 100 |
| | After stretching | First layer | µm | 5.0 | 5.0 | 5.0 | 7.5 | 12.5 | 2.5 | 8.5 | 5.0 | 5.0 | 5.0 | 5.0 | 5.0 |
| | | PE intermediate layer | µm | 15.0 | 15.0 | 15.0 | 10.0 | 6.3 | 20.0 | 8.0 | 15.0 | 15.0 | 15.0 | 15.0 | 15.0 |
| | | Second layer | µm | 5.0 | 5.0 | 5.0 | 7.5 | 6.3 | 2.5 | 8.5 | 5.0 | 5.0 | 5.0 | 5.0 | 5.0 |
| | | Total thickness | µm | 25 | 25 | 25 | 25 | 25 | 25 | 25 | 25 | 25 | 25 | 25 | 25 |
| Draw ratio | | | times | 3 | 4 | 5 | 4 | 4 | 4 | 4 | 4 | 4 | 4 | 4 | 4 |
| Puncture strength | | | N/mmφ | 5.0 | 5.1 | 5.5 | 5.0 | 4.5 | 6.0 | 5.0 | 4.2 | 4.9 | 4.8 | 4.5 | 5.8 |
| Molecular orientation evaluation | | First layer | I₁₁₃₀/ I₁₀₆₃ | 1.6 | 1.8 | 1.9 | 1.8 | 1.8 | 1.8 | 1.8 | 1.8 | 1.8 | 1.8 | 1.8 | 1.8 |
| | | PE intermediate layer | | 0.9 | 0.9 | 0.9 | 0.9 | 0.9 | 0.9 | 0.9 | 1.6 | 0.9 | 0.9 | 1.6 | 0.9 |
| | | Second layer | | 1.6 | 1.8 | 1.9 | 1.8 | 1.8 | 1.8 | 1.8 | 1.8 | 1.8 | 1.6 | 1.6 | 0.9 |
| Heat resistance (appearance) from the first main surface | | | 120°C | A | A | A | A | A | A | A | A | A | A | A | A |
| | | | 130°C | A | A | A | A | A | A | A | A | A | A | A | A |
| Heat resistance evaluation (Dimensional change In stretching direction) | | | % | -1.8% | -4.2% | -7.5% | -3.8% | -3.0% | -4.8% | -3.8% | -4.5% | -4.3% | -4.6% | -4.8% | -10.0% |
| | | | Result | Shrinkage | Shrinkage | Shrinkage | Shrinkage | Shrinkage | Shrinkage | Shrinkage | Shrinkage | Shrinkage | Shrinkage | Shrinkage | Shrinkage |
| Heat resistance evaluation (Maximum dimensional change In stretching direction) | | | % | -2.0% | -5.0% | -10.0% | -4.0% | -4.0% | -8.0% | -5.0% | -9.0% | -9.0% | -12.0% | -10.0% | -14.0% |
| | | | Result | Shrinkage | Shrinkage | Shrinkage | Shrinkage | Shrinkage | Shrinkage | Shrinkage | Shrinkage | Shrinkage | Shrinkage | Shrinkage | Shrinkage |

**Table 3**

| | | | Unit | Comparative Example | | | | | |
|---|---|---|---|---|---|---|---|---|---|
| | | | | 1A | 2A | 3A | 4A | 5A | 6A |
| Multilayer film, Stretched film | | | | | | | | | |
| Resin composition of the film | | First layer | | HDPE(B) (Hz5000SF) | ← | HDPE(B) (ELITE AT6900) | HDPE(B) (HY540) | HDPE(B) (Hz5000SF) | HDPE(B) (HY540) |
| | | PE intermediate layer | | HDPE(B) (Hz5000SF) | ← | HDPE(B) (ELITE AT6900) | HDPE(B) (HY540) | LLDPE (SP0820) | LLDPE (SP0820) |
| | | Second layer | | HDPE(B) (Hz5000SF) | ← | HDPE(B) (ELITE AT6900) | HDPE(B) (HY540) | HDPE(B) (Hz5000SF) | HDPE(B) (HY540) |
| Film thickness Thickness of each layer | Before stretching | First layer | µm | 33.3 | 41.7 | 33.3 | 33.3 | 20.0 | 20.0 |
| | | PE intermediate layer | µm | 33.3 | 41.7 | 33.3 | 33.3 | 60.0 | 60.0 |
| | | Second layer | µm | 33.3 | 41.7 | 33.3 | 33.3 | 20.0 | 20.0 |
| | | Total thickness | µm | 100 | 125 | 100 | 100 | 100 | 100 |
| | After stretching | First layer | µm | 8.3 | 8.3 | 8.3 | 8.3 | 5.0 | 5.0 |
| | | PE intermediate layer | µm | 8.3 | 8.3 | 8.3 | 8.3 | 15.0 | 15.0 |
| | | Second layer | µm | 8.3 | 8.3 | 8.3 | 8.3 | 5.0 | 5.0 |
| | | Total thickness | µm | 25 | 25 | 25 | 25 | 25 | 25 |
| Draw ratio | | | times | 4 | 5 | 4 | 4 | 4 | 4 |
| Puncture strength | | | N/mmφ | 2.2 | 2.3 | 2.1 | 2.0 | 4.5 | 4.3 |
| Molecular orientation evaluation | | First layer | I₁₁₃₀/ I₁₀₆₃ | 1.6 | 1.8 | 1.7 | 1.7 | 1.6 | 1.7 |
| | | PE intermediate layer | | 1.6 | 1.8 | 1.7 | 1.7 | 0.9 | 0.9 |
| | | Second layer | | 1.6 | 1.8 | 1.7 | 1.7 | 1.6 | 1.7 |
| Heat resistance (appearance) from the first main surface | | | 120°C | A | A | A | A | A | A |
| | | | 130°C | B | B | B | B | B | B |
| Heat resistance evaluation (Dimensional change in stretching direction) | | | % | -11.0% | -15.0% | -13.0% | -11.0% | -11.0% | -11.0% |
| | | | Result | Shrinkage | Shrinkage | Shrinkage | Shrinkage | Shrinkage | Shrinkage |
| Heat resistance evaluation (Maximum dimensional change in stretching direction) | | | % | -25.0% | -30.0% | -30.0% | -23.0% | -20.0% | -18.0% |
| | | | Result | Shrinkage | Shrinkage | Shrinkage | Shrinkage | Shrinkage | Shrinkage |

**Table 4**

| | | | Unit | Example | | | | | | | |
|---|---|---|---|---|---|---|---|---|---|---|---|
| | | | | 1B | 2B | 3B | 4B | 5B | 6B | 7B | 8B |
| Multilayer film, Stretched film | | | | | | | | | | | |
| Resin composition of the film | | First layer | | HDPE(A) (FY13) | ← | ← | ← | ← | ← | HDPE(A) (FY13) | HDPE(A) (FY13) |
| | | PE intermediate layer | | LLDPE (SP0820) | ← | ← | ← | ← | ← | MDPE (ELITE 5538G) | LLDPE (XP8656ML) |
| | | Second layer | | HDPE(A) (FY13) | ← | ← | ← | ← | ← | HDPE(A) (FY13) | HDPE(A) (FY13) |
| Film thickness Thickness of each layer | Before stretching | First layer | µm | 15.0 | 20.0 | 25.0 | 30.0 | 10.0 | 34.0 | 20.0 | 20.0 |
| | | PE intermediate layer | µm | *45.0* | 60.0 | 75.0 | 40.0 | 80.0 | 32.0 | 60.0 | 60.0 |
| | | Second layer | µm | 15.0 | 20.0 | 25.0 | 30.0 | 10.0 | 34.0 | 20.0 | 20.0 |
| | | Total thickness | µm | 75 | 100 | 125 | 100 | 100 | 100 | 100 | 100 |
| | After stretching | First layer | µm | 5.0 | 5.0 | 5.0 | 7.5 | 2.5 | 8.5 | 5.0 | 5.0 |
| | | PE intermediate layer | µm | 15.0 | 15.0 | 15.0 | 10.0 | 20.0 | 8.0 | 15.0 | 15.0 |
| | | Second layer | µm | 5.0 | 5.0 | 5.0 | 7.5 | 2.5 | 8.5 | 5.0 | 5.0 |
| | | Total thickness | µm | 25 | 25 | 25 | 25 | 25 | 25 | 25 | 25 |
| Draw ratio | | | times | 3 | 4 | 5 | 4 | 4 | 4 | 4 | 4 |
| Puncture strength | | | N/mmφ | 5.0 | 5.1 | 5.5 | 5.0 | 6.0 | 4.0 | 4.0 | 4.9 |
| Molecular orientation evaluation | | First layer | I₁₁₃₀ / I₁₀₆₃ | 1.6 | 1.8 | 1.9 | 1.8 | 1.8 | 1.8 | 1.8 | 1.8 |
| | | PE intermediate layer | | 0.9 | 0.9 | 0.9 | 0.9 | 0.9 | 0.9 | 1.6 | 0.9 |
| | | Second layer | | 1.6 | 1.8 | 1.9 | 1.8 | 1.8 | 1.8 | 1.8 | 1.8 |
| Heat resistance (appearance) from the first main surface | | | 120°C | A | A | A | A | A | A | A | A |
| | | | 130°C | A | A | A | A | A | A | A | A |
| Heat resistance evaluation (Dimensional change in stretching direction) | | | % | -1.0% | -3.0% | -8.0% | -3.0% | -5.0% | -3.0% | -3.0% | -3.0% |
| | | | Result | Shrinkage | Shrinkage | Shrinkage | Shrinkage | Shrinkage | Shrinkage | Shrinkage | Shrinkage |
| Heat resistance evaluation (Maximum dimensional change in stretching direction) | | | % | -2.0% | -3.0% | -12.0% | -3.0% | -8.0% | -3.0% | -3.0% | -3.0% |
| | | | Result | Shrinkage | Shrinkage | Shrinkage | Shrinkage | Shrinkage | Shrinkage | Shrinkage | Shrinkage |

**Table 5**

| | | | Unit | Example | | | | | | | |
|---|---|---|---|---|---|---|---|---|---|---|---|
| | | | | 1C | 2C | 3C | 4C | 5C | 6C | 7C | 8C |
| Multilayer film, Stretched film | | | | | | | | | | | |
| Resin composition of the film | | First layer | | HDPE(A) (FY13) | ← | ← | ← | ← | ← | HDPE(A) (FY13) | HDPE(A) (FY13) |
| | | PE intermediate layer | | HDPE(B) (Hz5000SF) | ← | ← | ← | ← | ← | HDPE(B) (Hz3300F) | HDPE(B) (ELITE AT6900) |
| | | Second layer | | HDPE(A) (FY13) | ← | ← | ← | ← | ← | HDPE(A) (FY13) | HDPE(A) (FY13) |
| Film thickness Thickness of each layer | Before stretching | First layer | µm | 15.0 | 20.0 | 25.0 | 30.0 | 10.0 | 34.0 | 20.0 | 20.0 |
| | | PE intermediate layer | µm | 45.0 | 60.0 | 75.0 | 40.0 | 80.0 | 32.0 | 60.0 | 60.0 |
| | | Second layer | µm | 15.0 | 20.0 | 25.0 | 30.0 | 10.0 | 34.0 | 20.0 | 20.0 |
| | | Total thickness | µm | 75 | 100 | 125 | 100 | 100 | 100 | 100 | 100 |
| | After stretching | First layer | µm | 5.0 | 5.0 | 5.0 | 7.5 | 2.5 | 8.5 | 5.0 | 5.0 |
| | | PE intermediate layer | µm | 15.0 | 15.0 | 15.0 | 10.0 | 20.0 | 8.0 | 15.0 | 15.0 |
| | | Second layer | µm | 5.0 | 5.0 | 5.0 | 7.5 | 2.5 | 8.5 | 5.0 | 5.0 |
| | | Total thickness | µm | 25 | 25 | 25 | 25 | 25 | 25 | 25 | 25 |
| Draw ratio | | | times | 3 | 4 | 5 | 4 | 4 | 4 | 4 | 4 |
| Puncture strength | | | N/mmφ | 4.0 | 4.1 | 4.2 | 4.5 | 4.0 | 4.6 | 4.1 | 4.3 |
| Molecular orientation evaluation | | First layer | I₁₁₃₀ / I₁₀₆₃ | 1.6 | 1.8 | 1.9 | 1.8 | 1.8 | 1.8 | 1.8 | 1.8 |
| | | PE intermediate layer | | 1.5 | 1.6 | 1.7 | 1.6 | 1.6 | 1.6 | 1.6 | 1.6 |
| | | Second layer | | 1.6 | 1.8 | 1.9 | 1.8 | 1.8 | 1.8 | 1.8 | 1.8 |
| Heat resistance (appearance) from the first main surface | | | 120°C | A | A | A | A | A | A | A | A |
| | | | 130°C | A | A | A | A | A | A | A | A |
| Heat resistance evaluation (Dimensional change in stretching direction) | | | % | -1.0% | -3.0% | -8.0% | -3.0% | -3.0% | -3.0% | -3.0% | -3.0% |
| | | | Result | Shrinkage | Shrinkage | Shrinkage | Shrinkage | Shrinkage | Shrinkage | Shrinkage | Shrinkage |
| Heat resistance evaluation (Maximum dimensional change in stretching direction) | | | % | -2.0% | -3.0% | -12.0% | -7.0% | -8.0% | -3.0% | -3.0% | -3.5% |
| | | | Result | Shrinkage | Shrinkage | Shrinkage | Shrinkage | Shrinkage | Shrinkage | Shrinkage | Shrinkage |

**Table 6**

| | | | Unit | Example | | | | | | | | |
|---|---|---|---|---|---|---|---|---|---|---|---|---|
| | | | | 1D | 2D | 3D | 4D | 5D | 6D | 7D | 8D | 9D |
| Multilayer film, Stretched film | | | | | | | | | | | | |
| Resin composition of the film | | First layer | | HDPE(A) (FY13) | ← | ← | ← | ← | ← | ← | HDPE(A) (FY13) | HDPE(A) (FY13) |
| | | 1st PE intermediate layer | | LLDPE (SP0820) | ← | ← | ← | ← | ← | ← | LLDPE (SP0820) | LLDPE (SP0510) |
| | | 2nd PE intermediate layer | | HDPE(B) (Hz5000SF) | ← | ← | ← | ← | ← | ← | HDPE(B) (Hz3300F) | HDPE(B) (Hz5000SF) |
| | | 3rd PE intermediate layer | | LLDPE (SP0820) | ← | ← | ← | ← | ← | ← | LLDPE (SP0820) | LLDPE (SP0510) |
| | | Second layer | | HDPE(A) (FY13) | ← | ← | ← | ← | ← | ← | HDPE(A) (FY13) | HDPE(A) (FY13) |
| Film thickness Thickness of each layer | Before stretching | First layer | µm | 17.0 | 22.5 | 28.0 | 15.0 | 10.0 | 12.0 | 12.0 | 22.5 | 22.5 |
| | | 1st PE intermediate layer | µm | 9.5 | 12.5 | 15.5 | 10.0 | 30.0 | 22.0 | 18.0 | 12.5 | 12.5 |
| | | 2nd PE intermediate layer | µm | 22.0 | 30.0 | 38.0 | 50.0 | 20.0 | 32.0 | 40.0 | 30.0 | 30.0 |
| | | 3rd PE intermediate layer | µm | 9.5 | 12.5 | 15.5 | 10.0 | 30.0 | 22.0 | 18.0 | 12.5 | 12.5 |
| | | Second layer | µm | 17.0 | 22.5 | 28.0 | 15.0 | 10.0 | 12.0 | 12.0 | 22.5 | 22.5 |
| | | Total thickness | µm | 75 | 100 | 125 | 100 | 100 | 100 | 100 | 100 | 100 |
| | After stretching | First layer | µm | 5.7 | 5.6 | 5.6 | 3.8 | 2.5 | 3.0 | 3.0 | 5.6 | 5.6 |
| | | 1st PE intermediate layer | µm | 3.2 | 3.1 | 3.1 | 2.5 | 7.5 | 5.5 | 4.5 | 3.1 | 3.1 |
| | | 2nd PE intermediate layer | µm | 7.3 | 7.5 | 7.6 | 12.5 | 5.0 | 8.0 | 10.0 | 7.5 | 7.5 |
| | | 3rd PE intermediate layer | µm | 3.2 | 3.1 | 3.1 | 2.5 | 7.5 | 5.5 | 4.5 | 3.1 | 3.1 |
| | | Second layer | µm | 5.7 | 5.6 | 5.6 | 3.8 | 2.5 | 3.0 | 3.0 | 5.6 | 5.6 |
| | | Total thickness | µm | 25 | 25 | 25 | 25 | 25 | 25 | 25 | 25 | 25 |
| Draw ratio | | | times | 3 | 4 | 5 | 4 | 4 | 4 | 4 | 4 | 4 |
| *Puncture strength* | | | *N*/*mmφ* | 4.0 | 4.2 | 4.5 | 4.0 | 5.0 | 4.8 | 4.6 | 4.2 | 4.1 |
| Molecular orientation evaluation | | First layer | I₁₁₃₀/ I₁₀₆₃ | 1.6 | 1.8 | 1.9 | 1.8 | 1.8 | 1.8 | 1.8 | 1.8 | 1.8 |
| | | 1st PE intermediate layer | | 0.9 | 0.9 | 0.9 | 0.9 | 0.9 | 0.9 | 0.9 | 0.9 | 0.9 |
| | | 2nd PE intermediate layer | | 1.4 | 1.5 | 1.6 | 1.5 | 1.5 | 1.5 | 1.5 | 1.5 | 1.5 |
| | | 3rd PE intermediate layer | | 0.9 | 0.9 | 0.9 | 0.9 | 0.9 | 0.9 | 0.9 | 0.9 | 0.9 |
| | | Second layer | | 1.6 | 1.8 | 1.9 | 1.8 | 1.8 | 1.8 | 1.8 | 1.8 | 1.8 |
| Heat resistance (appearance) | | | 120°C | A | A | A | A | A | A | A | A | A |
| | | | 130°C | A | A | A | A | A | A | A | A | A |
| Heat resistance evaluation (Dimensional change in stretching direction) | | | % | -1.0% | -3.0% | -8.0% | -3.0% | -3.0% | -3.0% | -3.0% | -3.0% | -3.0% |
| | | | Result | Shrinkage | Shrinkage | Shrinkage | Shrinkage | Shrinkage | Shrinkage | Shrinkage | Shrinkage | Shrinkage |
| Heat resistance evaluation (Maximum dimensional change in stretching direction) | | | % | -1.5% | -3.0% | -12.0% | -7.0% | -3.0% | -3.0% | -3.0% | -2.5% | -3.0% |
| | | | Result | Shrinkage | Shrinkage | Shrinkage | Shrinkage | Shrinkaqe | Shrinkage | Shrinkage | Shrinkage | Shrinkage_ |

**Table 7**

| | | | Unit | Comparative Example | | | | | | | |
|---|---|---|---|---|---|---|---|---|---|---|---|
| | | | | 1B | 2B | 3B | 4B | 5B | 6B | 7B | 8B |
| Multilayer film, Stretched film | | | | | | | | | | | |
| Resin composition of the film | | First layer | | HDPE(B) (Hz5000SF) | ← | HDPE(B) (ELITE AT6900) | HDPE(B) (HY540) | HDPE(B) (Hz5000SF) | HDPE(B) (Hz5000SF) | HDPE(B) (Hz5000SF) | HDPE(B) (Hz5000SF) |
| | | 1st PE intermediate layer | | HDPE(B) (Hz5000SF) | ← | HDPE(B) (ELITE AT6900) | HDPE(B) (HY540) | HDPE(B) (Hz5000SF) | HDPE(B) (Hz5000SF) | HDPE(A) (FY13) | HDPE(A) (FY13) |
| | | 2nd PE intermediate layer | | HDPE(B) (Hz5000SF) | ← | HDPE(B) (ELITE AT6900) | HDPE(B) (HY540) | LLDPE (SP0820) | MDPE (FY11) | LLDPE (SP0820) | MDPE (Enable4002MC) |
| | | 3rd PE intermediate layer | | HDPE(B) (Hz5000SF) | ← | HDPE(B) (ELITE AT6900) | HDPE(B) (HY540) | HDPE(B) (Hz5000SF) | HDPE(B) (Hz5000SF) | HDPE(A) (FY13) | HDPE(A) (FY13) |
| | | Second layer | | HDPE(B) (Hz5000SF) | ← | HDPE(B) (ELITE AT6900) | HDPE(B) (HY540) | HDPE(B) (Hz5000SF) | HDPE(B) (Hz5000SF) | HDPE(B) (Hz5000SF) | HDPE(B) (Hz5000SF) |
| Film thickness Thickness of each layer | Before stretching | First layer | µm | 20.0 | 25.0 | 20.0 | 20.0 | 22.5 | 22.5 | 22.5 | 22.5 |
| | | 1st PE intermediate layer | µm | 20.0 | 25.0 | 20.0 | 20.0 | 12.5 | 12.5 | 12.5 | 12.5 |
| | | 2nd PE intermediate layer | µm | 20.0 | 25.0 | 20.0 | 20.0 | 30.0 | 30.0 | 30.0 | 30.0 |
| | | 3rd PE intermediate layer | µm | 20.0 | 25.0 | 20.0 | 20.0 | 12.5 | 12.5 | 12.5 | 12.5 |
| | | Second layer | µm | 20.0 | 25.0 | 20.0 | 20.0 | 22.5 | 22.5 | 22.5 | 22.5 |
| | | Total thickness | µm | 100 | 125 | 100 | 100 | 100 | 100 | 100 | 100 |
| | After stretching | First layer | µm | 5.0 | 5.0 | 5.0 | 5.0 | 5.6 | 5.6 | 5.6 | 5.6 |
| | | 1st PE intermediate layer | µm | 5.0 | 5.0 | 5.0 | 5.0 | 3.1 | 3.1 | 3.1 | 3.1 |
| | | 2nd PE intermediate layer | µm | 5.0 | 5.0 | 5.0 | 5.0 | 7.5 | 7.5 | 7.5 | 7.5 |
| | | 3rd PE intermediate layer | µm | 5.0 | 5.0 | 5.0 | 5.0 | 3.1 | 3.1 | 3.1 | 3.1 |
| | | Second layer | µm | 5.0 | 5.0 | 5.0 | 5.0 | 5.6 | 5.6 | 5.6 | 5.6 |
| | | Total thickness | µm | 25 | 25 | 25 | 25 | 25 | 25 | 25 | 25 |
| Draw ratio | | | times | 4 | 5 | 4 | 4 | 4 | 4 | 4 | 4 |
| Puncture strength | | | N/mmφ | 2.2 | 2.3 | 2.1 | 2.0 | 4.1 | 2.5 | 4.0 | 2.8 |
| Molecular orientation evaluation | | First layer | I₁₁₃₀/ I₁₀₆₃ | 1.6 | 1.8 | 1.7 | 1.7 | 1.6 | 1.6 | 1.6 | 1.6 |
| | | 1st PE intermediate layer | | 1.6 | 1.8 | 1.7 | 1.7 | 1.6 | 1.6 | 1.6 | 1.6 |
| | | 2nd PE intermediate layer | | 1.6 | 1.8 | 1.7 | 1.7 | 0.9 | 1.2 | 0.9 | 1.5 |
| | | 3rd PE intermediate layer | | 1.6 | 1.8 | 1.7 | 1.7 | 1.6 | 1.6 | 1.6 | 1.6 |
| | | Second layer | | 1.6 | 1.8 | 1.7 | 1.7 | 1.6 | 1.6 | 1.6 | 1.6 |
| Heat resistance (appearance) | | | 120°C | A | A | A | A | A | A | A | A |
| | | | 130°C | B | B | B | B | B | B | B | B |
| Heat resistance evaluation (Dimensional change in stretching direction) | | | % | -11.0% | -15.0% | -13.0% | -11.0% | -11.0% | -11.0% | -11.0% | -11.0% |
| | | | Result | Shrinkage | Shrinkage | Shrinkage | Shrinkage | Shrinkage | Shrinkage | Shrinkage | Shrinkage |
| Heat resistance evaluation (Maximum dimensional change in stretching direction) | | | % | -25.0% | -30.0% | -30.0% | -23.0% | -20.0% | -20.0% | -18.0% | -18.0% |
| | | | Result | Shrinkage | Shrinkage | Shrinkage | Shrinkage | Shrinkage | Shrinkage | Shrinkage | Shrinkage |

**Table 8**

| | | | Unit | Example | | | | | | | | | |
|---|---|---|---|---|---|---|---|---|---|---|---|---|---|
| | | | | 1E | 2E | 3E | 4E | 5E | 6E | 7E | 8E | 9E | 10E |
| Multilayer film, Stretched film | | | | | | | | | | | | | |
| Resin composition of the film | | First layer | | HDPE(A) (FY13) | ← | ← | ← | ← | ← | HDPE(A) (FY13) | HDPE(A) (FY13) | HDPE(A) (FY13) | HDPE(A) (FY13) |
| | | 1st PE Intermediate layer | | HDPE(B) (Hz5000SF) | ← | ← | _{←} | ← | ← | HDPE(B) (Hz5000SF) | HDPE(B) (Hz5000SF) | HDPE(B) (Hz5000SF) | HDPE(B) (Hz5000SF) |
| | | 2nd PE Intermediate layer | | LLDPE (FY12) | ← | ← | ← | ← | ← | LLDPE (XP8656ML) | MDPE (FY11) | MDPE (Enable4002MC) | HDPE(A) (FY13) |
| | | 3rd PE Intermediate layer | | HDPE(B) (Hz5000SF) | ← | ← | _{←} | ← | ← | HDPE(B) (Hz5000SF) | HDPE(B) (Hz5000SF) | HDPE(B) (Hz5000SF) | HDPE(B) (Hz5000SF) |
| | | Second layer | | HDPE(A) (FY13) | ← | ← | ← | ← | ← | HDPE(A) (FY13) | HDPE(A) (FY13) | HDPE(A) (FY13) | HDPE(A) (FY13) |
| Film thickness Thickness of each layer | Before stretching | First layer | µm | 17.0 | 22.5 | 28.0 | 10.0 | 12.0 | 12.0 | 22.5 | 22.5 | 22.5 | 22.5 |
| | | 1st PE Intermediate layer | µm | 9.5 | 12.5 | 15.5 | 10.0 | 22.0 | 18.0 | 12.5 | 12.5 | 12.5 | 12.5 |
| | | 2nd PE Intermediate layer | µm | 22.0 | 30.0 | 38.0 | 60.0 | 32.0 | 40.0 | 30.0 | 30.0 | 30.0 | 30.0 |
| | | 3rd PE Intermediate layer | µm | 9.5 | 12.5 | 15.5 | 10.0 | 22.0 | 18.0 | 12.5 | 12.5 | 12.5 | 12.5 |
| | | Second layer | µm | 17.0 | 22.5 | 28.0 | 10.0 | 12.0 | 12.0 | 22.5 | 22.5 | 22.5 | 22.5 |
| | | Total thickness | µm | 75 | 100 | 125 | 100 | 100 | 100 | 100 | 100 | 100 | 100 |
| | After stretching | First layer | µm | 5.7 | 5.6 | 5.6 | 2.5 | 3.0 | 3.0 | 5.6 | 5.6 | 5.6 | 5.6 |
| | | 1st PE Intermediate layer | µm | 3.2 | 3.1 | 3.1 | 2.5 | 5.5 | 4.5 | 3.1 | 3.1 | 3.1 | 3.1 |
| | | 2nd PE Intermediate layer | µm | 7.3 | 7.5 | 7.6 | 15.0 | 8.0 | 10.0 | 7.5 | 7.5 | 7.5 | 7.5 |
| | | 3rd PE Intermediate layer | µm | 3.2 | 3.1 | 3.1 | 2.5 | 5.5 | 4.5 | 3.1 | 3.1 | 3.1 | 3.1 |
| | | Second layer | µm | 5.7 | 5.6 | 5.6 | 2.5 | 3.0 | 3.0 | 5.6 | 5.6 | 5.6 | 5.6 |
| | | Total thickness | µm | 25 | 25 | 25 | 25 | 25 | 25 | 25 | 25 | 25 | 25 |
| Draw ratio | | | times | 3 | 4 | 5 | 4 | 4 | 4 | 4 | 4 | 4 | 4 |
| Puncture strength | | | N/mmφ | 4.2 | 4.3 | 4.5 | 5.0 | 4.5 | 4.8 | 4.5 | 4.5 | 4.2 | 4.5 |
| Molecular orientation evaluation | | First layer | I₁₁₃₀/ I₁₀₆₃ | 1.6 | 1.8 | 1.9 | 1.8 | 1.8 | 1.8 | 1.8 | 1.8 | 1.8 | 1.8 |
| | | 1st PE Intermediate layer | | 1.5 | 1.6 | 1.8 | 1.6 | 1.6 | 1.6 | 1.6 | 1.6 | 1.6 | 1.6 |
| | | 2nd PE Intermediate layer | | 0.9 | 0.9 | 0.9 | 0.9 | 0.9 | 0.9 | 0.9 | 1.6 | 1.6 | 1.6 |
| | | 3rd PE Intermediate layer | | 1.5 | 1.6 | 1.8 | 1.6 | 1.6 | 1.6 | 1.6 | 1.6 | 1.6 | 1.6 |
| | | Second layer | | 1.6 | 1.8 | 1.9 | 1.8 | 1.8 | 1.8 | 1.8 | 1.8 | 1.8 | 1.8 |
| Heat resistance (appearance) | | | 120°C | A | A | A | A | A | A | A | A | A | A |
| | | | 130°C | A | A | A | A | A | A | A | A | A | A |
| Heat resistance evaluation (Dimensional change in stretching direction) | | | % | -1.0% | -3.0% | -8.0% | -3.0% | -3.0% | -3.0% | -3.0% | -2.0% | -2.0% | -3.0% |
| | | | Result | Shrinkage | Shrinkage | Shrinkage | Shrinkage | Shrinkage | Shrinkage | Shrinkage | Shrinkage | Shrinkage | Shrinkage |
| Heat resistance evaluation (Maximum dimensional change in stretching direction) | | | % | -2.0% | -3.0% | -12.0% | -7.0% | -3.0% | -4.0% | -3.5% | -3.0% | -3.5% | -3.0% |
| | | | Result | Shrinkage | Shrinkage | Shrinkage | Shrinkage | Shrinkage | Shrinkage | Shrinkage | Shrinkage | Shrinkage | Shrinkage |

**Table 9**

| | | | Unit | Example | | | | | | | |
|---|---|---|---|---|---|---|---|---|---|---|---|
| | | | | 1F | 2F | 3F | 4F | 5F | 6F | 7F | 8F |
| Multilayer film, Stretched film | | | | | | | | | | | |
| Resin composition of the film | | First layer | | HDPE(A) (FY13) | ← | ← | ← | ← | ← | HDPE(A) (FY13) | HDPE(A) (FY13) |
| | | 1st PE intermediate layer | | HDPE(B) (Hz5000SF) | ← | ← | ← | ← | ← | HDPE(B) (Hz3300F) | HDPE(B) (Hz5000SF) |
| | | 2nd PE intermediate layer | | LLDPE (SP0820) | ← | ← | ← | ← | ← | LLDPE (SP0820) | LLDPE (SP0510) |
| | | 3rd PE intermediate layer | | HDPE(B) (Hz5000SF) | ← | ← | ← | ← | ← | HDPE(B) (Hz3300F) | HDPE(B) (Hz5000SF) |
| | | Second layer | | HDPE(A) (FY13) | ← | ← | ← | ← | | HDPE(A) (FY13) | HDPE(A) (FY13) |
| Film thickness Thickness of each layer | Before stretching | First layer | µm | 17.0 | 22.5 | 28.0 | 10.0 | 12.0 | 12.0 | 22.5 | 22.5 |
| | | 1st PE intermediate layer | µm | 9.5 | 12.5 | 15.5 | 10.0 | 22.0 | 18.0 | 12.5 | 12.5 |
| | | 2nd PE intermediate layer | µm | 22.0 | 30.0 | 38.0 | 60.0 | 32.0 | 40.0 | 30.0 | 30.0 |
| | | 3rd PE intermediate layer | µm | 9.5 | 12.5 | 15.5 | 10.0 | 22.0 | 18.0 | 12.5 | 12.5 |
| | | Second layer | µm | 17.0 | 22.5 | 28.0 | 10.0 | 12.0 | 12.0 | 22.5 | 22.5 |
| | | Total thickness | µm | 75 | 100 | 125 | 100 | 100 | 100 | 100 | 100 |
| | After stretching | First layer | µm | 5.7 | 5.6 | 5.6 | 2.5 | 3.0 | 3.0 | 5.6 | 5.6 |
| | | 1st PE intermediate layer | µm | 3.2 | 3.1 | 3.1 | 2.5 | 5.5 | 4.5 | 3.1 | 3.1 |
| | | 2nd PE intermediate layer | µm | 7.3 | 7.5 | 7.6 | 15.0 | 8.0 | 10.0 | 7.5 | 7.5 |
| | | 3rd PE intermediate layer | µm | 3.2 | 3.1 | 3.1 | 2.5 | 5.5 | 4.5 | 3.1 | 3.1 |
| | | Second layer | µm | 5.7 | 5.6 | 5.6 | 2.5 | 3.0 | 3.0 | 5.6 | 5.6 |
| | | Total thickness | µm | 25 | 25 | 25 | 25 | 25 | 25 | 25 | 25 |
| Draw ratio | | | times | 3 | 4 | 5 | 4 | 4 | 4 | 4 | 4 |
| Puncture strength | | | N/mmφ | 4.0 | 4.2 | 4.5 | 5.1 | 4.6 | 4.8 | 4.3 | 4.3 |
| Molecular orientation evaluation | | First layer | I₁₁₃₀/ I₁₀₆₃ | 1.6 | 1.8 | 1.9 | 1.8 | 1.8 | 1.8 | 1.8 | 1.8 |
| | | 1st PE intermediate layer | | 1.5 | 1.6 | 1.8 | 1.6 | 1.6 | 1.6 | 1.6 | 1.6 |
| | | 2nd PE intermediate layer | | 0.9 | 0.9 | 0.9 | 0.9 | 0.9 | 0.9 | 0.9 | 0.9 |
| | | 3rd PE intermediate layer | | 1.5 | 1.6 | 1.8 | 1.6 | 1.6 | 1.6 | 1.6 | 1.6 |
| | | Second layer | | 1.6 | 1.8 | 1.9 | 1.8 | 1.8 | 1.8 | 1.8 | 1.8 |
| Heat resistance (appearance) | | | 120°C | A | A | A | A | A | A | A | A |
| | | | 130°C | A | A | A | A | A | A | A | A |
| Heat resistance evaluation (Dimensional change in stretching direction) | | | % | -1.0% | -3.0% | -8.0% | -3.0% | -3.0% | -3.0% | -3.0% | -3.0% |
| | | | Result | Shrinkage | Shrinkage | Shrinkage | Shrinkage | Shrinkage | Shrinkage | Shrinkage | Shrinkage |
| Heat resistance evaluation (Maximum dimensional change in stretching direction) | | | % | -1.5% | -3.0% | -12.0% | -7.0% | -3.0% | -3.0% | -3.0% | -3.0% |
| | | | Result | Shrinkage | Shrinkage | Shrinkage | Shrinkage | Shrinkage | Shrinkage | Shrinkage | Shrinkage |

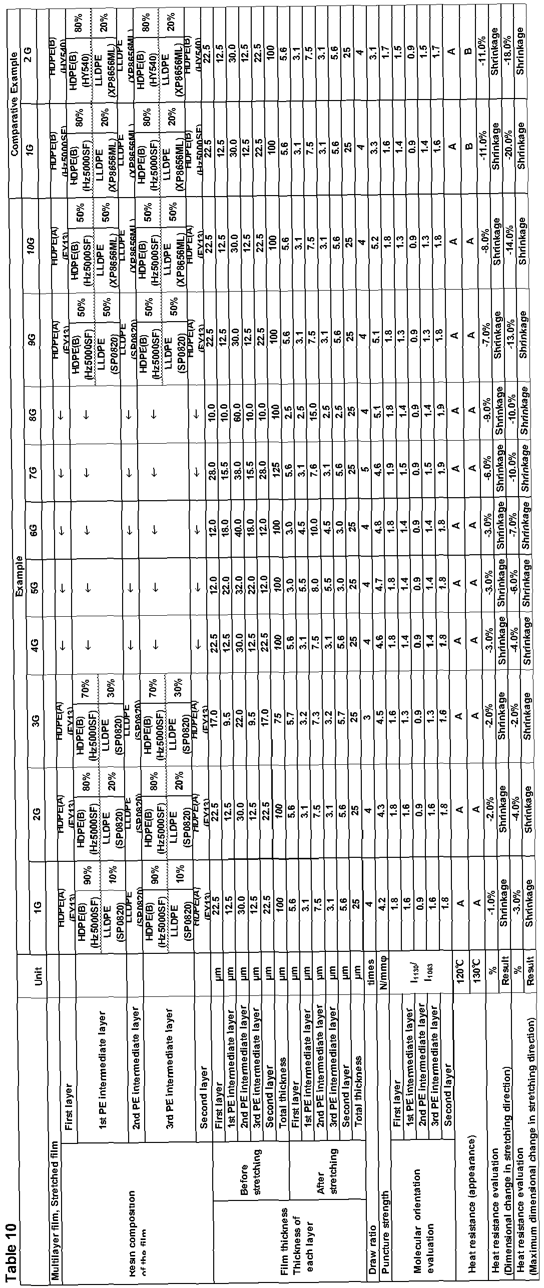

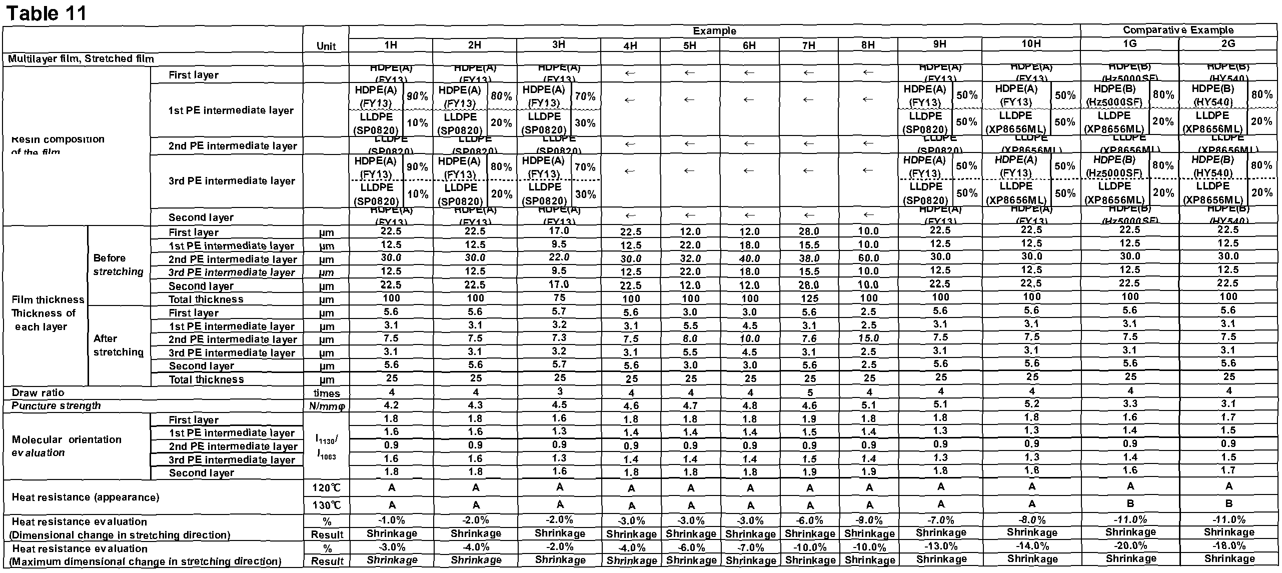

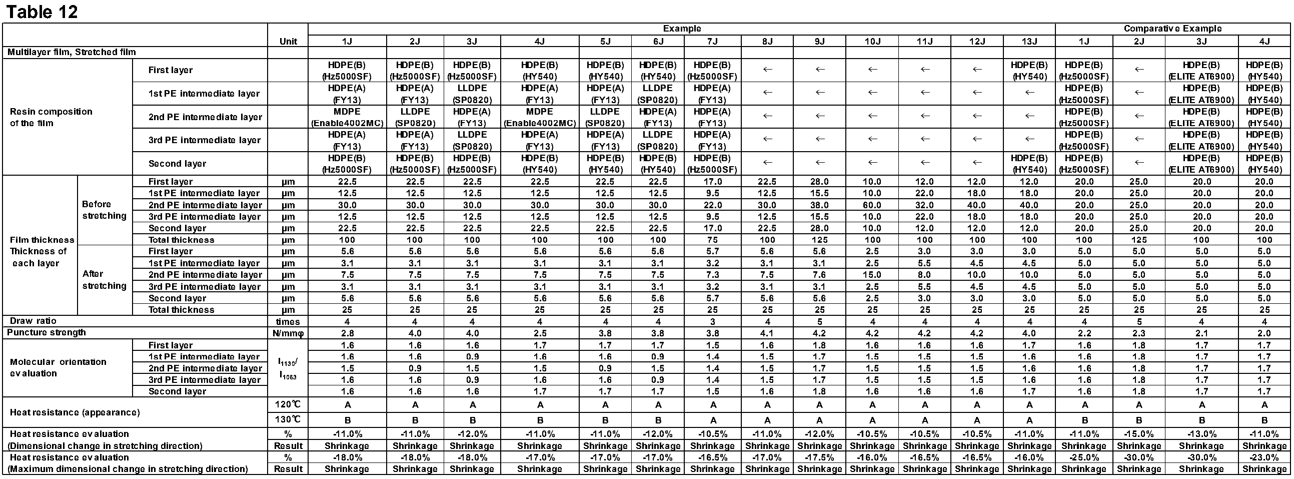

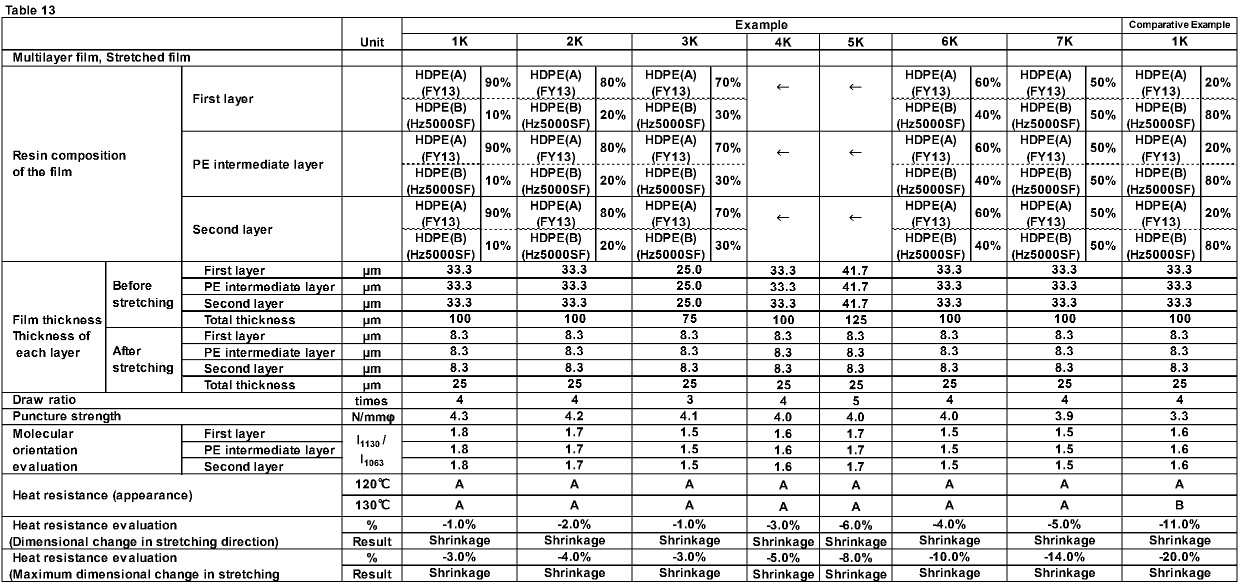

**Table 14**

| | | | Unit | Example | | | | | | Comparative Example | | | |
|---|---|---|---|---|---|---|---|---|---|---|---|---|---|
| | | | | 1L | 2L | 3L | 4L | 5L | 6L | 1L | 2L | 3L | 4L |
| Polyethylene film, Stretched film | | | | | | | | | | | | | |
| Resin composition of the film | | | | HDPE(A) (FY13) | ← | ← | ← | ← | ← | HDPE(B) (Hz5000SF) | ← | HDPE(B) (ELITE AT6900) | HDPE(B) (HY540) |
| | Extruded thickness | Layer 1 | µm | 17.0 | 22.5 | 28.0 | 10.0 | 12.0 | 12.0 | 20.0 | 25.0 | 20.0 | 20.0 |
| | | Layer 2 | µm | 9.5 | 12.5 | 15.5 | 10.0 | 22.0 | 18.0 | 20.0 | 25.0 | 20.0 | 20.0 |
| | | Layer 3 | µm | 22.0 | 30.0 | 38.0 | 60.0 | 32.0 | 40.0 | 20.0 | 25.0 | 20.0 | 20.0 |
| | | Layer 4 | µm | 9.5 | 12.5 | 15.5 | 10.0 | 22.0 | 18.0 | 20.0 | 25.0 | 20.0 | 20.0 |
| | | Layer 5 | µm | 17.0 | 22.5 | 28.0 | 10.0 | 12.0 | 12.0 | 20.0 | 25.0 | 20.0 | 20.0 |
| | Before stretching | Film thickness | µm | 75 | 100 | 125 | 100 | 100 | 100 | 100 | 125 | 100 | 100 |
| | After stretching | Film thickness | µm | 25 | 25 | 25 | 25 | 25 | 25 | 25 | 25 | 25 | 25 |
| Draw ratio | | | times | 3 | 4 | 5 | 4 | 4 | 4 | 4 | 5 | 4 | 4 |
| Puncture strength | | | N/mmφ | 3.8 | 4.1 | 4.2 | 4.1 | 4.1 | 4.1 | 2.2 | 2.3 | 2.1 | 2.0 |
| Molecular orientation evaluation | | | I₁₁₃₀/ I₁₀₆₃ | 1.6 | 1.8 | 1.9 | 1.8 | 1.8 | 1.8 | 1.6 | 1.8 | 1.7 | 1.7 |
| Heat resistance (appearance) | | | 120°C | A | A | A | A | A | A | A | A | A | A |
| | | | 130°C | A | A | A | A | A | A | B | B | B | B |
| Heat resistance evaluation (Dimensional change in stretching direction) | | | % | -1.0% | -1.5% | -3.0% | -1.5% | -1.5% | -1.5% | -11.0% | -15.0% | -13.0% | -11.0% |
| | | | Result | Shrinkage | Shrinkage | Shrinkage | Shrinkage | Shrinkage | Shrinkage | Shrinkage | Shrinkage | Shrinkage | Shrinkage |
| Heat resistance evaluation (Maximum dimensional change in stretching | | | % | -1.5% | -2.0% | -4.0% | -2.0% | -2.0% | -2.0% | -25.0% | -30.0% | -30.0% | -23.0% |
| | | | Result | Shrinkage | Shrinkage | Shrinkage | Shrinkage | Shrinkage | Shrinkage | Shrinkage | Shrinkage | Shrinkage | Shrinkage |

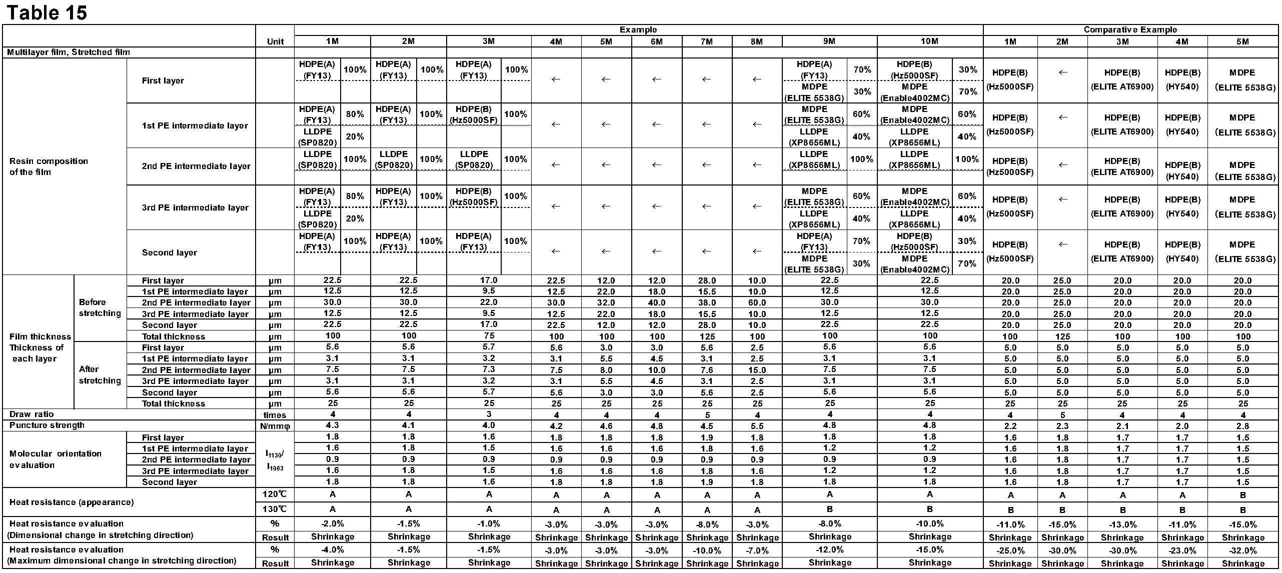

### [Materials for Present Film, Stretched Film, and the like (2)]

In the production of the present film, the stretched film, and the like, the following materials were used. The following high-density polyethylenes are conveniently given symbols (A) or (B) as high-density polyethylenes from the maximum value of dW/d(LogM) and the value of the half-width. However, this may vary depending on the layer configuration, and the following high-density polyethylenes are not necessarily classified in this way depending on the layer configuration.

**Table 16**

| | | | **Density g/cm³** | **Melting point °C** | **MFR g/10 min** | **Mw (x 10⁵)** | **Full width at half maximum** | **Max. dW/d(LogM)** | **MWD evaluation** |
|---|---|---|---|---|---|---|---|---|---|
| **HDPE(A)** | **Niporon-P FY13** | **Tosoh Corporation** | **0.950** | **133** | **1.0** | **2.21** | **0.928** | **0.98** | **Narrow** |
| **HDPE(B)** | **Hz5000SF** | **Prime Polymer Co., Ltd.** | **0.954** | **132** | **0.66** | **3.16** | **1.536** | **0.60** | **Broad** |
| | **ELITE 5960G** | **The Dow Chemical Company** | **0.962** | **134** | **0.85** | **2.03** | **1.540** | **0.62** | **Broad** |
| | **ELITE AT6900** | **The Dow Chemical Company** | **0.969** | **134** | **1.2** | **2.07** | **1.981** | **0.73** | **Broad** |
| | **HY540** | **Japan Polyethylene Corporation** | **0.960** | **135** | **1.0** | **2.74** | **1.278** | **0.70** | **Broad** |
| **C6-LLDPE** | **SP0820** | **Prime Polymer Co., Ltd.** | **0.910** | **98** | **1.7** | **2.10** | **0.822** | **1.06** | **Narrow** |
| **C6-LLDPE** | **SP0510** | **Prime Polymer Co., Ltd.** | **0.904** | **89** | **1.2** | **2.15** | **0.865** | **1.03** | **Narrow** |

The peak appearing in the differential molecular weight distribution curve of polyethylene was examined. With respect to the maximum value (peak top value) of dW/d(LogM) in the differential molecular weight distribution curve, when the peak top value is not explicitly shown on the data representing the differential molecular weight distribution curve, the peak top value may be determined from an approximate expression. In this case, the peak top value can be determined from an approximate expression of a sixth-order polynomial passing through the maximum data of dW/d(LogM) and four points before and after it (nine points in total).

A polyethylene having a peak in which a maximum value (peak top value) of dW/d(LogM) is 0.80 or more and a half-width is less than 1.1 in the differential molecular weight distribution curve was judged to have a relatively "narrow molecular weight distribution" (sharp shape).

A polyethylene having a peak in which a maximum value (peak top value) of dW/d(LogM) is less than 0.80 and a half-width is 1.1 or more in the differential molecular weight distribution curve was judged to have a relatively "broad molecular weight distribution" (broad shape).

The weight-average molecular weight (Mw) of polyethylene was obtained by the above high-temperature GPC measurement.

### [Example 1N]

HDPE (A) (FY13), HDPE (B) (Hz5000SF), LLDPE (SP0820), HDPE (B) (Hz5000SF), and HDPE (A) (FY13) were five-layer coextruded by an inflation molding method at a layer thickness ratio of HDPE (A) layer (17.0 µm) / HDPE (B) layer (9.5 µm) / LLDPE layer (22.0 µm) / HDPE (B) layer (9.5 µm) / HDPE (A) layer (17.0 µm) and a film-forming temperature (die temperature) of 200°C to form a tubular film, thereby obtaining a polyethylene film having a total thickness of 75 µm. The tubular polyethylene film was folded at a nip point and doubled. The numerical value in parentheses indicates the thickness of the layer. The polyethylene film produced above was stretched in the machine direction (MD direction) at a stretching ratio of 3 times at a stretching temperature of 125°C, and heat-set at an annealing temperature of 125°C. Next, an end portion was slit and divided into two to obtain a stretched film having a thickness of 25 µm. The stretched film comprises an HDPE (A) layer having a thickness of 5.7 µm, an HDPE (B) layer having a thickness of 3.2 µm, an LLDPE layer having a thickness of 7.3 µm, an HDPE (B) layer having a thickness of 3.2 µm, and an HDPE (A) layer having a thickness of 5.7 µm.

### [Examples 2N to 6N and Comparative Examples 1N to 6N]

Stretched films were produced in the same manner as in Example 1N, except that at least one selected from the group consisting of the type of resin constituting each layer, the thickness of each layer, and the stretching ratio was changed as described in the following tables. In the present specification, "←" in the tables means that the composition of the layer is the same as the composition in the left column.

### [Heat Resistance Evaluation (Dimensional Change Rate in Stretching Direction (2))]

The stretched film obtained in each Example or Comparative Example was cut into a size of 10 cm × 10 cm to obtain a test piece. On the surface of the test piece, a line of about 10 cm was drawn along the stretching direction of the stretched film (the MD direction in the above Examples or Comparative Examples), and the dimension of the line was measured using a glass scale for precision measurement (manufactured by Oyama Optical Co., Ltd.). Hereinafter, the dimension is also referred to as "dimension before heat treatment". Using a clean oven DE611 (manufactured by Yamato Scientific Co., Ltd.) as a heat treatment apparatus, heat treatment was performed by allowing the test piece to stand in an environment of 120°C for 5 minutes. Using the above glass scale, the dimension of the line on the test piece after the heat treatment was measured. Hereinafter, the dimension is also referred to as "dimension after heat treatment". From the obtained dimensions before and after the heat treatment, the dimensional change rate (2) in the stretching direction was determined. $\begin{matrix}Dimensional change rate \left(2\right) \left(%\right) \\ = \left(\begin{matrix}\left(dimension after heat treatment-dimension before heat treatment\right) / dimension before heat \\ treatment\end{matrix}\right) \times 100\end{matrix}$

Elongation: The numerical value of the dimensional change rate shows a positive value.

Shrinkage: The numerical value of the dimensional change rate shows a negative value.

### [Heat Resistance Evaluation (Appearance), Molecular Orientation Evaluation, and Puncture Strength]

The evaluation methods for the heat resistance evaluation (appearance), the molecular orientation evaluation, and the puncture strength are as described above.

**Table 17**

| | | | **Unit** | **Example** | | | | | | **Comparative Example** | | | | | |
|---|---|---|---|---|---|---|---|---|---|---|---|---|---|---|---|
| | | | | **1N** | **2N** | **3N** | **4N** | **5N** | **6N** | **1N** | **2N** | **3N** | **4N** | **5N** | **6N** |
| **Polyethylene film, Stretched film** | | | | | | | | | | | | | | | |
| **Resin composition of the film** | | **First layer** | | **HDPE(A) (FY13)** | **←** | **←** | **←** | **HDPE(A) (FY13)** | **HDPE(A) (FY13)** | **HDPE(B) (Hz5000SF)** | **←** | **HDPE(B) (ELITE AT6900)** | **HDPE(B) (HY540)** | **HDPE(B) (Hz5000SF)** | **HDPE(B) (HY540)** |
| | | **1st PE intermediate layer** | | **HDPE(B) (Hz5000SF)** | **←** | **←** | **←** | **HDPE(B) (ELITE 5960G)** | **HDPE(B) (Hz5000SF)** | **HDPE(B) (Hz5000SF)** | **←** | **HDPE(B) (ELITE AT6900)** | **HDPE(B) (HY540)** | **HDPE(B) (Hz5000SF)** | **HDPE(B) (HY540)** |
| | | **2nd PE intermediate layer** | | **LLDPE (SP0820)** | **←** | **←** | **←** | **LLDPE (SP0820)** | **LLDPE (SP0510)** | **HDPE(B) (Hz5000SF)** | **←** | **HDPE(B) (ELITE AT6900)** | **HDPE(B) (HY540)** | **LLDPE (SP0820)** | **LLDPE (SP0820)** |
| | | **3rd PE intermediate layer** | | **HDPE(B) (Hz5000SF)** | **←** | **←** | **←** | **HDPE(B) (ELITE 5960G)** | **HDPE(B) (Hz5000SF)** | **HDPE(B) (Hz5000SF)** | **←** | **HDPE(B) (ELITE AT6900)** | **HDPE(B) (HY540)** | **HDPE(B) (Hz5000SF)** | **HDPE(B) (HY540)** |
| | | **Second layer** | | **HDPE(A) (FY13)** | **←** | **←** | **←** | **HDPE(A) (FY13)** | **HDPE(A) (FY13)** | **HDPE(B) (Hz5000SF1** | **←** | **HDPE(B) (ELITE AT6900)** | **HDPE(B) (HY540\** | **HDPE(B) (Hz5000SF)** | **HDPE(B) (HY540)** |
| **Film thickness Thickness of each layer** | **Before stretching** | **First layer** | **µm** | **17.0** | **22.5** | **28.0** | **10.0** | **22.5** | **22.5** | **20.0** | **25.0** | **20.0** | **20.0** | **22.5** | **22.5** |
| | | **1st PE intermediate layer** | **µm** | **9.5** | **12.5** | **15.5** | **10.0** | **12.5** | **12.5** | **20.0** | **25.0** | **20.0** | **20.0** | **12.5** | **12.5** |
| | | **2nd PE intermediate layer** | **µm** | **22.0** | **30.0** | **38.0** | **60.0** | **30.0** | **30.0** | **20.0** | **25.0** | **20.0** | **20.0** | **30.0** | **30.0** |
| | | **3rd PE intermediate layer** | **µm** | **9.5** | **12.5** | **15.5** | **10.0** | **12.5** | **12.5** | **20.0** | **25.0** | **20.0** | **20.0** | **12.5** | **12.5** |
| | | **Second layer** | **µm** | **17.0** | **22.5** | **28.0** | **10.0** | **22.5** | **22.5** | **20.0** | **25.0** | **20.0** | **20.0** | **22.5** | **22.5** |
| | | **Total thickness** | **µm** | **75** | **100** | **125** | **100** | **100** | **100** | **100** | **125** | **100** | **100** | **100** | **100** |
| | **After stretching** | **First layer** | **µm** | **5.7** | **5.6** | **5.6** | **2.5** | **5.6** | **5.6** | **5.0** | **5.0** | **5.0** | **5.0** | **5.6** | **5.6** |
| | | **1st PE intermediate layer** | **µm** | **3.2** | **3.1** | **3.1** | **2.5** | **3.1** | **3.1** | **5.0** | **5.0** | **5.0** | **5.0** | **3.1** | **3.1** |
| | | **2nd PE intermediate layer** | **µm** | **7.3** | **7.5** | **7.6** | **15.0** | **7.5** | **7.5** | **5.0** | **5.0** | **5.0** | **5.0** | **7.5** | **7.5** |
| | | **3rd PE intermediate layer** | **µm** | **3.2** | **3.1** | **3.1** | **2.5** | **3.1** | **3.1** | **5.0** | **5.0** | **5.0** | **5.0** | **3.1** | **3.1** |
| | | **Second layer** | **µm** | **5.7** | **5.6** | **5.6** | **2.5** | **5.6** | **5.6** | **5.0** | **5.0** | **5.0** | **5.0** | **5.6** | **5.6** |
| | | **Total thickness** | **µm** | **25** | **25** | **25** | **25** | **25** | **25** | **25** | **25** | **25** | **25** | **25** | **25** |
| **Draw ratio** | | | **times** | **3** | **4** | **5** | **4** | **4** | **4** | **4** | **5** | **4** | **4** | **4** | **4** |
| **Puncture strength** | | | **N/mmcp** | **4.0** | **4.2** | **4.5** | **5.1** | **4.3** | **4.3** | **2.2** | **2.3** | **2.1** | **2.0** | **4.1** | **4.0** |
| **Molecular orientation evaluation** | | **First layer** | **I₁₁₃₀/ I₁₀₆₃** | **1.6** | **1.8** | **1.9** | **1.8** | **1.8** | **1.8** | **1.6** | **1.8** | **1.7** | **1.7** | **1.6** | **1.7** |
| | | **1st PE intermediate layer** | | **1.5** | **1.6** | **1.8** | **1.6** | **1.6** | **1.6** | **1.6** | **1.8** | **1.7** | **1.7** | **1.6** | **1.7** |
| | | **2nd PE intermediate layer** | | **0.9** | **0.9** | **0.9** | **0.9** | **0.9** | **0.9** | **1.6** | **1.8** | **1.7** | **1.7** | **0.9** | **0.9** |
| | | **3rd PE intermediate layer** | | **1.5** | **1.6** | **1.8** | **1.6** | **1.6** | **1.6** | **1.6** | **1.8** | **1.7** | **1.7** | **1.6** | **1.7** |
| | | **Second layer** | | **1.6** | **1.8** | **1.9** | **1.8** | **1.8** | **1.8** | **1.6** | **1.8** | **1.7** | **1.7** | **1.6** | **1.7** |
| **Heat resistance (appearance)** | | | **120°C** | **A** | **A** | **A** | **A** | **A** | **A** | **A** | **A** | **A** | **A** | **A** | **A** |
| | | | **130°C** | **A** | **A** | **A** | **A** | **A** | **A** | **B** | **B** | **B** | **B** | **B** | **B** |
| **Heat resistance evaluation (Dimensional change in stretching direction (2))** | | | **%** | **-1.0%** | **-3.0%** | **-6.0%** | **-3.0%** | **-3.0%** | **-3.0%** | **-8.0%** | **-10.0%** | **-9.0%** | **-8.0%** | **-8.0%** | **-8.0%** |
| | | | **Result** | **Shrinkage** | **Shrinkage** | **Shrinkage** | **Shrinkage** | **Shrinkage** | **Shrinkage** | **Shrinkage** | **Shrinkage** | **Shrinkage** | **Shrinkage** | **Shrinkage** | **Shrinkage** |

### Reference Signs List

1: Stretched film
2: Laminate
10: First layer
20: Second layer
30: PE intermediate layer
31: First PE intermediate layer
32: Second PE intermediate layer
33: Third PE intermediate layer
60: Adhesive layer
61: First adhesive layer
62: Second adhesive layer
70: Stretched polyolefin substrate
80: Heat-seal layer
81: First heat-seal layer
82: Second heat-seal layer

## Claims

1. A film comprising at least a layer comprising, as a main component, a high-density polyethylene (A) satisfying at least one requirement selected from the group consisting of the following (a1) to (a2):
(a1) the high-density polyethylene (A) has a peak whose Full-Width at Quarter-Maximum (FWQM) value is less than 1.5 in a differential molecular weight distribution curve (horizontal axis: common logarithmic value (LogM) of molecular weight (M), vertical axis: value dW/d(LogM) obtained by differentiating an integrated concentration fraction (W) with respect to the common logarithmic value of molecular weight (M)) obtained by high-temperature gel permeation chromatography (GPC) measurement;
(a2) a difference (LogM₉₀-LogM₁₀) between a 90th percentile value (LogM₉₀) and a 10th percentile value (LogM₁₀) of a molecular weight distribution in the differential molecular weight distribution curve of the high-density polyethylene (A) is less than 1.25.

2. The film according to claim 1, which is a film comprising the high-density polyethylene (A) as a main component.

3. The film according to claim 1, which is a single-layer film comprising the high-density polyethylene (A) as a main component, or is a multilayer film comprising two or more layers of the layer comprising the high-density polyethylene (A) as a main component.

4. The film according to claim 1, wherein the layer further comprises a high-density polyethylene (B),
the high-density polyethylene (A) has a narrower molecular weight distribution than the high-density polyethylene (B) in a differential molecular weight distribution curve obtained by high-temperature gel permeation chromatography (GPC) measurement,
the content of the high-density polyethylene (A) in the layer is from 50% by mass to 98% by mass, and the content of the high-density polyethylene (B) is from 2% by mass to 50% by mass, and
the film comprises one or two or more layers of the layer.

5. The film according to claim 1, which is a multilayer film comprising at least:
a first layer as the layer comprising the high-density polyethylene (A) as a main component; and
a second layer comprising polyethylene as a main component.

6. The film according to claim 5, wherein
the second layer comprises the high-density polyethylene (A) as a main component, and
the high-density polyethylene (A) contained in the first layer may be the same polyethylene as or a different polyethylene from the high-density polyethylene (A) contained in the second layer.

7. The film according to claim 6, wherein the multilayer film further comprises, between the first layer and the second layer, at least one layer selected from the group consisting of:
an intermediate layer comprising the high-density polyethylene (A) as a main component; an intermediate layer comprising a high-density polyethylene (B) as a main component;
an intermediate layer comprising at least one low-density polyethylene (C) selected from the group consisting of linear low-density polyethylene and high-pressure low-density polyethylene as a main component; and
an intermediate layer comprising medium-density polyethylene as a main component, and
the high-density polyethylene (B) has a broader molecular weight distribution than the high-density polyethylene (A) in a differential molecular weight distribution curve obtained by high-temperature GPC measurement.

8. The film according to claim 6, wherein the multilayer film further comprises, between the first layer and the second layer, an intermediate layer comprising a high-density polyethylene (B) as a main component.

9. The film according to claim 6, wherein
the multilayer film comprises at least, between the first layer and the second layer:
a first intermediate layer comprising a high-density polyethylene (B) as a main component;
a second intermediate layer comprising polyethylene as a main component; and
a third intermediate layer comprising a high-density polyethylene (B) as a main component,
in this order in a laminating direction, and
the high-density polyethylene (B) contained in the first intermediate layer may be the same polyethylene as or a different polyethylene from the high-density polyethylene (B) contained in the third intermediate layer.

10. The film according to claim 9, wherein the second intermediate layer comprises at least one low-density polyethylene (C) selected from the group consisting of linear low-density polyethylene and high-pressure low-density polyethylene as a main component.

11. The film according to claim 6, wherein
the multilayer film comprises at least, between the first layer and the second layer:
a first intermediate layer comprising a low-density polyethylene (C) as a main component;
a second intermediate layer comprising a high-density polyethylene (B) as a main component; and
a third intermediate layer comprising a low-density polyethylene (C) as a main component,
in this order in a laminating direction, and
the low-density polyethylene (C) contained in the first intermediate layer may be the same polyethylene as or a different polyethylene from the low-density polyethylene (C) contained in the third intermediate layer.

12. The film according to claim 6, which is a multilayer film comprising at least, in this order in a laminating direction:
a first layer comprising the high-density polyethylene (A) as a main component;
a first intermediate layer comprising the high-density polyethylene (A) as a main component and comprising a low-density polyethylene (C);
a second intermediate layer comprising the low-density polyethylene (C) as a main component;
a third intermediate layer comprising the high-density polyethylene (A) as a main component and comprising a low-density polyethylene (C); and
a second layer comprising the high-density polyethylene (A) as a main component,
wherein the high-density polyethylenes (A) contained in the first layer, the first intermediate layer, the third intermediate layer, and the second layer may be the same as or different from each other,
the low-density polyethylene (C) is at least one polyethylene selected from the group consisting of linear low-density polyethylene and high-pressure low-density polyethylene, and
the low-density polyethylenes (C) contained in the first intermediate layer, the second intermediate layer, and the third intermediate layer may be the same as or different from each other.

13. The film according to claim 1, which is a multilayer film comprising at least, in this order in a laminating direction:
a first layer comprising polyethylene as a main component;
an intermediate layer as the layer comprising the high-density polyethylene (A) as a main component; and
a second layer comprising polyethylene as a main component,
wherein the polyethylene contained in the first layer may be the same polyethylene as or a different polyethylene from the polyethylene contained in the second layer.

14. The film according to any one of claims 4, 7, 8, 9, 10, and 11, wherein the high-density polyethylene (B) satisfies at least one requirement selected from the group consisting of the following (b1) to (b2):
(b1) the high-density polyethylene (B) has a peak whose Full-Width at Quarter-Maximum (FWQM) value is 1.5 or more in a differential molecular weight distribution curve obtained by high-temperature GPC measurement;
(b2) a difference (LogM₉₀-LogM₁₀) between a 90th percentile value (LogM₉₀) and a 10th percentile value (LogM₁₀) of a molecular weight distribution in the differential molecular weight distribution curve of the high-density polyethylene (B) is 1.25 or more.

15. A multilayer film comprising at least, in this order in a laminating direction:
a first layer comprising a high-density polyethylene (A) as a main component;
a first intermediate layer comprising a high-density polyethylene (B) as a main component;
a second intermediate layer comprising at least one low-density polyethylene (C) selected from the group consisting of linear low-density polyethylene and high-pressure low-density polyethylene as a main component;
a third intermediate layer comprising a high-density polyethylene (B) as a main component; and
a second layer comprising a high-density polyethylene (A) as a main component,
wherein the high-density polyethylene (A) has a narrower molecular weight distribution than the high-density polyethylene (B) in a differential molecular weight distribution curve (horizontal axis: common logarithmic value (LogM) of molecular weight (M), vertical axis: value dW/d(LogM) obtained by differentiating an integrated concentration fraction (W) with respect to the common logarithmic value of molecular weight (M)) obtained by high-temperature gel permeation chromatography (GPC) measurement,
the high-density polyethylene (A) contained in the first layer may be the same polyethylene as or a different polyethylene from the high-density polyethylene (A) contained in the second layer, and
the high-density polyethylene (B) contained in the first intermediate layer may be the same polyethylene as or a different polyethylene from the high-density polyethylene (B) contained in the third intermediate layer.

16. The multilayer film according to claim 15, wherein
the high-density polyethylene (A) has a peak in which a maximum value of dW/d(LogM) is 0.80 or more and a half-width is less than 1.1 in the differential molecular weight distribution curve, and
the high-density polyethylene (B) has a peak in which a maximum value of dW/d(LogM) is less than 0.80 and a half-width is 1.1 or more in the differential molecular weight distribution curve.

17. The multilayer film according to claim 15, wherein
the first intermediate layer further comprises a low-density polyethylene (C),
the third intermediate layer further comprises a low-density polyethylene (C), and
the low-density polyethylenes (C) contained in the first intermediate layer, the second intermediate layer, and the third intermediate layer may be the same as or different from each other.

18. A stretched film comprising at least a first layer comprising polyethylene as a main component and a second layer comprising polyethylene as a main component in this order in a laminating direction,
wherein the stretched film further comprises, between the first layer and the second layer, an intermediate layer comprising polyethylene as a main component and having a scattering intensity ratio I₁/I₂ of less than 1.1, the scattering intensity ratio I₁/I₂ is obtained by Raman spectroscopic measurement on a cross section of the intermediate layer,
the cross section is a surface parallel to a plane including the laminating direction perpendicular to a main surface of the stretched film and a stretching direction of the stretched film,
the I₁ is a maximum scattering intensity of a peak observed in a region from 1100 cm⁻¹ to 1150 cm⁻¹ in the Raman spectroscopic measurement, and the I₂ is a maximum scattering intensity of a peak observed in a region of 1050 cm⁻¹ or more and less than 1100 cm⁻¹ in the Raman spectroscopic measurement.

19. A stretched film obtained by stretching the film according to any one of claims 1 to 13 or the multilayer film according to any one of claims 15 to 17.

20. A stretched film, which is a stretched film obtained by stretching the film according to any one of claims 2 to 12, a stretched film obtained by stretching the multilayer film according to claim 17, or the stretched film according to claim 18,
wherein the stretched film satisfies at least one requirement selected from the group consisting of the following (1) to (2):
(1) the stretched film has a dimensional change rate in a stretching direction of -10% or more and 0% or less, which is measured by hanging a test piece such that a film surface is parallel to a vertical direction and a stretching direction of the film is in a direction perpendicular to the vertical direction, and leaving it in an environment of 120°C for 5 minutes;
(2) the stretched film has a maximum dimensional change rate in a stretching direction in a range from 20°C to 120°C by a tensile mode of thermomechanical analysis (TMA) of -15% or more and 15% or less.

21. The stretched film according to claim 19, wherein the stretched film is a uniaxially stretched film.

22. A laminate comprising at least:
at least one film selected from the group consisting of the film according to any one of claims 1 to 13, a stretched film obtained by stretching the film, the multilayer film according to any one of claims 15 to 17, a stretched film obtained by stretching the multilayer film, and the stretched film according to claim 18; and
a heat-seal layer.

23. A packaging container comprising the laminate according to claim 22.

24. The packaging container according to claim 23, wherein the packaging container is a packaging bag.
